(19) Europäisches Patentamt
European Patent Office
Office européen des brevets

(11) **EP 4 539 481 A1**

(12) **EUROPEAN PATENT APPLICATION**
published in accordance with Art. 153(4) EPC

(43) Date of publication:
**16.04.2025 Bulletin 2025/16**

(21) Application number: **23826359.4**

(22) Date of filing: **19.06.2023**

(51) International Patent Classification (IPC):
*H04N 21/845* (2011.01)    *H04N 21/8352* (2011.01)

(52) Cooperative Patent Classification (CPC):
**H04N 21/8352; H04N 21/845**

(86) International application number:
**PCT/CN2023/101124**

(87) International publication number:
**WO 2023/246711 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.06.2022   CN 202210733723**

(71) Applicant: **Huawei Technologies Co., Ltd.
Shenzhen, Guangdong 518129 (CN)**

(72) Inventor: **LUO, Shengli
Shenzhen, Guangdong 518129 (CN)**

(74) Representative: **Gill Jennings & Every LLP
The Broadgate Tower
20 Primrose Street
London EC2A 2ES (GB)**

(54) **VIDEO PROCESSING METHOD AND RELATED DEVICE**

(57)    This application discloses a video processing method and a related device. **In** a scenario of an aggregated video, because different SPs may insert one or more clips into or crop one or more clips from a basic video, offset information of the one or more clips (for example, location information and duration information of insertion/cropping) is calculated during operation of the video; and after detecting a switching operation of a user (for example, an operation of switching a clip video to an entire video, or an operation of switching a source SP instance video to a destination SP instance video), an electronic device may calculate a continuous playback location based on parameters such as the offset information of the one or more clips and played duration of the video during the switching operation of the user, so as to resolve a problem that video images before and after switching are discontinuous because the continuous playback location cannot be accurately calculated. This improves user experience.

[FIG. 2A]

[FIG. 2B]

CONT. FROM FIG. 2A  CONT. FROM FIG. 2A  CONT. FROM FIG. 2A  CONT. FROM FIG. 2A  CONT. FROM FIG. 2A  CONT. FROM FIG. 2A  CONT. FROM FIG. 2A  CONT. FROM FIG. 2A

S210: Message 5, where the message includes the ID of the entire video 1, the start location of the segment, and the offset information list of each SP instance video associated with the entire video 1

S209: Message 4, where the message includes an ID of the entire video 1, the start location of the segment, and the offset information list of each SP instance video associated with the entire video 1

S208: Determine, based on the ID of the clip video 1, that the entire video associated with the clip video 1 is the entire video 1, and determine a start location of a segment and an offset information list of each SP instance video associated with the entire video 1

S211: Message 6, where the message includes the ID of the entire video 1 and user information 1

S212: Determine, based on the ID of the entire video 1, the user information 1, and an authentication rule, a playback address corresponding to an SP instance video that is associated with the entire video 1 and that can be played by the user

S213: Message 7, where the message includes the playback address corresponding to the SP instance video that is associated with the entire video 1 and that can be played by the user

TO FIG. 2C  TO FIG. 2C  TO FIG. 2C  TO FIG. 2C  TO FIG. 2C  TO FIG. 2C  TO FIG. 2C  TO FIG. 2C

2

(Cont. next page)

[FIG. 2C]

| CONT. FROM FIG. 2B | CONT. FROM FIG. 2B | CONT. FROM FIG. 2B | CONT. FROM FIG. 2B | CONT. FROM FIG. 2B | CONT. FROM FIG. 2B | CONT. FROM FIG. 2B | CONT. FROM FIG. 2B |

S214: Message 8, where the message includes the elapsed play duration of the clip video 1 at the switching, the start location of the segment, an offset information list of the SP instance video that is associated with the entire video 1 and that can be played by the user, and the playback address

S215: Determine playback start location information of the SP instance video based on the elapsed play duration of the clip video 1 at the switching, the start location of the segment, and the offset information list of the SP instance video that is associated with the entire video 1 and that can be played by the user

S216: Message 9, where the message includes the playback start location information of the SP instance video and the playback address

| TO FIG. 2D | TO FIG. 2D | TO FIG. 2D | TO FIG. 2D | TO FIG. 2D | TO FIG. 2D | TO FIG. 2D | TO FIG. 2D |

[FIG. 2D]

| CONT. FROM FIG. 2C | CONT. FROM FIG. 2C | CONT. FROM FIG. 2C | CONT. FROM FIG. 2C | CONT. FROM FIG. 2C | CONT. FROM FIG. 2C | CONT. FROM FIG. 2C | CONT. FROM FIG. 2C |

S217: Message 10, where the message includes the playback start location information of the SP instance video and the playback address

S218: Search for video stream data after a playback start location of the SP instance video based on the playback start location information of the SP instance video and the playback address

S219: Message 11, where the message includes the video stream data after the playback start location of the SP instance video

S220: Play, based on the video stream data after the playback start location of the SP instance video, the SP instance video after the playback start location

## Description

This application claims priority to Chinese Patent Application No. 202210733723.7, filed with the China National Intellectual Property Administration on June 24, 2022 and entitled "VIDEO PROCESSING METHOD AND RELATED DEVICE", which is incorporated herein by reference in its entirety.

## TECHNICAL FIELD

This application relates to the field of terminal technologies, and in particular, to a video processing method and a related device.

## BACKGROUND

With rapid development of terminal technologies and network technologies, online videos gradually become an important way to obtain information in people's life.

A service provider (Service Provider, SP) provides video content during operation of the online videos. The service provider may be a playback source or a playback platform of different video content. Because different service providers may insert some clips into videos/crop some clips from the videos, playback progresses of a same image in a same video may be different in different SP instances. Therefore, in some scenarios (for example, a user switches a clip video to an entire video, or a user switches between different SP instance videos of an aggregated video), a same image may not be accurately located for continuous playback, resulting in poor user experience.

## SUMMARY

Embodiments of this application provide a video processing method and a related device. After detecting a switching operation (for example, an operation of switching a clip video to an entire video, or an operation of switching a source SP instance video to a destination SP instance video) of a user, an electronic device can accurately calculate a continuous playback location, to resolve a problem that video images before and after switching are discontinuous. This improves user experience.

According to a first aspect, an embodiment of this application provides a method, applied to an electronic device. The method includes: The electronic device plays a first video. The electronic device displays a first user interface, where the first user interface includes a first image, and the first image is an image in the first video. The electronic device detects a first operation of a user when the electronic device displays the first user interface. The electronic device plays a second video in response to the first operation. The electronic device displays a second user interface, where the second user interface includes the first image, and the first image is an image in the second video; and both the first video and the second video are generated based on a third video, a playback progress corresponding to the first image in the second video is a first time point, the second video is obtained by inserting one or more first clips into and/or cropped one or more first clips from the third video before the first time point, and the third video does not include the one or more first clips.

According to the method provided in the first aspect, after the electronic device detects an operation of switching the first video to the second video by the user (for example, an operation of switching a clip video to an entire video, or an operation of switching a source SP instance video to a destination SP instance video), even if the second video (for example, an entire video or a destination SP instance video) is obtained by inserting one or more clips and/or cropping one or more clips, the electronic device can still accurately calculate a continuous playback location, to resolve a problem that video images before and after switching are discontinuous. This improves user experience.

In a possible implementation, the first video is a video clip of the second video.

In view of this, when the first video is a clip video, even if the second video (for example, an entire video) is obtained by inserting one or more clips and/or cropping one or more clips, a continuous playback location can still be accurately calculated, to resolve a problem that video images before and after switching are discontinuous. This improves user experience.

In a possible implementation, the first video is a video of a first video source, the second video is a video of a second video source, a playback progress corresponding to the first image in the first video is a second time point, and the second time point is different from the first time point.

In view of this, when the first video is a source SP instance video, even if the second video (for example, a destination SP instance video) is obtained by inserting one or more clips and/or cropping one or more clips, a continuous playback location can still be accurately calculated, to resolve a problem that video images before and after switching are discontinuous. This improves user experience.

In a possible implementation, before the electronic device displays a second user interface, the method further includes: The electronic device sends first user information to a server, where the first user information is used by the server to determine, based on the first user information, whether the user has permission to play the second video; and the electronic device plays the second video when the server determines that the user has permission to play the second video.

In view of this, it may be determined whether the user has permission to play the second video. If the user has permission to play the second video, the server may send a playback address of the second video to the electronic device, so that the electronic device may obtain a video resource of the second video based on the playback address of the second video, to play the second video.

In a possible implementation, the first time point is determined based on the third video, played duration of the first video, and an offset information list of the second video, the offset information list of the second video includes offset information of the one or more first clips, and the offset information includes a location at which the one or more first clips are inserted into/cropped from the third video and offset duration.

In view of this, when the first video is a clip video, the electronic device/server can determine the first time point based on the third video, the played duration of the first video, and the offset information list of the second video (that is, determine a continuous playback point of the second video), to ensure that video images before and after switching are continuous.

In a possible implementation, before the electronic device displays a second user interface, the method further includes: The electronic device sends a first message to a server, where the first message includes an identifier of the first video, and the identifier of the first video is used by the server to obtain the offset information list of the second video and information about a segmentation point of the third video associated with the first video. The electronic device receives a second message sent by the server, where the second message includes the information about the segmentation point and the offset information list of the second video. That the first time point is determined based on the third video, played duration of the first video, and an offset information list of the second video specifically includes: The first time point is determined by the electronic device based on the information about the segmentation point, the played duration of the first video, and the offset information list of the second video.

In view of this, when the first video is a clip video, the electronic device can determine the first time point based on the information about the segmentation point, the played duration of the first video, and the offset information list of the second video, to ensure that video images before and after switching are continuous.

In a possible implementation, before the electronic device displays a second user interface, the method further includes: The electronic device sends a third message to a server, where the third message includes the played duration of the first video. That the first time point is determined based on the third video, played duration of the first video, and an offset information list of the second video specifically includes: The first time point is determined by the server based on information about a segmentation point of the third video, the played duration of the first video, and the offset information list of the second video; and the electronic device receives a fourth message sent by the server, where the fourth message includes the first time point and a playback address of the second video.

In view of this, when the first video is a clip video, the server can determine the first time point based on the information about the segmentation point, the played duration of the first video, and the offset information list of the second video, to ensure that video images before and after switching are continuous.

In a possible implementation, before the electronic device displays a second user interface, the method further includes: The electronic device sends a fifth message to the server, where the fifth message includes the first time point and the playback address of the second video, and the playback address is obtained from the server; and the electronic device receives video stream data sent by the server, where the video stream data is video stream data that is of the second video and that is after the first time point.

In view of this, the electronic device can obtain, from the server, the video stream data that is of the second video and that is after the first time point, so that the second video after the first time point can continue to be played.

In a possible implementation, after the electronic device plays a second video, the method further includes: The electronic device displays a third user interface, where the third user interface includes a second image, a playback progress corresponding to the second image in the second video is a third time point, a time interval between the third time point and the first time point is a first interval, and the second video is obtained by inserting one or more clips into and/or cropping one or more clips from the third video between the third time point and the first time point; a playback progress corresponding to the second image in the third video is a fourth time point, a playback progress corresponding to the first image in the third video is a fifth time point, and a time interval between the fourth time point and the fifth time point is a second interval; and the first interval is different from the second interval.

In a possible implementation, the third video includes the first image, and a playback progress corresponding to the first image in the third video is a fifth time point; the fifth time point is determined based on the second time point and an offset information list of the first video, the offset information list of the first video includes offset information of one or more second clips, and the offset information includes a location at which the one or more second clips are inserted into/cropped from the third video and offset duration; and the first time point is determined based on the fifth time point and an offset information list of the second video, the offset information list of the second video includes offset information of the one or more first clips, and the offset information includes a location at which the one or more first clips are inserted into/cropped from the third video and offset duration.

In view of this, when the first video is a source SP instance video, the electronic device/server can determine the first time point based on the second time point, the offset information list of the first video, and the offset information list of the second video, to ensure that video images before and after switching are continuous.

In a possible implementation, before the electronic device displays a second user interface, the method further includes: The electronic device sends a sixth message to a server, where the sixth message includes identification information of the first video and identification information of the second video, the identification information of the first video is used by the server to obtain the offset information list of the first video, and the identification information of the second video is used by the server to obtain the offset information list of the second video; and the electronic device receives a seventh message sent by the server, where the seventh message includes the offset information list of the first video and the offset information list of the second video; and the fifth time point is determined by the electronic device based on the second time point and the offset information list of the first video, and the first time point is determined by the electronic device based on the fifth time point and the offset information list of the second video.

In view of this, when the first video is a source SP instance video, the electronic device can determine the first time point based on the second time point, the offset information list of the first video, and the offset information list of the second video, to ensure that video images before and after switching are continuous.

In a possible implementation, before the electronic device displays a second user interface, the method further includes: The electronic device sends an eighth message to a server, where the eighth message includes played duration of the first video, and the played duration of the first video is used by the server to determine the second time point; and the server sends a ninth message to the electronic device, where the ninth message includes the first time point and a playback address of the second video; and the fifth time point is determined by the server based on the second time point and the offset information list of the first video, and the first time point is determined by the server based on the fifth time point and the offset information list of the second video.

In view of this, when the first video is a source SP instance video, the server can determine the first time point based on the second time point, the offset information list of the first video, and the offset information list of the second video, to ensure that video images before and after switching are continuous.

In a possible implementation, a method for calculating the first time point is as follows:

$$CP' = CP + \sum_{i=1}^{n} L_i$$

CP' is the playback progress corresponding to the first image in the second video, CP is the playback progress corresponding to the first image in the third video, n is a total quantity of one or more first clips, and $L_i$ is offset duration of an $i^{th}$ first clip in the one or more first clips.

According to a second aspect, an embodiment of this application provides an electronic device. The electronic device includes one or more processors and one or more memories. The one or more memories are coupled to the one or more processors. The one or more memories are configured to store computer program code. The computer program code includes computer instructions. When the one or more processors execute the computer instructions, the electronic device is enabled to perform the method according to any possible implementation of the first aspect.

According to a third aspect, an embodiment of this application provides a computer storage medium. The computer storage medium stores a computer program. The computer program includes program instructions. When the program instructions are run on an electronic device, the electronic device is enabled to perform the method according to any possible implementation of the first aspect.

According to a fourth aspect, an embodiment of this application provides a computer program product. When the computer program product runs on a computer, the computer is enabled to perform the method according to any possible implementation of the first aspect.

**BRIEF DESCRIPTION OF DRAWINGS**

FIG. 1 is a diagram of a communication system according to an embodiment of this application;

FIG. 2A to FIG. 2D are a schematic flowchart of a video processing method in a scenario of "switching a clip video to an entire video" according to an embodiment of this application;

FIG. 3A to FIG. 3E are diagrams of a group of user interfaces about triggering "switching a clip video to an entire video" by a user according to an embodiment of this application;

FIG. 4 is a principle diagram of performing continuous playback calculation in a scenario of "switching a clip video to an entire video" according to an embodiment of this application;

FIG. 5A to FIG. 5E are diagrams of a group of user interfaces of continuous playback performed after a user triggers "switching a clip video to an entire video" according to an embodiment of this application;

FIG. 6A to FIG. 6D are a schematic flowchart of another video processing method in a scenario of "switching a clip video to an entire video" according to an embodiment of this application;

FIG. 7A to FIG. 7D are a schematic flowchart of a video processing method in a scenario of "switching an SP instance video (a source SP instance video) to another SP instance video (a destination SP instance video) in an aggregated video" according to an embodiment of this application;

FIG. 8A and FIG. 8B are diagrams of user interfaces about triggering "switching an SP instance video (a source SP instance video) to another SP instance video (a destination SP instance video) in an aggregated video" by a user according to an embodiment of this application;

FIG. 9 is a principle diagram of performing continuous playback calculation in a scenario of "switching an SP instance video (a source SP instance video) to another SP instance video (a destination SP instance video) in an aggregated video" according to an embodiment of this application;

FIG. 10A to FIG. 10D are diagrams of a group of user interfaces of continuous playback performed after a user triggers "switching an SP instance video (a source SP instance video) to another SP instance video (a destination SP instance video) in an aggregated video" according to an embodiment of this application;

FIG. 11A to FIG. 11D are a schematic flowchart of another video processing method in a scenario of "switching an SP instance video (a source SP instance video) to another SP instance video (a destination SP instance video) in an aggregated video" according to an embodiment of this application;

FIG. 12 is a diagram of an internal module of an electronic device 100, an internal module of a server 200, and a possible manner of collaboration between internal modules that are included in a process of performing a video processing method according to an embodiment of this application;

FIG. 13 is a diagram of an internal module of an electronic device 100, an internal module of a server 200, and a possible manner of collaboration between internal modules that are included in a process of performing another video processing method according to an embodiment of this application;

FIG. 14 is a diagram of a structure of an electronic device 100 according to an embodiment of this application; and

FIG. 15 is a diagram of a structure of a server 200 according to an embodiment of this application.

## DESCRIPTION OF EMBODIMENTS

The following clearly and completely describes the technical solutions in embodiments of this application with reference to the accompanying drawings in embodiments of this application. In descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in descriptions of embodiments of this application, "a plurality of" means two or more than two.

It should be understood that the terms "first", "second", and the like in the specification, claims, and accompanying drawings of this application are intended to distinguish between different objects but do not describe a particular order. In addition, the terms "including" and "having" and any other variants thereof are intended to cover a non-exclusive inclusion. For example, a process, a method, a system, a product, or a device that includes a series of steps or units is not limited to the enumerated steps or units, but optionally further includes an unenumerated step or unit, or optionally further includes another inherent step or unit of the process, the method, the product, or the device.

"Embodiment" mentioned in this application indicates that a particular feature, structure, or characteristic described with reference to embodiments may be included in at least one embodiment of this application. The phrase shown in various locations in the specification may not necessarily be a same embodiment, and is not an independent or optional embodiment exclusive from another embodiment. It is explicitly and implicitly understood by a person skilled in the art that embodiments described in this application may be combined with another embodiment.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element like a text, an icon, a button, a menu, a tab, a text box, a dialog box, a status bar, a navigation bar, or a Widget that is displayed on a display of the electronic device.

With rapid development of terminal technologies and network technologies, online videos gradually become an important way to obtain information in people's life.

Scenario 1: switching a clip video to an entire video

During operation of the entire video, a short video clip (which may also be referred to as a clip video/video clip) is usually extracted from highlights of the entire video, to improve an exposure rate and a membership conversion rate of the video. The clip video may be independently presented to a user for playback. Further, the clip video may be pushed to the user, so that the user may view the clip video free of charge in pockets of time. In this way, the user is attracted to view the entire video that requires payment.

In order to improve conversion experience for the user who views the clip video and then views the entire video, an association relationship between the clip video and the entire video is usually established on a server (for example, a video management server); when the user plays the clip video, an electronic device obtains a related parameter (for example, a playback address) of a playback page of the entire video based on the established association relationship, and an option of switching to the entire video is set on an interface for viewing the clip video by the user; and after the user taps the option, the electronic device may jump to the corresponding playback page of the entire video.

Further, when the user switches to the entire video during viewing of the clip video, to display, on the playback page of the entire video, an image (or referred to as footage) of the clip video played by the user when the user performs a switching operation, and continue to play subsequent images of the video from the image, a common practice is as follows: A timeline location, relative to the entire video, of a playback start location (a playback start time point, or referred to as a playback start point) of the clip video is add when the association relationship between the clip video and the entire video is established; then, played duration of the clip video that has been played by the user is obtained when the user performs the switching operation; and further, a playback start location (or referred to as a playback start location, a continuous playback location, a playback start time point, or a continuous playback time point) of the entire video is calculated based on the timeline location, relative to the entire video, of the playback start location of the clip video and the played duration of the clip video that has been played, so as to complete continuous playback of images.

Scenario 2: switching an SP instance video (a source SP instance video) to another SP instance video (a destination SP instance video) in an aggregated video

During operation of the aggregated video (an entire video including a plurality of SP playback sources), in order to provide better experience for a user, a function of switching between different SP instance videos may be provided on a playback interface of the aggregated video, so that the user can actively switch to another SP instance video in a possible scenario of differentiated playback quality between different SPs (for example, in a scenario of frame freezing), to ensure that a video playback process can proceed continuously.

To ensure user experience of switching between different SP instance videos, a common practice is as follows: When the user switches a source SP instance video to a destination SP instance video, an electronic device uses, as a playback start location (or referred to as a playback start location, a continuous playback location, a playback start time point, or a continuous playback time point) of the destination SP instance video, a playback location of the source SP instance video corresponding to a case in which the user performs a switching operation, to perform continuous playback in the destination SP instance video. In this way, during switching for the user, the electronic device can locate a same image in two different SP instance videos, and perform continuous playback, so as to ensure continuity of video viewing for the user.

However, during actual operation, different SPs may insert some clips into a basic video/crop some clips from the basic video to obtain instance videos corresponding to the different SPs. As a result, playback progresses of a same image in a same video may be different in different SP instance videos. In this case, if calculation methods in the scenario 1 and scenario 2 are still used to determine a continuous playback location, an image played when the user performs the switching operation may not be accurately located in an entire video or a target SP instance video associated with a clip video, and further a playback location of the image cannot be used as a playback start location of the entire video or the target SP instance video to perform continuous playback. Therefore, the video before and after switching may not be continuously played, resulting in poor user experience.

In conclusion, it can be learned that, in the scenario 1 (switching the clip video to the entire video) and the scenario 2 (switching the SP instance video to the another SP instance video in the aggregated video), the following three problems need to be resolved.

Problem 1 (a problem caused by switching a clip video to an entire video)

During playback of the clip video, it is assumed that the entire video is an aggregated video. In a case in which the user switches the clip video to the entire video for continuous playback, if different SPs insert different clips into a basic video/crop different clips from the basic video to obtain entire instance videos corresponding to the different SPs, the electronic device cannot perform continuous playback by accurately locating, in the entire instance videos of the different SPs through a same clip video, an image played when the user performs a switching operation (that is, cannot accurately locate continuous playback locations of the entire instance videos of the different SPs through the same clip video). This results in poor user experience.

Specifically, in an operation scenario of the aggregated video, because the aggregated video comes from a plurality of SPs, in order to improve user experience, same videos from the plurality of SPs need to be integrated into a video-oriented video object. When the user plays the aggregated video, the electronic device may provide a specific video file that can be played by the user for the user based on information such as a user subscription membership. However, during actual operation, because different SPs may insert some clips (such as release information and opening information) into a basic video (an original entire video that does not include clips subsequently inserted/cropped by different SPs) or may crop some clips due to a compliance reason, playback progresses of a same image in a same video may be different in different SP instance videos. Consequently, the electronic device cannot perform continuous playback by accurately locating, in entire instance videos of the different SPs through a same clip video, an image played when the user performs a switching operation.

For example, it is assumed that an aggregated video includes two SP playback sources:

an SP-A playback source and an SP-B playback source. Duration of a basic video (an original entire video) is 40 minutes, and a clip video is edited at 00:20:00 and lasts for 3 minutes. It is assumed that in an entire video in the SP-B playback source, a 10-second advertisement clip is inserted into the basic video at 00:20:10, and in an entire video in the SP-A playback source, no advertisement clip is inserted into the basic video. The user performs a switching operation (an operation of jumping to the entire video) when the clip video is played for one minute. If the entire video obtained through switching from the clip video is the SP-A playback source, a playback start location of the entire video is 00:21:00 in normal cases; however, if the entire video obtained through switching from the clip video is the SP-B playback source, and a playback start location of the entire video is calculated according to the current calculation method, the playback start location of the entire video is still 00:21:00. In this case, it can be learned that, when the entire video of SP-B is played, the user needs to view additional images of 10 seconds (images between 00:20:50 and 00:21:00 in the SP-A playback source) that have been viewed in the clip video. In view of this, the playback start location of the entire video of SP-B should be 00:21:10 to ensure continuity of video playback before and after the switching, so as to accurately perform continuous playback.

Problem 2 (a problem caused by switching a clip video to an entire video)

During playback of the clip video, when the user switches the clip video to the entire video for continuous playback, if an SP inserts some clips into a basic video/crops some clips from the basic video to obtain an adjusted entire video, the clip video needs to be adjusted again to ensure that an image played when the user performs a switching operation (a continuous playback location of the adjusted entire video) is accurately located for continuous playback.

Specifically, during operation of the entire video (including an aggregated video/a non-aggregated video), the SP may insert an advertisement clip into the basic video or suddenly crop some clips due to a regulatory compliance requirement to obtain an adjusted entire video. As a result, a playback progress of the adjusted entire video changes compared with that of the basic video. In this case, a timeline of a clip video obtained by editing the basic video cannot be aligned with that of the adjusted entire video, and a clip video needs to be re-edited and released, resulting in high operation costs.

For example, it is assumed that duration of a basic video (an original entire video) is 40 minutes, and a clip video is edited at 00:20:00 and lasts for 3 minutes. The user performs a switching operation (an operation of jumping to the entire video) when the clip video is played for one minute. In normal cases (that is, no clips are inserted into/cropped from the basic video), continuous playback of the entire video starts from 00:21:00. However, if it is found through subsequent compliance supervision that a 3-second non-compliant image is displayed at 00:20:10 in the basic video, the 3-second image needs to be cropped from the basic video, to obtain an adjusted entire video. Then duration of the adjusted entire video changes to 39 minutes and 57 seconds. In this case, if the user still performs a switching operation (an operation of jumping to the entire video) when the clip video is played for one minute, and a playback start location of the entire video is also calculated according to the current calculation method, without considering time offset information, the playback start location of the entire video is still 00:21:00. However, an image corresponding to the playback start location is changed to an image displayed at 00:21:03 in the unadjusted entire video, and in this case, images of 3 seconds cannot be viewed by the user. In view of this, an accurate playback start location of the adjusted entire video should be 00:20:57 to ensure continuity of video playback before and after switching, so as to accurately perform continuous playback.

Problem 3 (a problem caused by switching one SP instance video to another SP instance video in the aggregated video)

During playback of the aggregated video, when the user switches the SP instance video (a source SP instance video) to the another SP instance video (a destination SP instance video), if different SPs insert some clips into a basic video/crops some clips from a basic video to obtain instance videos corresponding to the different SPs, the electronic device cannot accurately calculate a playback start location of the destination SP instance video (that is, cannot accurately locate a same image in two different SP instance videos). Consequently, continuity of video playback before and after switching cannot be ensured, and continuous playback cannot be accurately performed.

To resolve the foregoing problem, an embodiment of this application provides a video processing method. In a scenario of an aggregated video, because different SPs may insert one or more clips into or crop one or more clips from a basic video, offset information of the one or more clips (for example, location information and duration information of insertion/cropping) is calculated during operation of the video; and after detecting a switching operation of a user (for example, an operation of switching a clip video to an entire video, or an operation of switching a source SP instance video to a destination SP instance video), an electronic device may calculate a continuous playback location based on parameters such as the offset information of the one or more clips and played duration of the video during the switching operation of the user, so as to resolve a problem that video images before and after switching are discontinuous because the continuous playback location cannot be accurately calculated. This improves user experience.

It is easy to understand that the video processing method may also be applied to a scenario of a non-aggregated video. For example, after an entire video is launched and operated, if some clips are inserted into/cropped from the entire video, or some clips that have been inserted/cropped are adjusted in the entire video, a continuous playback location of the entire video can be accurately calculated without a need to edit and release a clip video associated with the entire video again. This resolves a problem that after the entire video is modified, the clip video needs to be synchronously checked and modified to ensure continuity of video playback before and after switching, so as to accurately perform continuous playback, and therefore reduces operation costs.

The following first describes a communication system provided in an embodiment of this application.

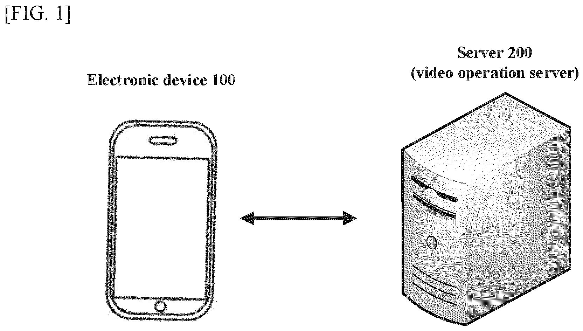

FIG. 1 shows an example of a communication system according to an embodiment of this application.

As shown in FIG. 1, the communication system may include an electronic device 100 and a server 200.

The electronic device 100 may be an intelligent terminal device with a video playback capability. The electronic device 100 may be configured to: play a clip video/an entire video; respond to a switching operation of a user (for example, an operation of switching a clip video to an entire video, or an operation of switching a source SP instance video to a destination SP instance video); exchange data with the server 200; and so on.

The electronic device 100 may be of various types. A specific type of the electronic device 100 is not limited in embodiments of this application. For example, the electronic device 100 may be a mobile phone, a tablet computer, a desktop computer, a laptop computer, a handheld computer, a notebook computer, a smart screen, or the like.

The server 200 may be a video operation server. The server 200 may be configured to: maintain data during operation of a video (for example, maintain offset information of one or more clips inserted into/cropped from a basic video by different SPs, an association relationship between a clip video and an entire video, and the like); exchange data with the electronic device 100; and so on.

The server 200 may be a conventional server or a cloud server. This is not limited in embodiments of this application.

Specific functions of the electronic device 100 and the server 200 are described in detail in subsequent embodiments, and are not described herein.

It should be understood that FIG. 1 is merely a diagram of an architecture of the communication system, and should not constitute a limitation on this application. A quantity of electronic devices and a quantity of servers included in the communication system are not limited in embodiments of this application.

Scenario 1: switching a clip video to an entire video

The following describes a specific execution process of a video processing method provided in an embodiment of this application in a scenario of switching a clip video to an entire video.

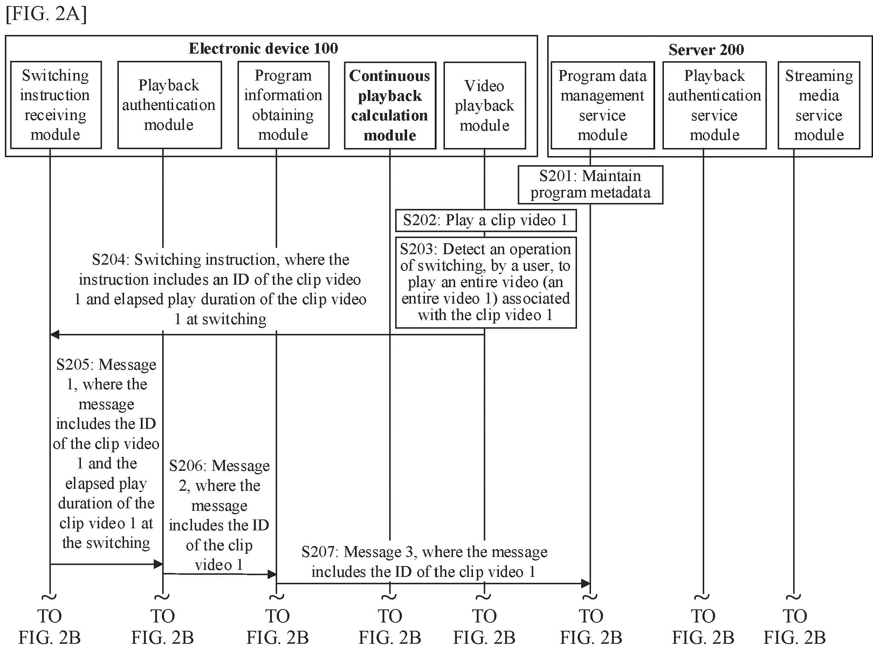

FIG. 2A to FIG. 2D show an example of a specific procedure of a video processing method in a scenario of switching a clip video to an entire video according to an embodiment of this application.

As shown in FIG. 2A to FIG. 2D, the method may be applied to the communication system including the electronic device 100 and the server 200. The electronic device 100 may include a switching instruction receiving module, a playback authentication module, a program information obtaining module, a continuous playback calculation module, and a video playback module. The server 200 may include a program data management service module, a playback authentication service module, and a streaming media service module. The following describes in detail specific steps of the method.

S201: The program data management service module of the server 200 maintains program metadata.

Specifically, in a process of distributing a program on an online platform, operation personnel may maintain program metadata (program information) of a clip video and an entire video through the program data management service module of the server 200.

In the conventional technology, maintaining the program metadata of the clip video and the entire video by the operation personnel mainly includes: recording metadata of the clip video (for example, an ID of the clip video), recording an association relationship between the clip video and the entire video (for example, an association relationship between the ID of the clip video and an ID of the entire video), recording editing location information, relative to the basic video, of the clip video (which may also be referred to as start location information of a segment), and the like.

In this embodiment of this application, in a process of maintaining the program metadata of the entire video, the operation personnel need to additionally maintain offset information corresponding to a clip inserted or cropped, during operation, for each SP instance video associated with the entire video. The operation personnel may maintain, according to an operation requirement during or after release of each SP instance video, the offset information corresponding to the clip inserted into or cropped from each SP instance video. That is, an offset information list of each SP instance video is additionally recorded in program information of the entire video. The offset information list includes offset information corresponding to a clip inserted (for example, inserted at the beginning or inserted in the middle) or cropped from the SP instance video.

The offset information may include: a start location at which a clip is inserted into/cropped from the basic video (an insertion location or a cropping location of the clip inserted into/cropped from the basic video) and offset duration (duration of the inserted or cropped clip).

Offset information corresponding to each inserted/cropped clip may be briefly described as $\delta(B, L)$, where B may represent the start location of the clip inserted into/cropped from the basic video, and L may represent the offset duration.

It is easy to understand that, in a case in which the offset duration L is greater than 0, in the SP instance video, a clip is inserted into the basic video, that is, offset duration corresponding to the inserted clip is a positive number; or in a case in which the offset duration L is less than 0, the SP instance video is obtained by cropping a clip from the basic video, that is, offset duration corresponding to the cropped clip is a negative number.

It is assumed that duration of the basic video is 30 minutes. For example, if a start location of a clip inserted into the basic video is 00:00 (a clip inserted at a playback start point of the basic video, which is referred to as a beginning-inserted clip) and insertion duration is 10 seconds, offset information of the inserted clip may be represented as $\delta(00:00, 10)$. For another example, if a start location of a clip inserted into the basic video is 10:00 (a clip inserted between a playback start point and a playback end point of the basic video, which is referred to as a middle-inserted clip) and insertion duration is 10 seconds, offset information of the inserted clip may be represented as $\delta(10:00, 10)$. For another example, if a start location of a clip cropped from the basic video is 20:00 and cropping duration is 10 seconds, offset information of an inserted clip may be represented as $\delta(20:00, -10)$.

The offset information list of each SP instance video may be briefly described as list<$\delta(B_i, L_i)$>, where i may represent a number of the inserted/cropped clip, and i may be a positive integer.

For example, an SP instance video has two inserted clips and one cropped clip, which are an inserted clip 1, an inserted clip 2, and a cropped clip 3 respectively. In this case, offset information of the inserted clip 1 may be represented as $\delta(B1, L1)$, offset information of the inserted clip 2 may be represented as $\delta(B2, L2)$, offset information of the cropped clip 3 may be represented as $\delta(B3, L3)$, and an offset information list of the SP instance video may be represented as $\{\delta(B1, L1), \delta(B2, L2), \delta(B3, L3)\}$.

After completing a segmentation operation (an editing operation) of the clip video, the operation personnel may maintain the association relationship between the clip video and the entire video and the editing location information, relative to the basic video, of the clip video while releasing the clip video through the program data management service module of the server 200.

It is easy to understand that, in a process of maintaining the metadata of the clip video, the operation personnel do not need to pay attention to related data in an SP instance video associated with the entire video.

In this embodiment of this application, the basic video may be an original video that is provided by a video distributor, includes complete content of the video, and does not include a clip (for example, an advertisement clip) subsequently inserted by each SP. The clip video may be a video clip obtained by editing a basic video.

S202: The video playback module of the electronic device 100 plays a clip video 1.

Specifically, a video playback application (for example, a "Huawei video" application) may be installed on the electronic device 100. The switching instruction receiving module, the playback authentication module, the program information obtaining module, the continuous playback calculation module, and the video playback module that are included in the electronic device 100 may be included in the application. The electronic device 100 may play the clip video 1 through the video playback module included in the application.

It is easy to understand that, before playing the clip video 1, the electronic device 100 may obtain a video resource of the clip video 1 from the server 200 in a pre-download or data request manner.

In this embodiment of this application, an example in which the video playback application is a "Huawei video" application is used. This is not limited thereto, and the video playback application may be another application. This is not limited in embodiments of this application.

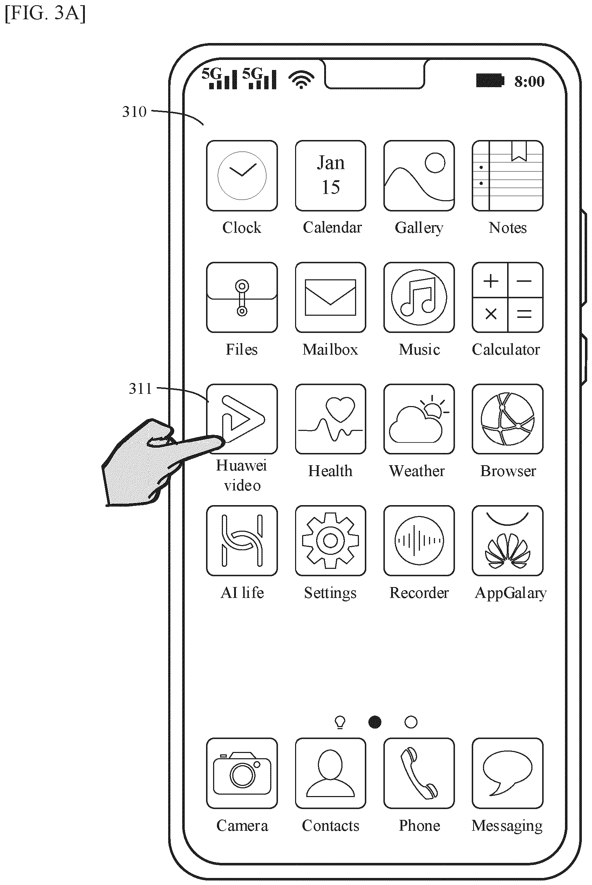

For example, refer to FIG. 3A. FIG. 3A is a user interface 310 provided in a "Desktop" application on the electronic device 100. The user interface may include icons of one or more applications, for example, an icon 311 of a "Huawei video" application. The electronic device 100 may detect an operation (for example, a tap operation) performed by the user on the icon 311 of the "Huawei video" application, and in response to the operation, the electronic device 100 may start the "Huawei video" application.

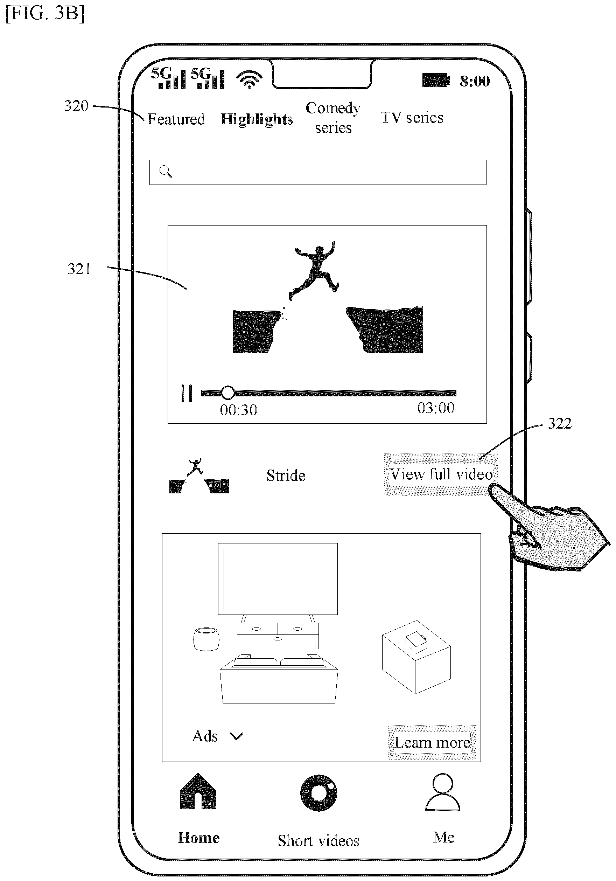

Refer to FIG. 3B. FIG. 3B may be a user interface 320 corresponding to a "Home" option in the "Huawei video" application. The user interface may include a video playback area 321 and an option 322 (for example, a "View full video" option).

The video playback area 321 may be used to play a clip video.

The option 322 may be used to switch a clip video to an entire video associated with the clip video.

The clip video played in the video playback area 321 may be the clip video 1, and the clip video 1 may be automatically recommended by the "Huawei video" application, or may be actively found by the user in the "Huawei video" application.

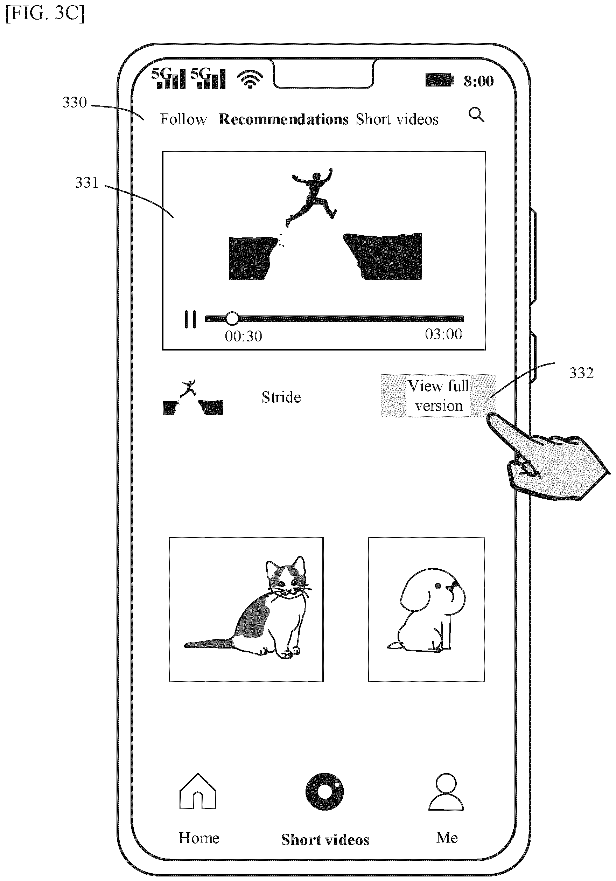

Refer to FIG. 3C. FIG. 3C may be a user interface 330 corresponding to a "Short videos" option in the "Huawei video" application. The user interface may include a video playback area 331 and an option 332 (for example, a "View full version" option).

The video playback area 331 may be used to play a clip video.

The option 332 may be used to switch a clip video to an entire video associated with the clip video.

The clip video played in the video playback area 331 may be the clip video 1, and the clip video 1 may be automatically recommended by the "Huawei video" application, or may be actively found by the user in the "Huawei video" application.

Each of the video playback area 321 and the video playback area 331 may further include a video playback progress bar, and the video playback progress bar may display played duration of a video and total duration of the video. It can be seen from the video playback progress bar that played duration of the clip video 1 is 30 seconds, and total duration is 3 minutes.

FIG. 3A to FIG. 3C show a process in which the electronic device 100 starts the "Huawei video" application to play the clip video 1, and the electronic device 100 is not limited thereto. The electronic device 100 may further play, in a notification bar or a leftmost screen, the clip video 1 provided by the "Huawei video" application.

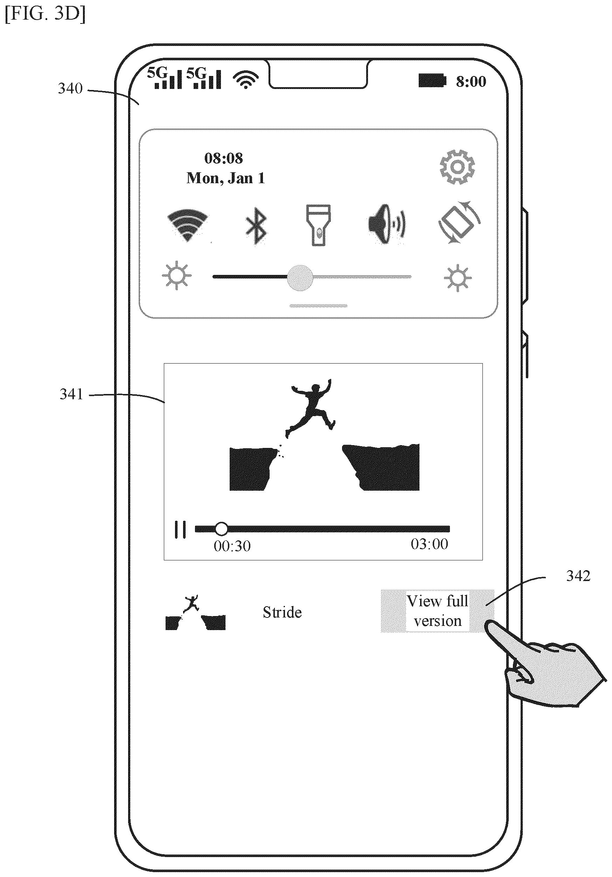

Refer to FIG. 3D. FIG. 3D may be a user interface 340 corresponding to a "Notification bar" of the electronic device 100. The user interface may include a video playback area 341 and an option 342 (for example, a "View full version" option). The video playback area 341 may be used to play a clip video. The option 342 may be used to switch a clip video to an entire video associated with the clip video.

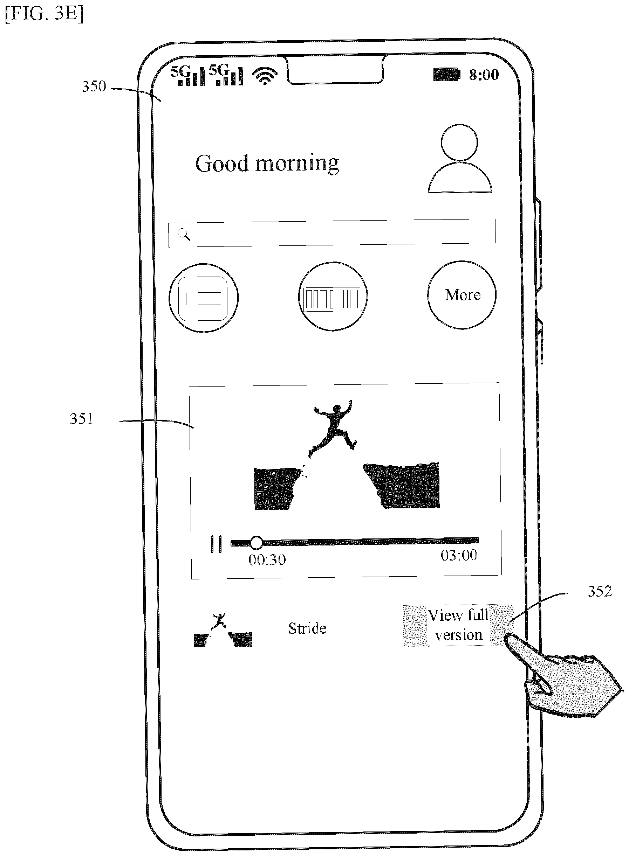

Similarly, refer to FIG. 3E. FIG. 3E may be a user interface 350 corresponding to a "Leftmost screen" of the electronic device 100. The user interface may include a video playback area 351 and an option 352 (for example, a "View full version" option). The video playback area 351 may be used to play a clip video. The option 352 may be used to switch a clip video to an entire video associated with the clip video.

It may be understood that the electronic device 100 may directly play a clip video in an application, a notification bar, or a leftmost screen, without a need for the user to trigger playback of the clip video before playing the clip video; or the electronic device 100 may first display an image in the clip video, and play the clip video after the user triggers playback of the clip video.

S203-S204: The video playback module of the electronic device 100 detects an operation of switching, by the user, to play an entire video (an entire video 1) associated with the clip video 1, and in response to the operation, the video playback module of the electronic device 100 sends a switching instruction to the switching instruction receiving module of the electronic device 100, where the instruction includes an ID of the clip video 1 and played duration of the clip video 1 at switching.

Specifically, during playback of the clip video 1 through the video playback module of the electronic device 100, if the user wants to switch to the entire video associated with the clip video 1 (that is, the user wants to play, through the video playback module of the electronic device 100, the entire video associated with the clip video 1), the video playback module of the electronic device 100 may detect the operation of switching, by the user, to play the entire video (the entire video 1) associated with the clip video 1, and in response to the operation, the video playback module of the electronic device 100 may send a switching instruction to the switching instruction receiving module of the electronic device 100. The instruction includes the ID of the clip video 1 and the played duration of the clip video 1 at the switching.

The "operation of switching, by the user, to play the entire video associated with the clip video 1" may be an operation (for example, a tap operation) performed by the user on the option 322 or the video playback area 321 shown in FIG. 3B as an example, or an operation (for example, a tap operation) performed by the user on the option 332 or the video playback area 331 shown in FIG. 3C as an example, or an operation (for example, a tap operation) performed by the user on the option 342 shown in FIG. 3D as an example, or an operation (for example, a tap operation) performed by the user on the option 352 shown in FIG. 3E as an example.

It is easy to understand that the ID of the clip video is obtained by the electronic device 100 from the server 200.

In this embodiment of this application, the ID of the clip video 1 and the played duration of the clip video 1 at the switching may be included in the switching instruction, or may not be included in the switching instruction, but are separately sent by the video playback module. This is not limited herein.

After receiving the switching instruction sent by the video playback module, the switching instruction receiving module of the electronic device 100 may invoke the playback authentication module of the electronic device 100 to perform playback authentication on the entire video. Further, the playback authentication module of the electronic device 100 may invoke, according to the switching instruction received by the switching instruction receiving module, the program information obtaining module of the electronic device 100 to query information about the entire video that needs to be authenticated. Further, the program information obtaining module of the electronic device 100 may invoke, based on the ID of the clip video 1 included in the switching instruction, the program data management service module of the server 200 to query information about the entire video that needs to be authenticated. A possible implementation of the foregoing process may be an implementation described in the following steps S205 to S207.

S205-S207: The switching instruction receiving module of the electronic device 100 sends a message 1 to the playback authentication module of the electronic device 100, where the message may include the ID of the clip video 1 and the played duration of the clip video 1 at the switching. After receiving the message 1, the playback authentication module of the electronic device 100 may send a message 2 to the program information obtaining module of the electronic device 100, where the message may include the ID of the clip video 1. After receiving the message 2, the program information obtaining module of the electronic device 100 may send a message 3 to the program data management service module of the server 200, where the message may include the ID of the clip video 1.

S208: The program data management service module of the server 200 determines, based on the ID of the clip video 1, that the entire video associated with the clip video 1 is the entire video 1, and determines a start location of a segment and an offset information list of each SP instance video associated with the entire video 1.

Specifically, after the program data management service module of the server 200 receives the message 3 sent by the program information obtaining module of the electronic device 100, because the program data management service module of the server 200 has recorded the association relationship between the clip video and the entire video in the process of maintaining the program metadata in step S201, the program data management service module of the server 200 may query, based on the ID of the clip video 1 included in the message, the entire video associated with the clip video 1.

The entire video associated with the clip video 1 may be a basic video from which the clip video 1 is obtained through editing. It is assumed that the entire video associated with the clip video 1 is the entire video 1.

Further, after it is determined that the entire video associated with the clip video 1 is the entire video 1, because the program data management service module of the server 200 further records, in the process of maintaining the program metadata in step S201, the editing location information, relative to the basic video, of the clip video, and the offset information corresponding to the clip inserted or cropped, during operation, for each SP instance video associated with the entire video, the program data management service module of the server 200 may further determine the start location of the segment and the offset information list of each SP instance video associated with the entire video 1.

S209: The program data management service module of the server 200 sends a message 4 to the program information obtaining module of the electronic device 100, where the message includes an ID of the entire video 1, the start location of the segment, and the offset information list of each SP instance video associated with the entire video 1.

Specifically, after performing the foregoing step S208, the program data management service module of the server 200 may send the message 4 to the program information obtaining module of the electronic device 100.

S210: The program information obtaining module of the electronic device 100 sends a message 5 to the playback authentication module of the electronic device 100, where the message includes the ID of the entire video 1, the start location of the segment, and the offset information list of each SP instance video associated with the entire video 1.

Specifically, after receiving the message 4 sent by the program data management service module of the server 200, the program information obtaining module of the electronic device 100 may send the message 5 to the playback authentication module of the electronic device 100.

S211: The playback authentication module of the electronic device 100 sends a message 6 to the playback authentication service module of the server 200, where the message includes the ID of the entire video 1 and user information 1.

Specifically, after receiving the message 5 sent by the program information obtaining module of the electronic device 100, the playback authentication module of the electronic device 100 may send the message 6 to the playback authentication service module of the server 200.

The user information 1 may be account information used by the user to log in to a video playback application (for example, a "Huawei video" application). The account information may include but is not limited to a mobile number, an email address, a user-defined user name, and the like.

In some examples, the user information 1 may alternatively be sent in step S207. In this case, the playback authentication module of the electronic device 100 does not need to perform step S211, and the program data management service module of the server 200 does not need to send the ID of the entire video 1 to the playback authentication module of the electronic device 100 in step S209, but may directly send the ID of the entire video 1 to the playback authentication module of the server 200, to perform the subsequent step S212. In this case, step S208 "determining a start location of a segment and an offset information list of each SP instance video associated with the entire video 1" may alternatively be performed after step S212.

S212: The playback authentication service module of the server 200 determines, based on the ID of the entire video 1, the user information 1, and an authentication rule, a playback address corresponding to an SP instance video that is associated with the entire video 1 and that can be played by the user.

The authentication rule may be preset, and may be used to determine whether the user has permission to play an SP instance video.

Specifically, the playback authentication service module of the server 200 may first find, based on the ID of the entire video 1, playback addresses corresponding to all SP instance videos associated with the entire video 1, and further determine, in the playback addresses corresponding to all SP instance videos based on the user information 1 and the authentication rule, a playback address corresponding to an SP instance video that can be played by the user (that is, the user has permission to play).

For example, it is assumed that the authentication rule specifies that, for an SP instance video associated with the entire video 1, only a user who subscribes to a membership of the SP has permission to play the SP instance video. If it is determined based on the user information 1 that the user is a member user of the SP, it may be further determined that the user can play the SP instance video; or if it is determined that the user is a non-member user of the SP, it may be further determined that the user cannot play the SP instance video.

It may be understood that a quantity of SP instance videos that are associated with the entire video 1 and that can be played by the user may be 0, in which case no SP instance video can be played; or may be 1, in which case only this one SP instance video can be played; or may be two or more, in which case one of the two or more SP instance videos can be played according to a preset operation strategy. For example, there are two SP instance videos that are associated with the entire video 1 and that can be played by the user, and the two SP instance videos are provided by an SP "Huawei video" and another SP respectively. If the SP "Huawei video" takes precedence over the another SP according to the preset operation strategy, the electronic device 100 plays the SP instance video provided by the SP "Huawei video"; otherwise, the electronic device 100 plays the SP instance video provided by another SP.

S213: The playback authentication service module of the server 200 sends a message 7 to the playback authentication module of the electronic device 100, where the message includes the playback address corresponding to the SP instance video that is associated with the entire video 1 and that can be played by the user.

Specifically, after performing the foregoing step S212, the playback authentication service module of the server 200 may send the message 7 to the playback authentication module of the electronic device 100.

S214: The playback authentication module of the electronic device 100 sends a message 8 to the continuous playback calculation module of the electronic device 100, where the message includes the played duration of the clip video 1 at the switching, the start location of the segment, an offset information list of the SP instance video that is associated with the entire video 1 and that can be played by the user, and the playback address.

Specifically, after receiving the message 7 sent by the playback authentication service module of the server 200, the playback authentication module of the electronic device 100 may send the message 8 to the continuous playback calculation module of the electronic device 100. The message 8 indicates the continuous playback calculation module to calculate playback start location information of the SP instance video that is associated with the entire video 1 and that can be played by the user.

S215: The continuous playback calculation module of the electronic device 100 determines the playback start location information of the SP instance video based on the played duration of the clip video 1 at the switching, the start location of the segment, and the offset information list of the SP instance video that is associated with the entire video 1 and that can be played by the user.

Specifically, after receiving the message 8 sent by the playback authentication module of the electronic device 100, the continuous playback calculation module of the electronic device 100 may determine the playback start location information of the SP instance video based on the offset information list of the SP instance video that is associated with the entire video 1 and that can be played by the user, the played duration of the clip video 1 at the switching, and the start location of the segment that are included in the message.

The following describes in detail a specific process that "the continuous playback calculation module of the electronic device 100 determines the playback start location information of the SP instance video based on the played duration of the clip video 1 at the switching, the start location of the segment, and the offset information list of the SP instance video that is associated with the entire video 1 and that can be played by the user".

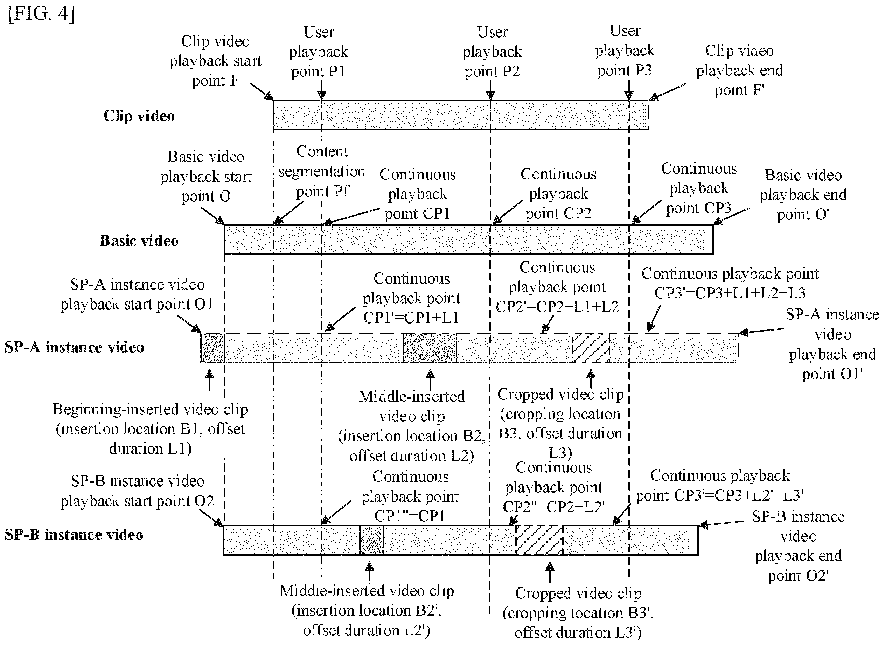

For example, refer to FIG. 4. FIG. 4 is a principle diagram of performing continuous playback calculation in a scenario of "switching a clip video to an entire video" according to an embodiment of this application.

It is assumed that a clip video shown in FIG. 4 is the clip video 1, a basic video is the entire video 1 (a video from which the clip video 1 is obtained through editing), an SP-A instance video is an SP instance video that is associated with the entire video 1 and that can be played by the user, and an SP-B instance video is another SP instance video that is associated with the entire video 1 and that can be played by the user. The SP-A instance video and the SP-B instance video are obtained by inserting some clips into/cropping some clips from the basic video by corresponding SPs due to an operation reason.

The "played duration of the clip video 1 at switching" may be determined based on a user playback point Pi (a time point of a playback progress of the clip video 1 in a case in which the user performs a switching action), where i is a positive integer. For example, if the user playback point Pi is 00:30, the played duration of the clip video 1 at the switching is 30 seconds.

The "start location of the segment" may be determined based on a location, relative to a timeline location of the basic video, of a playback start point F of the clip video. The start location of the segment is recorded when the clip video starts to be edited. It can be seen that a location of the playback start point F of the clip video is a playback start location of the clip video, and the location, relative to the timeline location of the basic video, of the playback start point F of the clip video is a location of a content segmentation point Pf (the start location of the segment). That is, the clip video starts to be edited at the location of the content segmentation point Pf, and a length of the clip video (duration of the clip video) is a time difference between a playback end point F' of the clip video and the playback start point F of the clip video. The duration of the basic video is a time difference between a playback end point O' of the basic video and a playback start point O of the basic video.

The "offset information list of the SP instance video that is associated with the entire video 1 and that can be played by the user" may be determined based on a start location of the clip inserted into/cropped from the basic video and offset duration. The offset information list of the SP instance video that is associated with the entire video 1 and that can be played by the user is recorded in the process of maintaining the program metadata. The SP-A instance video is used as an example. It can be seen that the SP-A instance video is obtained by inserting two clips (a beginning-inserted video clip and a middle-inserted video clip) into the basic video and cropping a clip (a cropped video clip) from the basic video. An insertion location of the beginning-inserted video clip is B1 and offset duration is L1. An insertion location of the middle-inserted video clip is B2 and offset duration is L2. A cropping location of the cropped video clip is B3 and offset duration is L3. Therefore, an offset information list of the SP-A instance video may be represented as {δ(B1, L1), δ(B2, L2), δ(B3, L3)}. Duration of the SP-A instance video is a time difference between a playback end point O1' of the SP-A instance video and a playback start point O1 of the SP-A instance video.

The continuous playback calculation module may first determine a continuous playback point of the basic video based on the played duration of the clip video 1 at the switching and the start location of the segment, and then determine a continuous playback point of the SP-A instance video (playback start location information of the SP-A instance video) based on the continuous playback point of the basic video and the offset information list of the SP-A instance video.

It is easy to understand that the continuous playback point of the basic video is determined by adding the played duration of the clip video 1 at the switching and the start location of the segment. For example, it is assumed that played duration Lf of the clip video 1 at switching is 30 seconds, and a start location Pf of the segment is 10:00. In this case, a continuous playback point CP of the basic video is CP=Pf+Lf=10:30.

After the continuous playback point of the basic video is determined, first, it needs to be determined whether a clip is inserted into/cropped from the SP-A instance video before a location of the continuous playback point of the basic video. If a clip is inserted/cropped, the continuous playback point of the SP-A instance video is a point obtained by adding up the continuous playback point of the basic video and offset duration of all clips inserted/cropped before the location of the continuous playback point of the basic video. If no clip is inserted/cropped, the continuous playback point of the SP-A instance video is the continuous playback point of the basic video.

To be specific, it is assumed that the continuous playback point of the basic video is CP. In this case, a continuous playback point CP' of the SP-A instance video is $CP'=CP+\sum_{i=1}^{n} L_i$, where n is a total quantity of clips inserted and cropped before the location of the continuous playback point of the basic video, and $L_i$ is offset duration of an $i^{th}$ clip inserted/cropped before the location of the continuous playback point of the basic video.

For example, refer to FIG. 4. A continuous playback point, corresponding to a user playback point P1, of the basic video is CP1. It can be seen that a clip (a beginning-inserted video clip) is inserted into the SP-A instance video before a location of CP1. In this case, a continuous playback point of the SP-A instance video is CP1'=CP1+L1. A continuous playback point, corresponding to a user playback point P2, of the basic video is CP2. It can be seen that two clips (a beginning-inserted video clip and a middle-inserted video clip) are inserted into the SP-A instance video before a location of CP2. In this case, a continuous playback point of the SP-A instance video is CP2'=CP2+L1+L2. A continuous playback point, corresponding to a user playback point P3, of the basic video is CP3. It can be seen that two clips (a beginning-inserted video clip and a middle-inserted video clip) are inserted into the SP-A instance video before a location of CP3 and one clip (a cropped video clip) is cropped. In this case, a continuous playback point of the SP-A instance video is CP3'=CP3+L1+L2+L3. It is easy to understand that offset duration of the inserted clip is a positive number, and offset duration of the cropped clip is a negative number.

A process of "determining whether a clip is inserted into/cropped from the SP-A instance video before a location of the continuous playback point of the basic video" is as follows: If an insertion location or a cropping location, of the clip inserted into/cropped from the basic video, recorded in the offset information list of the SP-A instance video is before the location of the continuous playback point of the basic video, it is determined that a clip is inserted/cropped for the SP-A instance video before the location of the continuous playback point of the basic video.

It is easy to understand that, that the clip is inserted into/cropped from the SP-A instance video before the location of the continuous playback point of the basic video means that the clip is inserted/cropped for the SP-A instance video before the location of the continuous playback point; and that no clip is inserted/cropped for the SP-A instance video before the location of the continuous playback point of the basic video means that no clip is inserted/cropped for the SP-A instance video before the location of the continuous playback point.

The foregoing merely describes calculation of a continuous playback point of the SP instance video by using an example in which "the SP instance video that is associated with the entire video 1 and that can be played by the user is an SP-A instance video". It is easy to understand that, when the SP instance video that is associated with the entire video 1 and that can be played by the user is a plurality of different SP instance videos, a continuous playback point of each SP instance video may be calculated in the foregoing manner. In this way, when the user switches to a different SP instance video, a corresponding continuous playback point can be accurately located, to ensure continuity of video playback.

Refer to FIG. 4. An offset information list of the SP-B instance video may be represented as $\{\delta(B2', L2'), \delta(B3', L3')\}$. Duration of the SP-B instance video is a time difference between a playback end point O2' of the SP-B instance video and a playback start point O2 of the SP-B instance video. Similarly, according to the foregoing manner of calculating the SP instance video, it is easy to understand that, when a user playback point is P1, a continuous playback point of the SP-B instance video is CP1"=CP1; when a user playback point is P2, a continuous playback point of the SP-B instance video is CP2"=CP2+L2'; or when a user playback point is P3, a continuous playback point of the SP-B instance video is CP3"=CP3+L2'+L3'.

It is easy to understand that the clip video 1 is a video clip obtained by editing the basic video, and is also a video clip in "the SP instance video associated with the entire video 1".

S216: The continuous playback calculation module of the electronic device 100 sends a message 9 to the video playback module of the electronic device 100, where the message includes the playback start location information of the SP instance video and the playback address.

Specifically, after performing the foregoing step S215, the continuous playback calculation module of the electronic device 100 may send the message 9 to the video playback module of the electronic device 100. The message 9 indicates the video playback module of the electronic device 100 to obtain video stream data after a playback start location of the SP instance video.

S217: The video playback module of the electronic device 100 sends a message 10 to the streaming media service module of the server 200, where the message includes the playback start location information of the SP instance video and the playback address.

Specifically, after receiving the message 9 sent by the continuous playback calculation module of the electronic device 100, the video playback module of the electronic device 100 may send the message 10 to the streaming media service module of the server 200, so as to obtain the video stream data after the playback start location of the SP instance video from the streaming media service module of the server 200.

S218-S220: The streaming media service module of the server 200 searches for the video stream data after the playback start location of the SP instance video based on the playback start location information of the SP instance video and the playback address. Then, the streaming media service module of the server 200 may send a message 11 to the video playback module of the electronic device 100, where the message includes the video stream data after the playback start location of the SP instance video. Then, the video playback module of the electronic device 100 may play, based on the video stream data after the playback start location of the SP instance video, a part after the playback start location of the SP instance video.

For example, it is assumed that played duration Lf of the clip video 1 at switching is 30 seconds, and a start location Pf of the segment is 10:00. In this case, a continuous playback point CP of the basic video is CP=Pf+Lf=10:30, and a continuous playback point CP' of the SP instance video (the playback start location information of the SP instance video) is $\text{CP'}=\text{CP}+\sum_{i=1}^{n} L_i$, where n is a total quantity of clips inserted and cropped before the location of the continuous playback point of the basic video, and $L_i$ is offset duration of an ith clip inserted/cropped before the location of the continuous playback point of the basic video.

1. In a case in which $\sum_{i=1}^{n} L_i$ is 0 (in a case in which the total quantity of clips inserted and cropped before the location of the continuous playback point of the basic video is 0, or a sum of offset duration of all clips inserted and cropped before the location of the continuous playback point of the basic video is 0), the continuous playback point CP' of the SP instance video is the same as the continuous playback point CP of the basic video, namely, 10:30.

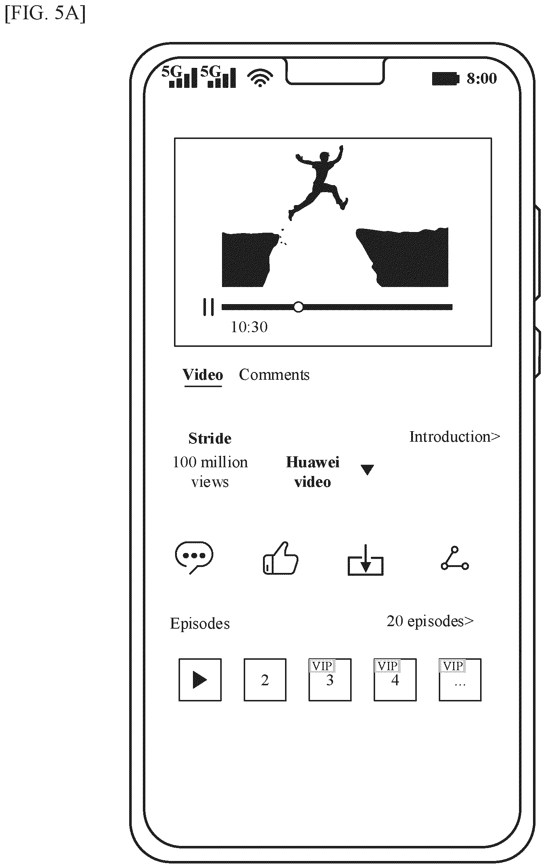

For example, refer to FIG. 5A. A user interface shown in FIG. 5A may be a user interface displayed when the user continues to play an SP instance video after performing a switching operation. For example, the SP instance video may be an instance video provided by the SP "Huawei video". It can be learned that a playback start location of the SP instance video (a continuous playback point of the SP instance video) is 10:30, in other words, a location, of an image played in the clip video 1 when the user performs the switching operation, in the SP instance video is 10:30. Further, the electronic device 100 may continue to play, at 10:30 based on the obtained video stream data after the playback start location of the SP instance video, a part after the playback start location of the SP instance video.

2. In a case in which $\sum_{i=1}^{n} L_i$ is not 0 (in a case in which the total quantity of clips inserted/cropped before the location of the continuous playback point of the basic video is not 0, and a sum of offset duration of all clips inserted and cropped before the location of the continuous playback point of the basic video is not 0), the continuous playback point CP' of the SP instance video is different from the continuous playback point CP of the basic video.

It is assumed that $\sum_{i=1}^{n} L_i$ is 20 seconds and the continuous playback point CP of the basic video is still 10:30 in a case in which $\sum_{i=1}^{n} L_i$ is greater than 0. In this case, the continuous playback point CP' of the SP instance video is CP'=10:30+20=10:50.

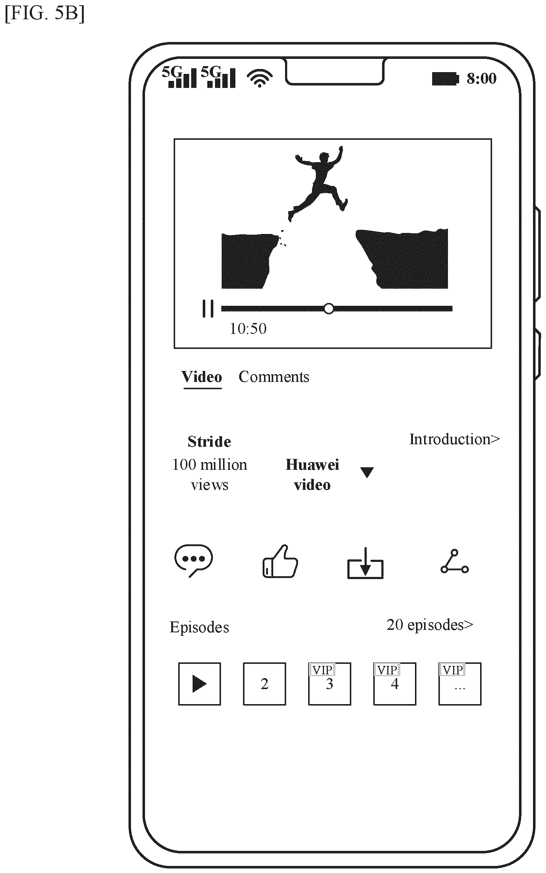

For example, refer to FIG. 5B. A user interface shown in FIG. 5B may be a user interface displayed when the user continues to play an SP instance video after performing a switching operation. For example, the SP instance video may be an instance video provided by the SP "Huawei video". It can be learned that a playback start location of the SP instance video (a continuous playback point of the SP instance video) is 10:50, in other words, a location, of an image played in the clip video 1 when the user performs the switching operation, in the SP instance video is 10:50. Further, the electronic device 100 may continue to play, at 10:50 based on the obtained video stream data after the playback start location of the SP instance video, a part after the playback start location of the SP instance video.

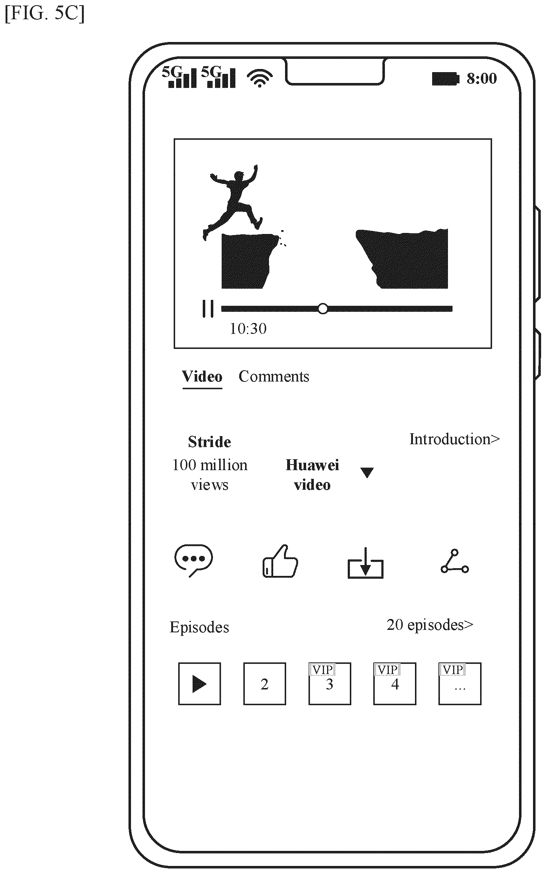

It is easy to understand that, in the case in which $\sum_{i=1}^{n} L_i$ is not 0, if offset duration of the inserted/cropped clip is not added during calculation of the continuous playback point of the SP instance video, the calculated continuous playback point of the SP instance video is the same as the continuous playback point of the basic video and is still 10:30. In this case, a continuous playback start image is an image corresponding to 10:30 in the SP instance video (for example, an image shown in FIG. 5C). Therefore, it is necessary to continue playing for 20 seconds to display an image played in the clip video 1 when the user performs the switching operation (for example, an image corresponding to 10:50 in the SP instance video shown in FIG. 5B). This cannot implement continuity of video playback before and after switching, resulting in poor user experience.

The foregoing describes the case in which $\sum_{i=1}^{n} L_i$ is greater than 0 by using an example in which

the SP instance video is an instance video provided by the SP "Huawei video". The following describes a case in which $\sum_{i=1}^{n} L_i$ is less than 0 by using an example in which the SP instance video is an instance video provided by an SP "XX video 1".

It is assumed that $\sum_{i=1}^{n} L_i$ is -20 seconds and the continuous playback point CP of the basic video is still 10:30. In this case, the continuous playback point CP' of the SP instance video is CP'=10:30-20=10:10.

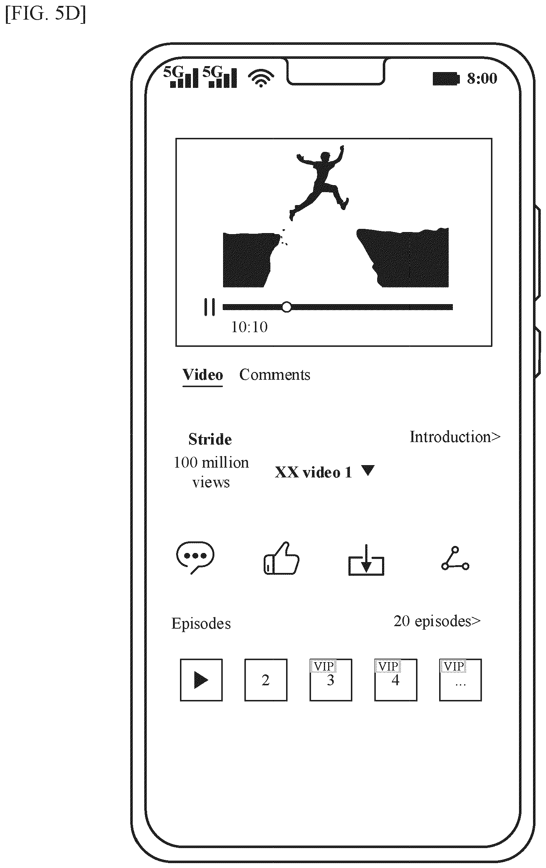

For example, refer to FIG. 5D. A user interface shown in FIG. 5D may be a user interface displayed when the user continues to play an SP instance video after performing a switching operation. For example, the SP instance video may be an instance video provided by the SP "XX video 1". It can be learned that a playback start location of the SP instance video (a continuous playback point of the SP instance video) is 10:10, in other words, a location, of an image played in the clip video 1 when the user performs the switching operation, in the SP instance video is 10:10. Further, the electronic device 100 may continue to play, at 10:10 based on the obtained video stream data after the playback start location of the SP instance video, a part after the playback start location of the SP instance video.

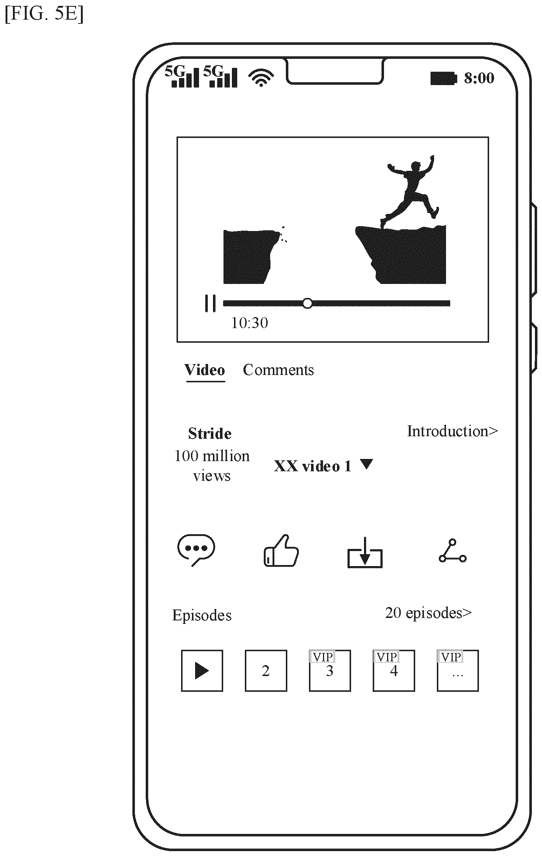

It is easy to understand that, in the case in which $\sum_{i=1}^{n} L_i$ is less than 0, if offset duration of the inserted/cropped clip is not added during calculation of the continuous playback point of the SP instance video, the calculated continuous playback point of the SP instance video is the same as the continuous playback point of the basic video and is still 10:30. In this case, a continuous playback start image is an image corresponding to 10:30 in the SP instance video (for example, an image shown in FIG. 5E), and is inconsistent with an image played in the clip video 1 when the user performs the switching operation. This cannot implement continuity of video playback before and after switching, resulting in poor user experience.

Scenario 1: switching a clip video to an entire video

The following describes a specific execution process of a video processing method provided in an embodiment of this application in a scenario of switching a clip video to an entire video.

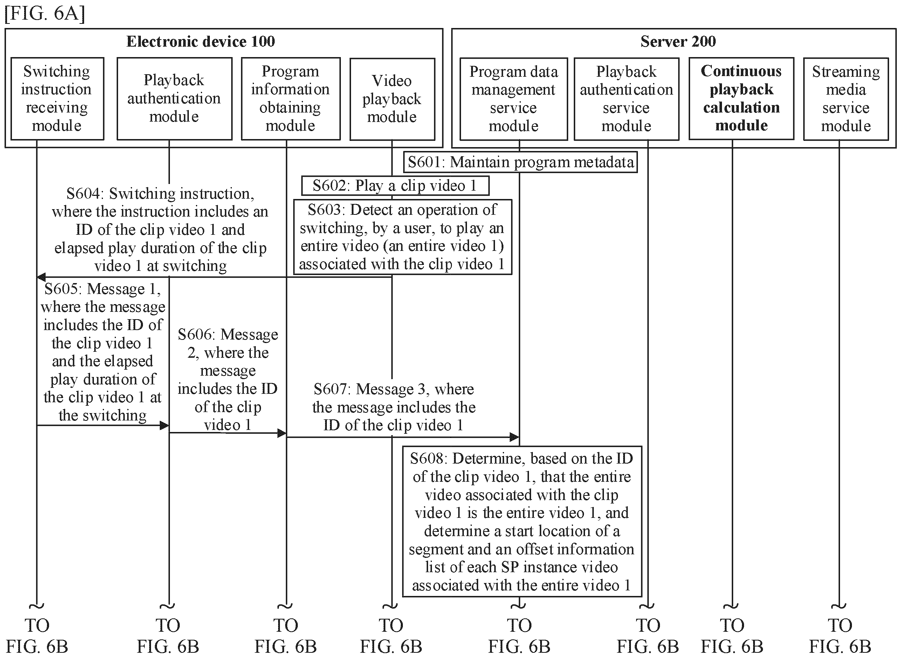

FIG. 6A to FIG. 6D show an example of a specific procedure of another video processing method in a scenario of switching a clip video to an entire video according to an embodiment of this application.

As shown in FIG. 6A to FIG. 6D, the method may be applied to the communication system including the electronic device 100 and the server 200. The electronic device 100 may include a switching instruction receiving module, a playback authentication module, a program information obtaining module, and a video playback module. The server 200 may include a program data management service module, a playback authentication service module, a continuous playback calculation module, and a streaming media service module. Different from the continuous playback calculation module in FIG. 2A, the continuous playback calculation module in FIG. 6A is included in the server 200 instead of the electronic device 100. The following describes in detail specific steps of the method.

S601: The program data management service module of the server 200 maintains program metadata.

S602: The video playback module of the electronic device 100 plays a clip video 1.

S603-S604: The video playback module of the electronic device 100 detects an operation of switching, by the user, to play an entire video (an entire video 1) associated with the clip video 1, and in response to the operation, the video playback module of the electronic device 100 sends a switching instruction to the switching instruction receiving module of the electronic device 100, where the instruction includes an ID of the clip video 1 and played duration of the clip video 1 at switching.

S605-S607: The switching instruction receiving module of the electronic device 100 sends a message 1 to the playback authentication module of the electronic device 100, where the message may include the ID of the clip video 1 and the played duration of the clip video 1 at the switching. After receiving the message 1, the playback authentication module of the electronic device 100 may send a message 2 to the program information obtaining module of the electronic device 100, where the message may include the ID of the clip video 1. After receiving the message 2, the program information obtaining module of the electronic device 100 may send a message 3 to the program data management service module of the server 200, where the message may include the ID of the clip video 1.

S608: The program data management service module of the server 200 determines, based on the ID of the clip video 1, that the entire video associated with the clip video 1 is the entire video 1, and determines a start location of a segment and an offset information list of each SP instance video associated with the entire video 1.

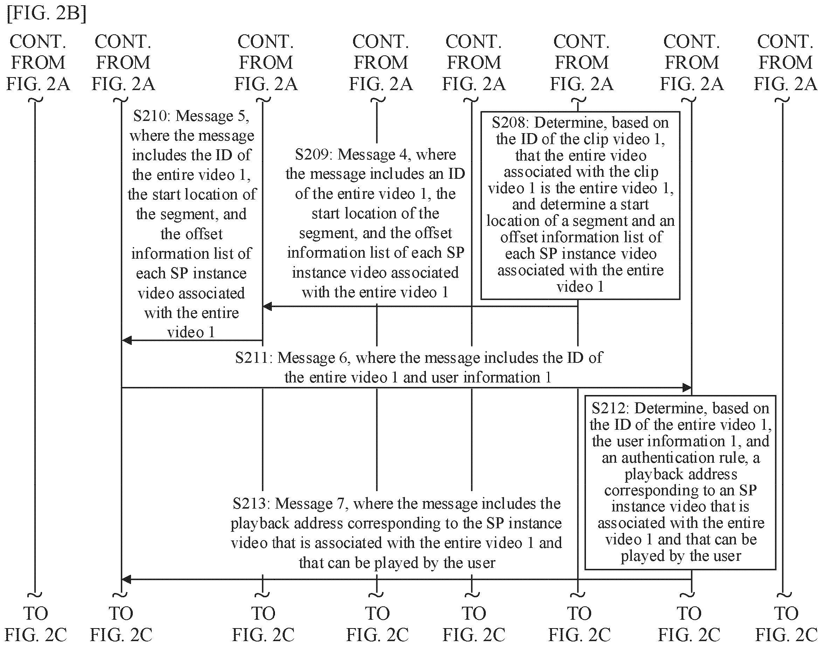

Step S601 to step S608 are similar to step S201 to step S208 shown in FIG. 2A and FIG. 2B. For a specific execution process, refer to related content of step S201 to step S208 shown in FIG. 2A and FIG. 2B. Details are not described herein again.

S609: The program data management service module of the server 200 sends a message 4 to the program information obtaining module of the electronic device 100, where the message includes an ID of the entire video 1.

Specifically, after performing the foregoing step S608, the program data management service module of the server 200 may send the message 4 to the program information obtaining module of the electronic device 100.

S610: The program information obtaining module of the electronic device 100 sends a message 5 to the playback authentication module of the electronic device 100, where the message includes the ID of the entire video 1.

Specifically, after receiving the message 4 sent by the program data management service module of the server 200, the program information obtaining module of the electronic device 100 may send the message 5 to the playback authentication module of the electronic device 100.

S611: The playback authentication module of the electronic device 100 sends a message 6 to the playback authentication service module of the server 200, where the message includes the ID of the entire video 1, user information 1, and the played duration of the clip video 1 at the switching.

Specifically, after receiving the message 5 sent by the program information obtaining module of the electronic device 100, the playback authentication module of the electronic device 100 may send the message 6 to the playback authentication service module of the server 200.

The user information 1 may be account information used by the user to log in to one or more video playback applications (for example, a "Huawei video" application). The account information may include but is not limited to a mobile number, an email address, a user-defined user name, and the like.

S612: The playback authentication service module of the server 200 determines, based on the ID of the entire video 1, the user information 1, and an authentication rule, a playback address corresponding to an SP instance video that is associated with the entire video 1 and that can be played by the user.

Step S612 is similar to step S212 shown in FIG. 2B. For a specific execution process, refer to related content of step S212 shown in FIG. 2B. Details are not described herein again.

S613: The program data management service module of the server 200 sends a message 7 to the playback authentication service module of the server 200, where the message includes the start location of the segment and the offset information list of each SP instance video associated with the entire video 1.

Step S613 may be performed after step S608 is performed, or may be performed in a process of performing step S609 to step S612. An execution order of step S613 is not limited in embodiments of this application.

S614: The playback authentication service module of the server 200 sends a message 8 to the continuous playback calculation module of the server 200, where the message includes the played duration of the clip video 1 at the switching, the start location of the segment, and an offset information list of each SP instance video that is associated with the entire video 1 and that can be played by the user.

S615: The continuous playback calculation module of the server 200 determines playback start location information of the SP instance video based on the played duration of the clip video 1 at the switching, the start location of the segment, and the offset information list of the SP instance video that is associated with the entire video 1 and that can be played by the user.

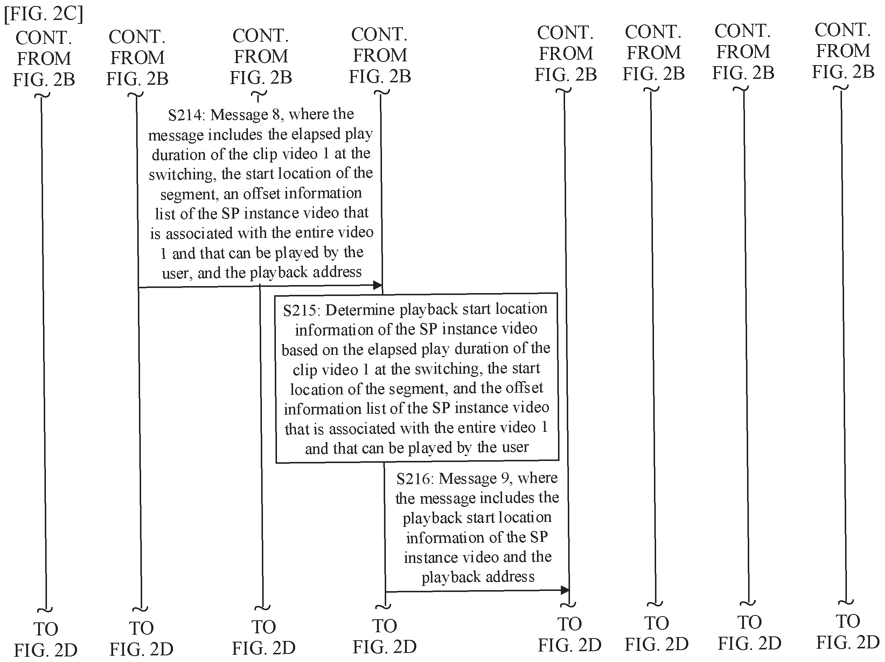

Step S615 is similar to step S215 shown in FIG. 2C. For a specific execution process, refer to related content of step S215 shown in FIG. 2C. Details are not described herein again.

S616: The continuous playback calculation module of the server 200 sends a message 9 to the playback authentication service module of the server 200, where the message includes the playback start location information of the SP instance video.

Specifically, after performing the foregoing step S615, the continuous playback calculation module of the server 200 may send the message 9 to the playback authentication service module of the server 200.

S617: The playback authentication service module of the server 200 sends a message 10 to the playback authentication module of the electronic device 100, where the message includes the playback start location information of the SP instance video and the playback address.

Specifically, after receiving the message 9 sent by the continuous playback calculation module of the server 200, the playback authentication service module of the server 200 may send the message 10 to the playback authentication module of the electronic device 100.

S618: The playback authentication module of the electronic device 100 sends a message 11 to the video playback module of the electronic device 100, where the message includes the playback start location information of the SP instance video and the playback address.

Specifically, after receiving the message 10 sent by the playback authentication service module of the server 200, the playback authentication module of the electronic device 100 may send the message 11 to the video playback module of the electronic device 100. The message 11 indicates the video playback module of the electronic device 100 to obtain video stream data after a playback start location of the SP instance video.

S619: The video playback module of the electronic device 100 sends a message 12 to the streaming media service module of the server 200, where the message includes the playback start location information of the SP instance video and the playback address.

S620-S622: The streaming media service module of the server 200 searches for the video stream data after the playback start location of the SP instance video based on the playback start location information of the SP instance video and the playback address. Then, the streaming media service module of the server 200 may send a message 13 to the video playback module of the electronic device 100, where the message includes the video stream data after the playback start location of the SP instance video. Then, the video playback module of the electronic device 100 may play, based on the video stream data after the playback start location of the SP instance video, a part after the playback start location of the SP instance video.

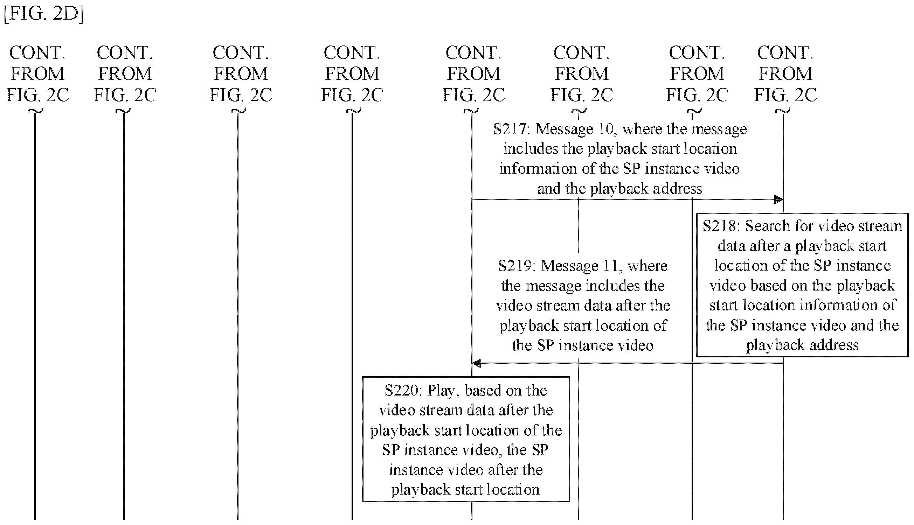

Step S619 to step S622 are similar to step S217 to step S220 shown in FIG. 2D. For a specific execution process, refer to related content of step S217 to step S220 shown in FIG. 2D. Details are not described herein again.

By implementing the method in the embodiment shown in FIG. 2A to FIG. 2D or FIG. 6A to FIG. 6D, during operation of the video, offset information corresponding to a clip inserted into/cropped from the basic video for each SP instance video may be additionally recorded in metadata of the SP instance video. After detecting the operation of switching, by the user, the clip video to the entire video, the electronic device 100 can accurately calculate a continuous playback point of the SP instance video based on parameters such as the offset information. In this case, when one or more clips are inserted into/cropped from the basic video for different SP instance videos, an image played when the user performs the switching operation may still be accurately located in the different SP instance video based on the clip video, and continuous playback is performed, to ensure continuity of video playback before and after switching. This improves user experience. In addition, if some clips that have been inserted/cropped for the SP instance video are adjusted during operation, because offset information corresponding to the inserted/cropped clips is also updated accordingly, the image played when the user performs the switching operation can be accurately located, without a need to re-edit and release the clip video. This reduces operation costs.

Scenario 2: switching an SP instance video (a source SP instance video) to another SP instance video (a destination SP instance video) in an aggregated video

The following describes a specific execution process of a video processing method in a scenario of switching an SP instance video (a source SP instance video) to another SP instance video (a destination SP instance video) in an aggregated video according to an embodiment of this application.

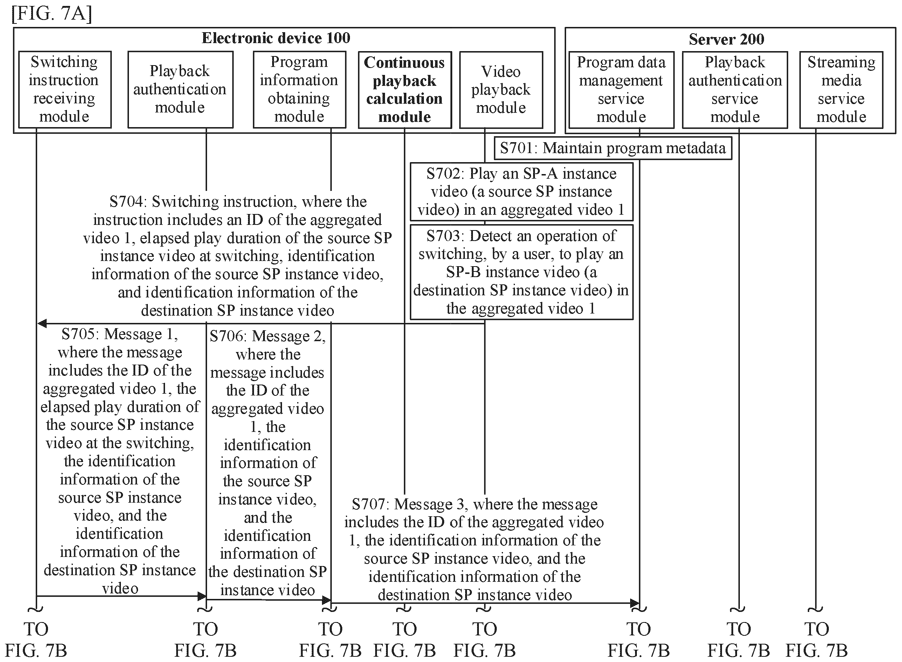

FIG. 7A to FIG. 7D show an example of a specific procedure of a video processing method in a scenario of switching an SP instance video (a source SP instance video) to another SP instance video (a destination SP instance video) in an aggregated video according to an embodiment of this application.

As shown in FIG. 7A to FIG. 7D, the method may be applied to the communication system including the electronic device 100 and the server 200. The electronic device 100 may include a switching instruction receiving module, a playback authentication module, a program information obtaining module, a continuous playback calculation module, and a video playback module. The server 200 may include a program data management service module, a playback authentication service module, and a streaming media service module. The following describes in detail specific steps of the method.

S701: The program data management service module of the server 200 maintains program metadata.

Different from the scenario 1 (switching a clip video to an entire video), in the scenario 2, because only one aggregated video is included and no clip video is included, in a process of maintaining the program metadata, no program information of a clip video needs to be maintained, and only an offset information list of one or more SP instance videos included in the aggregated video needs to be additionally maintained.

To be specific, when operation personnel release, through the program data management service module of the server 200, the one or more SP instance videos included in the aggregated video, the operation personnel need to additionally maintain, in program information of the SP instance video, an offset information list of a corresponding SP instance video.

For descriptions of the offset information list of the SP instance video, refer to related content in step S201 in FIG. 2A. Details are not described herein again.

S702: The video playback module of the electronic device 100 plays an SP-A instance video (a source SP instance video) in the aggregated video 1.

Specifically, a video playback application (for example, a "Huawei video" application) may be installed on the electronic device 100. The switching instruction receiving module, the playback authentication module, the program information obtaining module, the continuous playback calculation module, and the video playback module that are included in the electronic device 100 may be included in the application. The electronic device 100 may play each SP instance video (for example, an SP-A instance video) in the aggregated video 1 through the video playback module included in the application.

It is easy to understand that, before playing the source SP instance video, the electronic device 100 may obtain a video resource of the source SP instance video from the server 200 in a pre-download or data request manner.

In this embodiment of this application, an example in which the video playback application is a "Huawei video" application is used. This is not limited thereto, and the video playback application may be another application. This is not limited in embodiments of this application.

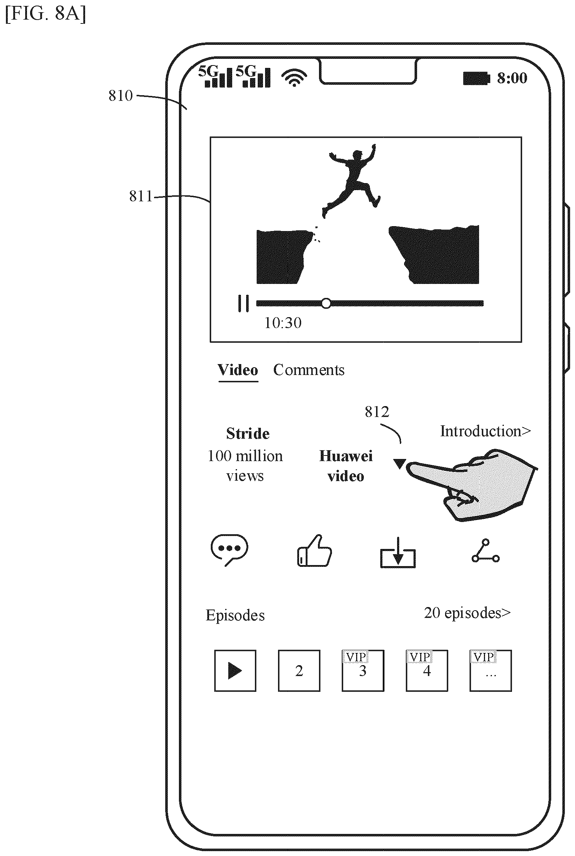

For example, refer to FIG. 8A. FIG. 8A may be a user interface 810 that is used for playing a video and that is provided by the "Huawei video" application. The user interface may include a video playback area 811 and an option 812.

The video playback area 811 may be used to play an SP instance video.

The option 812 may be used by the user to select to play instance videos provided by different SPs.

A video played in the video playback area 811 may be the SP-A instance video in the aggregated video 1. It can be learned that "Huawei video" is used as an example of "SP-A", in other words, the video played in the video playback area 321 is a playback source provided by an SP "Huawei video".

The video playback area 811 may further include a video playback progress bar, and the video playback progress bar may display played duration of a video. It can be seen from the video playback progress bar that played duration of the SP-A instance video in the aggregated video 1 is 10 minutes and 30 seconds.

S703-S704: The video playback module of the electronic device 100 detects an operation of switching, by the user, to play an SP-B instance video (a destination SP instance video) in the aggregated video 1, and in response to the operation, the video playback module of the electronic device 100 sends a switching instruction to the switching instruction receiving module of the electronic device 100, where the instruction includes an ID of the aggregated video 1, played duration of the source SP instance video at switching, identification information of the source SP instance video, and identification information of the destination SP instance video.

To avoid different experience (for example, frame freezing) between video streams of different SPs when the user plays the SP-A instance video, the video playback module of the electronic device 100 may provide an option of selecting to play different SP instance videos for the user, so that the user can actively switch between different SP instance videos for playing.

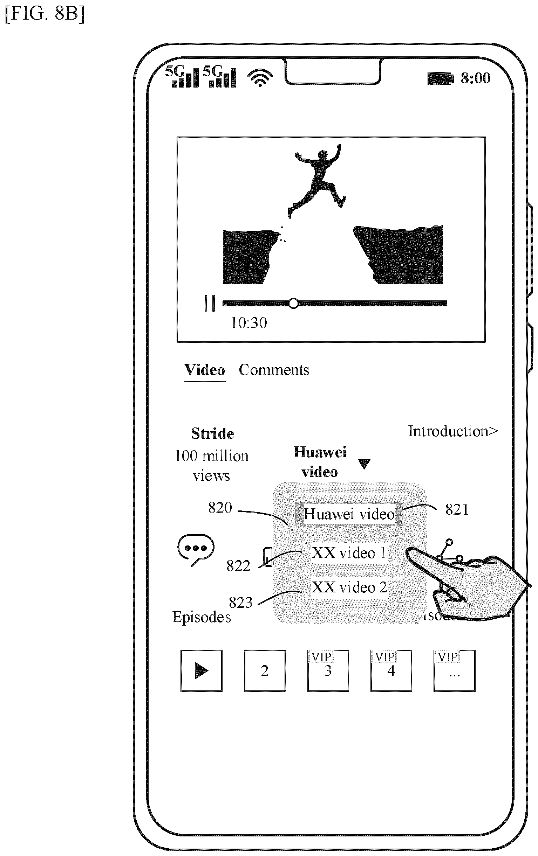

For example, refer to FIG. 8A. The electronic device 100 may detect an operation (for example, a tap operation) performed by the user on the option 812, and in response to the operation, the electronic device 100 may display a window 820 shown in FIG. 8B as an example. The window may include options (for example, an option 821, an option 822, and an option 823) corresponding to a plurality of different SPs (for example, SP-A, SP-B, and SP-C).

For example, SP-A is a "Huawei video", SP-B is an "XX video 1", and SP-C is an "XX video 2". It can be seen from FIG. 8B that a currently played SP instance video in the aggregated video 1 is the SP-A instance video. If the user wants to switch to play the SP-B instance video in the aggregated video 1, the video playback module of the electronic device 100 may detect an operation of switching, by the user, to play the SP-B instance video in the aggregated video 1 (for example, an operation of tapping the option 822), and in response to the operation, the video playback module of the electronic device 100 may send a switching instruction to the switching instruction receiving module of the electronic device 100. The instruction includes the ID of the aggregated video 1, the played duration of the source SP instance video at the switching, the identification information of the source SP instance video, and the identification information of the destination SP instance video.

It can be learned from FIG. 8B that the played duration of the source SP instance video at the switching is 10 minutes and 30 seconds, the identification information of the source SP instance video may be identification information of SP-A (for example, a "Huawei video"), and the identification information of the destination SP instance video may be identification information of SP-B (for example, an "XX video 1").

In this embodiment of this application, the ID of the aggregated video 1, the played duration of the source SP instance video at the switching, the identification information of the source SP instance video, and the identification information of the destination SP instance video may be included in the switching instruction, or may not be included in the switching instruction, but is separately sent by the video playback module. This is not limited herein.

After receiving the switching instruction sent by the video playback module, the switching instruction receiving module of the electronic device 100 may invoke the playback authentication module of the electronic device 100 to perform playback authentication on the destination SP instance video. Further, the playback authentication module of the electronic device 100 may invoke, based on the switching instruction received by the switching instruction receiving module, the program information obtaining module of the electronic device 100 to query information about the destination SP instance video that needs to be authenticated. Further, the program information obtaining module of the electronic device 100 may invoke, based on the ID of the aggregated video 1, the identification information of the source SP instance video, and the identification information of the destination SP instance video that are included in the switching instruction, the program data management service module of the server 200 to query the information about the destination SP instance video that needs to be authenticated. A possible implementation of the foregoing process may be an implementation described in the following steps S705 to S707.

S705-S707: The switching instruction receiving module of the electronic device 100 sends a message 1 to the playback authentication module of the electronic device 100, where the message may include the ID of the aggregated video 1, the played duration of the source SP instance video at the switching, the identification information of the source SP instance video, and the identification information of the destination SP instance video. After receiving the message 1, the playback authentication module of the electronic device 100 may send a message 2 to the program information obtaining module of the electronic device 100, where the message may include the ID of the aggregated video 1, the identification information of the source SP instance video, and the identification information of the destination SP instance video. After receiving the message 2, the program information obtaining module of the electronic device 100 may send a message 3 to the program data management service module of the server 200, where the message may include the ID of the aggregated video 1, the identification information of the source SP instance video, and the identification information of the destination SP instance video.

S708: The program data management service module of the server 200 determines an offset information list of the source SP instance video and an offset information list of the destination SP instance video based on the ID of the aggregated video 1, the identification information of the source SP instance video, and the identification information of the destination SP instance video.

Specifically, after receiving the message 3 sent by the program information obtaining module of the electronic device 100, the program data management service module of the server 200 may find, based on the ID of the aggregated video 1, program information corresponding to all SP instance videos included in the aggregated video. Further, because an offset information list of all SP instance videos included in the aggregated video has been recorded in the process of maintaining the program metadata in step S701, the offset information list of the source SP instance video and the offset information list of the destination SP instance video may be found based on the identification information of the source SP instance video and the identification information of the destination SP instance video.

S709: The program data management service module of the server 200 sends a message 4 to the program information obtaining module of the electronic device 100, where the message includes the offset information list of the source SP instance video and the offset information list of the destination SP instance video.

Specifically, after performing the foregoing step S708, the program data management service module of the server 200 may send the message 4 to the program information obtaining module of the electronic device 100.

S710: The program information obtaining module of the electronic device 100 sends a message 5 to the playback authentication module of the electronic device 100, where the message includes the offset information list of the source SP instance video and the offset information list of the destination SP instance video.

Specifically, after receiving the message 4 sent by the program data management service module of the server 200, the program information obtaining module of the electronic device 100 may send the message 5 to the playback authentication module of the electronic device 100.

S711: The playback authentication module of the electronic device 100 sends a message 6 to the playback authentication service module of the server 200, where the message 6 may be used to confirm playback permission of the user. The message 6 may include the ID of the aggregated video 1, the identification information of the destination SP instance video, and user information 1.

Specifically, after receiving the message 5 sent by the program information obtaining module of the electronic device 100, the playback authentication module of the electronic device 100 may send the message 6 to the playback authentication service module of the server 200.

The user information 1 may be account information used by the user to log in to a video playback application (for example, a "Huawei video" application or an "XX video 1" application). The account information may include but is not limited to a mobile number, an email address, a user-defined user name, and the like.

In some examples, the user information 1 may alternatively be sent in the foregoing step S707. In this case, the playback authentication module of the electronic device 100 does not need to perform the foregoing step S711.

S712: The playback authentication service module of the server 200 determines, based on the ID of the aggregated video 1, the identification information of the destination SP instance video, the user information 1, and an authentication rule, that the user can play the destination SP instance video, and determines a playback address corresponding to the destination SP instance video.

The authentication rule may be preset, and may be used to determine whether the user has permission to play a destination SP instance video.

Specifically, the playback authentication service module of the server 200 may first find program information of the destination SP instance video based on the ID of the aggregated video 1 and the identification information of the destination SP instance video, and further determine, based on the user information 1 and the authentication rule, whether the user can play (that is, whether the user has permission to play) the destination SP instance video. If the playback authentication service module of the server 200 may first find program information of the destination SP instance video and determine that the user can play the destination SP instance video, the playback authentication service module of the server 200 may obtain the playback address corresponding to the destination SP instance video from the found program information of the destination SP instance video.

For example, it is assumed that the authentication rule specifies that, for the destination SP instance video, only a user who subscribes to a membership of the SP has permission to play the destination SP instance video. If it is determined based on the user information 1 that the user is a member user of the SP, it may be further determined that the user can play the SP instance video; or if it is determined that the user is a non-member user of the SP, it may be further determined that the user cannot play the SP instance video, and subsequent steps are not performed.

S713: The playback authentication service module of the server 200 sends a message 7 to the playback authentication module of the electronic device 100, where the message includes the playback address corresponding to the destination SP instance video.

Specifically, after performing the foregoing step S712, the playback authentication service module of the server 200 may send the message 7 to the playback authentication module of the electronic device 100.

S714: The playback authentication module of the electronic device 100 sends a message 8 to the continuous playback calculation module of the electronic device 100, where the message includes the played duration of the source SP instance video at the switching, the offset information list of the source SP instance video, the offset information list of the destination SP instance video, and the playback address corresponding to the destination SP instance video.

Specifically, after receiving the message 7 sent by the playback authentication service module of the server 200, the playback authentication module of the electronic device 100 may send the message 8 to the continuous playback calculation module of the electronic device 100. The message 8 indicates the continuous playback calculation module to calculate playback start location information of the destination SP instance video.

S715: The continuous playback calculation module of the electronic device 100 determines the playback start location information of the destination SP instance video based on the played duration of the source SP instance video at the switching, the offset information list of the source SP instance video, and the offset information list of the destination SP instance video.

Specifically, after receiving the message 8 sent by the playback authentication module of the electronic device 100, the continuous playback calculation module of the electronic device 100 may determine the playback start location information of the destination SP instance video based on the played duration of the source SP instance video at the switching, the offset information list of the source SP instance video, and the offset information list of the destination SP instance video that are included in the message.

The following describes in detail a specific process that "the continuous playback calculation module of the electronic device 100 determines the playback start location information of the destination SP instance video based on the played duration of the source SP instance video at the switching, the offset information list of the source SP instance video, and the offset information list of the destination SP instance video".

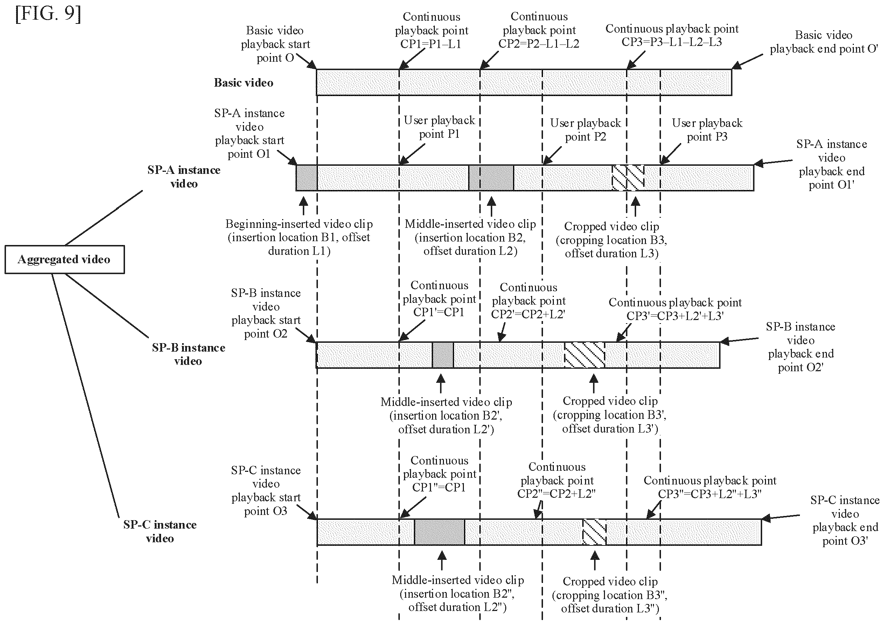

For example, refer to FIG. 9. FIG. 9 is a principle diagram of performing continuous playback calculation in a scenario of "switching an SP instance video (a source SP instance video) to another SP instance video (a destination SP instance video) in an aggregated video" according to an embodiment of this application.

As shown in FIG. 9, it is assumed that the aggregated video includes an SP-A instance video, an SP-B instance video, and an SP-C instance video. The SP-A instance video, the SP-B instance video, and the SP-C instance video are obtained by inserting some clips into/cropping some clips from the basic video shown in FIG. 9 by different SPs due to an operation reason. Duration of the basic video is a time difference between a playback end point O' of the basic video and a playback start point O of the basic video.

The "played duration of the source SP instance video at switching" may be determined based on a user playback point Pi (a time point of a playback progress of the source SP instance video in a case in which the user performs a switching action), where i is a positive integer. For example, if the user playback point Pi is 10:30, the played duration of the source SP instance video at the switching is 10 minutes and 30 seconds.

The "offset information list of the source SP instance video" may be determined based on a start location of the clip inserted into/cropped from the basic video and offset duration. The offset information list of the source SP instance video is recorded in the process of maintaining the program metadata. For example, the source SP instance video is an SP-A instance video. It can be seen that the SP-A instance video is obtained by inserting two clips (a beginning-inserted video clip and a middle-inserted video clip) into the basic video and cropping a clip (a cropped video clip) from the basic video. An insertion location of the beginning-inserted video clip is B1 and offset duration is L1. An insertion location of the middle-inserted video clip is B2 and offset duration is L2. A cropping location of the cropped video clip is B3 and offset duration is L3. Therefore, an offset information list of the SP-A instance video may be represented as {$\delta 1$ (B1, L1), $\delta 1$ (B2, L2), $\delta 1$(B3, L3)}.

The "offset information list of the destination SP instance video" may be determined based on the start location of the clip inserted into/cropped from the basic video and the offset duration. The offset information list of the destination SP instance video is recorded in the process of maintaining the program metadata. For example, the destination SP instance video is an SP-B instance video. It can be seen that the SP-B instance video is obtained by inserting a clip (a middle-inserted video clip) into the basic video and cropping a clip (a cropped video clip) from the basic video. An insertion location of the middle-inserted video clip is B2' and offset duration is L2'. A cropping location of the cropped video clip is B3' and offset duration is L3'. Therefore, an offset information list of the SP-B instance video may be represented as {$\delta 2$(B2', L2'), $\delta 2$(B3', L3')}.

The continuous playback calculation module may first determine the user playback point Pi in the source SP instance video based on the played duration of the source SP instance video at the switching, determine whether a clip is inserted into/cropped from the source SP instance video before a location of the user playback point Pi, and then determine a continuous playback point of the basic video based on the user playback point Pi and the offset information list of the source SP instance video.

In some examples, the "played duration of the source SP instance video at switching" in the foregoing steps may be replaced with the "user playback point Pi". In this way, the continuous playback calculation module does not need to determine the user playback point Pi based on the played duration of the source SP instance video at the switching.

"Whether a clip is inserted/cropped before a location of the user playback point Pi in the source SP instance video" may be comprehensively determined based on the user playback point Pi, an insertion location/a cropping location of a clip inserted/cropped for the source SP instance video, and offset duration. For example, it is assumed that offset information of an inserted clip 1 is $\delta$ (00:00, 10s), offset information of an inserted clip 2 is $\delta$ (10:00, 20s), offset information of a cropped clip 1 is $\delta$ (20:00, -10s) in the source SP instance video. If the user playback point Pi is 6:00, played duration of the source SP instance video is 6 minutes. Because offset duration of the inserted clip 1 is 10s and is less than 6 minutes, and both an insertion location 10:00 of the inserted clip 2 and a cropping location 20:00 of the cropped clip 1 are after 6:00, only one clip is inserted before the location of the user playback point Pi: the inserted clip 1. If the user playback point Pi is 15:00, played duration of the source SP instance video is 15 minutes. Because a location obtained by adding up offset duration of the inserted clip 1 and an insertion location 10:00 of the inserted clip 2 is 10:10 and is still before 15:00, and a cropping location 20:00 of the cropped clip 1 is after 15:00, two clips are inserted before the location of the user playback point Pi: the inserted clip 1 and the inserted clip 2. If the user playback point Pi is 25:00, played duration of the source SP instance video is 25 minutes. Because a location obtained by adding up offset duration of the inserted clip 1, offset duration of the inserted clip 2, and a cropping location 20:00 of cropped clip 2 is 20:30 and is still before 25:00, and a cropping location 20:00 of the cropped clip 1 is before 25:00, two clips are inserted before the location of the user playback point Pi: the inserted clip 1 and the inserted clip 2, and a clip is cropped: the cropped clip 1.

A process of "determining a continuous playback point of the basic video based on the user playback point Pi and the offset information list of the source SP instance video" is as follows: It is assumed that a user playback point is P. In this case, a continuous playback point CP of the basic video is $CP = P - \sum_{i=1}^{n} L_i$, where n is a total quantity of clips inserted into and cropped from the source SP instance video before a location of the user playback point P, and $L_i$ is offset duration of an ith clip inserted into/cropped from the source SP instance video before the location of the user playback point P.

Specially, when the user playback point P is in a beginning-inserted clip (that is, the user performs a switching operation in a process of playing the beginning-inserted clip), the calculated CP is less than 0. In this case, 0 may be assigned to CP. When the user playback point P is in a middle-inserted clip (that is, the user performs a switching operation in a process of playing the middle-inserted clip), it is easy to understand that the middle-inserted clip is the last clip inserted into the source SP instance video before the location of the user playback point P, namely, an $n^{th}$ clip. In this case, Ln is not offset duration of the middle-inserted clip but played duration of the middle-inserted clip at the user playback point P.

For example, refer to FIG. 9. The source SP instance video is an SP-A instance video, and a continuous playback point, corresponding to a user playback point P1, of the basic video is CP1. It can be seen that a clip (a beginning-inserted video clip) is inserted into the source SP instance video before a location of P1. In this case, a continuous playback point of the basic video is CP1=P1-L1. A continuous playback point, corresponding to a user playback point P2, of the basic video is CP2. It can be seen that two clips (a beginning-inserted video clip and a middle-inserted video clip) are inserted into the source SP instance video before a location of P2. In this case, the continuous playback point of the basic video is CP2=P2-L1-L2. A continuous playback point, corresponding to a user playback point P3, of the basic video is CP3. It can be seen that two clips (a beginning-inserted video clip and a middle-inserted video clip) are inserted into the source SP instance video before a location of P3 and one clip (a cropped video clip) is cropped. In this case, the continuous playback point of the basic video is CP3=P3-L1-L2-L3. It is easy to understand that offset duration of the inserted clip is a positive number, and offset duration of the cropped clip is a negative number.

After the continuous playback point of the basic video is determined, it needs to be determined whether a clip is inserted into/cropped from the destination SP instance video before a location of the continuous playback point of the basic video. If a clip is inserted/cropped, a continuous playback point of the destination SP instance video is a point obtained by adding up the continuous playback point of the basic video and offset duration of all clips inserted/cropped before the location of the continuous playback point of the basic video. If no clip is inserted/cropped, a continuous playback point of the destination SP instance video is the continuous playback point of the basic video.

To be specific, it is assumed that the continuous playback point of the basic video is CP. In this case, a continuous playback point CP' of the destination SP instance video is

$$CP'=CP+\sum_{i=1}^{n} L_i$$, where n is a total quantity of clips inserted into and cropped from the destination SP instance video before the location of the continuous playback point of the basic video, and $L_i$ is offset duration of an

$i^{th}$ clip inserted into/cropped from the destination SP instance video before the location of the continuous playback point of the basic video.

For example, refer to FIG. 9. The destination SP instance video is an SP-B instance video, and a continuous playback point, corresponding to a user playback point P1, of the basic video is CP1. It can be seen that no clip is inserted into/cropped from the destination SP instance video before a location of CP1. In this case, a continuous playback point of the destination SP instance video is CP1'=CP1. A continuous playback point, corresponding to a user playback point P2, of the basic video is CP2. It can be seen that a clip (a middle-inserted video clip) is inserted into the destination SP instance video before a location of CP2. In this case, a continuous playback point of the destination SP instance video is CP2'=CP2+L2'. A continuous playback point, corresponding to a user playback point P3, of the basic video is CP3. It can be seen that a clip (a middle-inserted video clip) is inserted into the destination SP instance video before a location of CP3 and a clip (a cropped video clip) is cropped. In this case, a continuous playback point of the destination SP instance video is CP3'=CP3+L2'+L3'. It is easy to understand that offset duration of the inserted clip is a positive number, and offset duration of the cropped clip is a negative number.

A process of "determining whether a clip is inserted into/cropped from the destination SP instance video before a location of the continuous playback point of the basic video" is as follows: If an insertion location or a cropping location, of the clip inserted into/cropped from the basic video, recorded in the offset information list of the destination SP instance video is before the location of the continuous playback point of the basic video, it is determined that a clip is inserted/cropped for the destination SP instance video before the location of the continuous playback point of the basic video.

It is easy to understand that, that the clip is inserted/cropped for the destination SP instance video before the location of the continuous playback point of the basic video means that the clip is inserted/cropped before the location of the continuous playback point of the destination SP instance video; and that no clip is inserted/cropped for the destination SP instance video before the location of the continuous playback point of the basic video means that no clip is inserted/cropped before the location of the continuous playback point of the destination SP instance video.

Refer to FIG. 9. An offset information list of the SP-C instance video may be represented as {δ(B2", L2"), δ(B3", L3")}. Duration of the SP-C instance video is a time difference between a playback end point O3' of the SP-C instance video and a playback start point O3 of the SP-C instance video. Similarly, a continuous playback point of the SP-C instance video may also be calculated according to the foregoing manner of calculating the continuous playback point of the SP-B instance video. It is easy to understand that, when a user playback point is P1, a continuous playback point of the SP-C instance video is CP1"=CP1; when a user playback point is P2, a continuous playback point of the SP-C instance video is CP2"=CP2+L2"; or when a user playback point is P3, a continuous playback point of the SP-C instance video is CP3"=CP3+L2"+L3".

In conclusion, it is assumed that the user playback point is P (a time point of a playback progress of the source SP instance video in a case in which the user performs a switching action), the continuous playback point of the basic video is CP, and the continuous playback point of the destination SP instance video is CP'. In this case, $\mathrm{CP'=CP}+\sum_{i=1}^{n} L_i =P- \sum_{b=1}^{a} L_b+\sum_{i=1}^{n} L_i$ , where a is the total quantity of clips inserted into and cropped from the source SP instance video before the location of the user playback point P, $L_b$ is offset duration of a $b^{th}$ clip inserted into/cropped from the source SP instance video before the location of the user playback point P, n is a total quantity of clips inserted into and cropped from the destination SP instance video before a location of the continuous playback point CP of the basic video, and $L_i$ is offset duration of an $i^{th}$ clip inserted into/cropped from the destination SP instance video before the location of the continuous playback point CP of the basic video.

S716: The continuous playback calculation module of the electronic device 100 sends a message 9 to the video playback module of the electronic device 100, where the message includes the playback start location information of the destination SP instance video and the playback address.

Specifically, after performing the foregoing step S715, the continuous playback calculation module of the electronic device 100 may send the message 9 to the video playback module of the electronic device 100. The message 9 indicates the video playback module of the electronic device 100 to obtain video stream data after a playback start location of the destination SP instance video.

S717: The video playback module of the electronic device 100 sends a message 10 to the streaming media service module of the server 200, where the message includes the playback start location information of the destination SP instance video and the playback address.

Specifically, after receiving the message 9 sent by the continuous playback calculation module of the electronic device 100, the video playback module of the electronic device 100 may send the message 10 to the streaming media service module of the server 200, so as to obtain the video stream data after the playback start location of the destination SP instance video from the streaming media service module of the server 200.

S718-S720: The streaming media service module of the server 200 searches for the video stream data after the playback start location of the destination SP instance video based on the playback start location information of the destination SP instance video and the playback address. Then, the streaming media service module of the server 200 may send a message 11 to the video playback module of the electronic device 100, where the message includes the video stream data after the playback start location of the destination SP instance video. Then, the video playback module of the electronic device 100 may play, based on the video stream data after the playback start location of the destination SP instance video, a part after the playback start location of the destination SP instance video.

For example, it is assumed that the played duration of the source SP instance video at the switching is 10 minutes and 30 seconds. In this case, the user playback point P (the time point of the playback progress of the source SP instance video in the case in which the user performs the switching action) is 10:30, and the continuous playback point CP' (the playback start location information of the destination SP instance video) of the destination SP instance video is $\mathrm{CP'=P}-\sum_{b=1}^{a} L_b+\sum_{i=1}^{n} L_i=\mathrm{P}-(\sum_{b=1}^{a} L_b - \sum_{i=1}^{n} L_i)$ , where a is a total quantity of clips inserted into/cropped from the source SP instance video before the location of the user playback point P, $L_b$ is the offset duration of the $b^{th}$ clip inserted into/cropped from the source SP instance video before the location of the user playback point P, n is a total quantity of clips inserted into/cropped from the destination SP instance video before the location of the continuous playback point CP of the basic video, $L_i$ is the offset duration of the $i^{th}$ clip inserted into/cropped from the destination SP instance video before the location of the continuous playback point CP of the basic video.

1. In a case in which $\sum_{b=1}^{a} L_b - \sum_{i=1}^{n} L_i$ is 0, the continuous playback point CP' of the destination SP instance video is the same as the user playback point P, that is, both are 10:30.

For example, the destination SP instance video may be an instance video provided by an SP "XX video 1". The playback start location (the continuous playback point of the destination SP instance video) of the destination SP instance video is 10:30, that is, a location, of an image played in the source SP instance video when the user performs a switching operation, in the destination SP instance video is 10:30. Further, the electronic device 100 may continue to play, at 10:30 based on the obtained video stream data after the playback start location of the destination SP instance video, a part after the playback start location of the destination SP instance video.

2. In a case in which $\sum_{b=1}^{a} L_b - \sum_{i=1}^{n} L_i$ is not 0, the continuous playback point CP' of the destination SP instance video is different from the user playback point P.

It is assumed that $\sum_{b=1}^{a} L_b - \sum_{i=1}^{n} L_i$ is 20 seconds in a case in which $\sum_{b=1}^{a} L_b - \sum_{i=1}^{n} L_i$ is greater than 0. In this case, the continuous playback point CP' of the destination SP instance video is CP'=10:30-20=10:10.

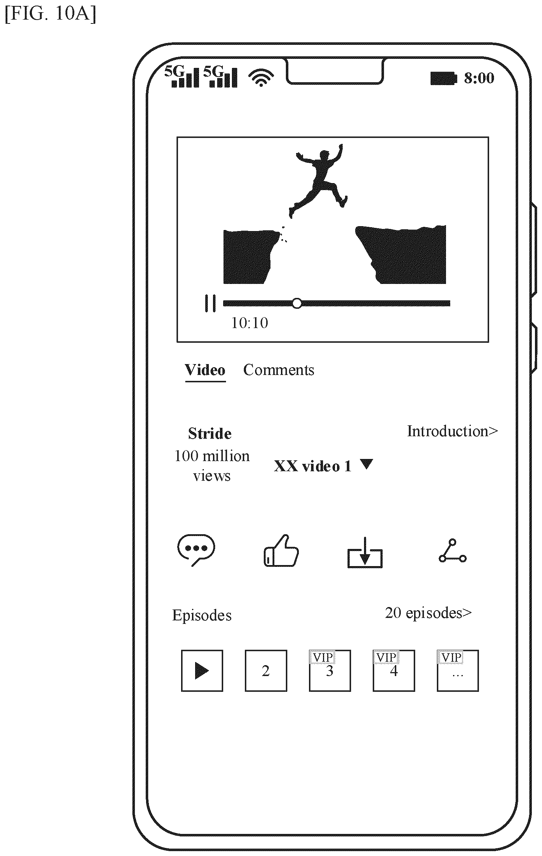

For example, refer to FIG. 10A. A user interface shown in FIG. 10A may be a user interface displayed when the user continues to play a destination SP instance video after performing a switching operation. For example, the destination SP instance video may be an instance video provided by the SP "XX video 1". It can be learned that a playback start location of the destination SP instance video (a continuous playback point of the destination SP instance video) is 10:10, in other words, a location, of an image played in the source SP instance video when the user performs the switching operation, in the destination SP instance video is 10:10. Further, the electronic device 100 may continue to play, at 10:10 based on the obtained video stream data after the playback start location of the destination SP instance video, a part after the playback start location of the destination SP instance video.

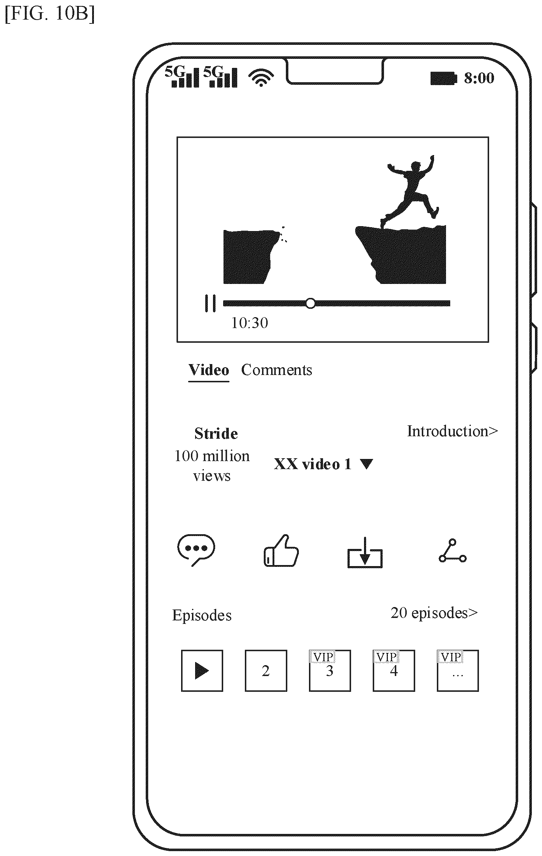

It is easy to understand that, in the case in which $\sum_{b=1}^{a} L_b - \sum_{i=1}^{n} L_i$ is greater than 0, if impact of offset duration of the inserted/cropped clip on calculation of the continuous playback point is not considered during calculation of the continuous playback point of the destination SP instance video, the calculated continuous playback point of the destination SP instance video is the same as the user playback point and is still 10:30. In this case, a continuous playback start image is an image corresponding to 10:30 in the destination SP instance video (for example, an image shown in FIG. 10B), and is inconsistent with an image played in the source SP instance video (for example, an image corresponding to 10:10 in the destination SP instance video shown in FIG. 10A). This cannot implement continuity of video playback before and after switching, resulting in poor user experience.

The foregoing describes the case in which $\sum_{b=1}^{a} L_b - \sum_{i=1}^{n} L_i$ is greater than 0 by using an example in which the destination SP instance video is an instance video provided by the SP "XX video 1". The following describes a case in which $\sum_{b=1}^{a} L_b - \sum_{i=1}^{n} L_i$ is less than 0 by using an example in which the destination SP instance video is an instance video provided by an SP "XX video 2".

It is easy to understand that, when the destination SP instance video is an instance video provided by the SP "XX video 2", the foregoing step S703 may be: The video playback module of the electronic device 100 detects an operation of switching, by the user, to play the SP-C instance video in the aggregated video 1 (for example, an operation of tapping the option 823 shown in FIG. 8B).

It is assumed that $\sum_{b=1}^{a} L_b - \sum_{i=1}^{n} L_i$ is -30 seconds. In this case, the continuous playback point CP' of the destination SP instance video is CP'=10:30+30=11:00.

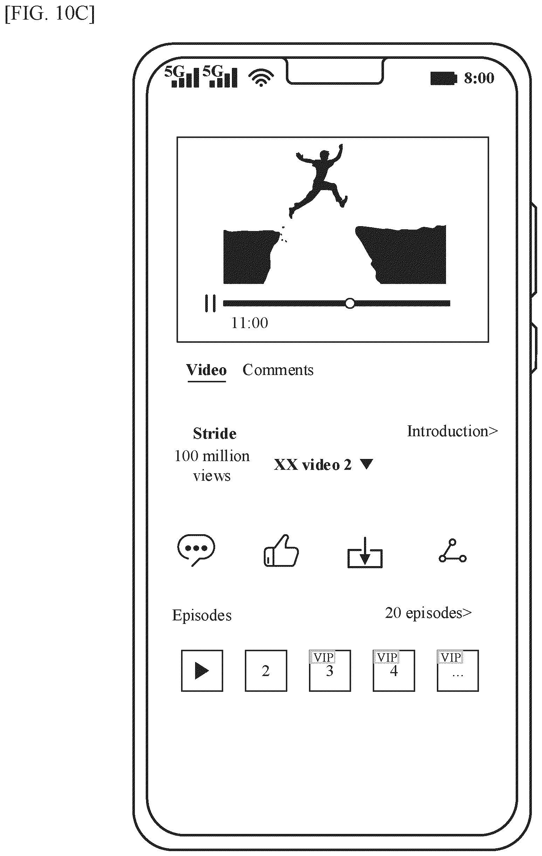

For example, refer to FIG. 10C. A user interface shown in FIG. 10C may be a user interface displayed when the user continues to play a destination SP instance video after performing a switching operation. For example, the destination SP instance video may be an instance video provided by the SP "XX video 2". It can be learned that a playback start location of the destination SP instance video (a continuous playback point of the destination SP instance video) is 11:00, in other words, a location, of an image played in the source SP instance video when the user performs the switching operation, in the destination SP instance video is 11:00. Further, the electronic device 100 may continue to play, at 10:50 based on the obtained video stream data after the playback start location of the destination SP instance video, a part after the playback start location of the destination SP instance video.

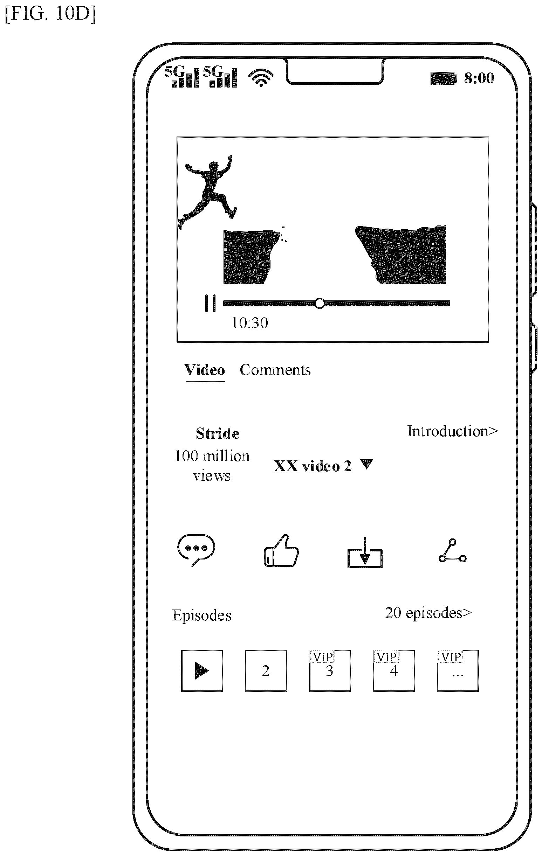

It is easy to understand that, in the case in which $\sum_{b=1}^{a} L_b - \sum_{i=1}^{n} L_i$ is less than 0, if impact of offset duration of the inserted/cropped clip on calculation of the continuous playback point is not considered during calculation of the continuous playback point of the destination SP instance video, the calculated continuous playback point of the destination SP instance video is the same as the user playback point and is still 10:30. In this case, a continuous playback start image is an image corresponding to 10:30 in the destination SP instance video (for example, an image shown in FIG. 10D). Therefore, the user needs to continue to play the video for 30 seconds to display an image played in the source SP instance video when the user performs the switching operation (for example, an image corresponding to 11:00 in the destination SP instance video shown in FIG. 10C). It is easy to understand that this 30-second video is played before the user performed the switching operation. This cannot implement continuity of video playback before and after switching, resulting in poor user experience.

Scenario 2: switching an SP instance video (a source SP instance video) to another SP instance video (a destination SP instance video) in an aggregated video

The following describes a specific execution process of a video processing method in a scenario of switching an SP instance video (a source SP instance video) to another SP instance video (a destination SP instance video) in an aggregated video according to an embodiment of this application.

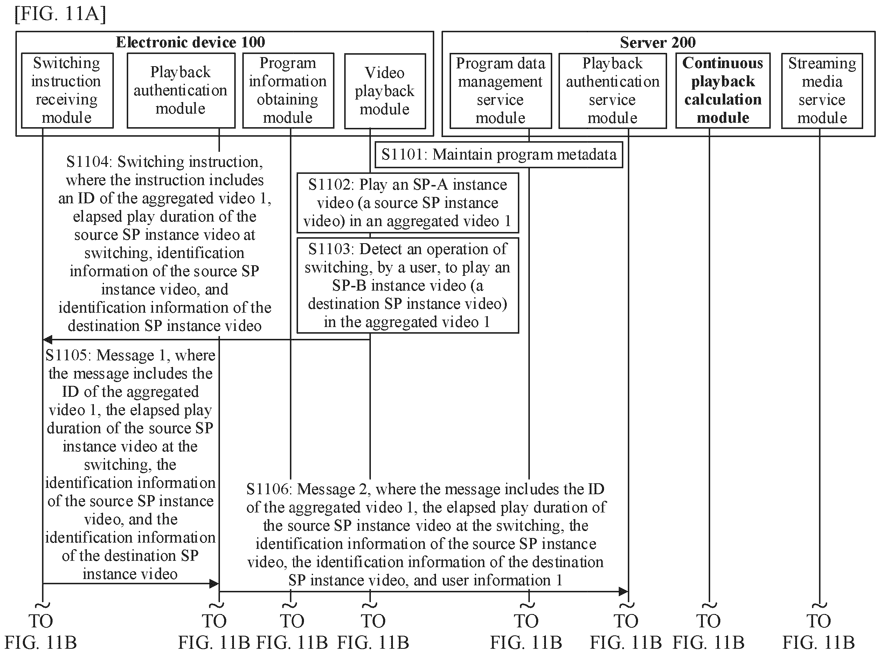

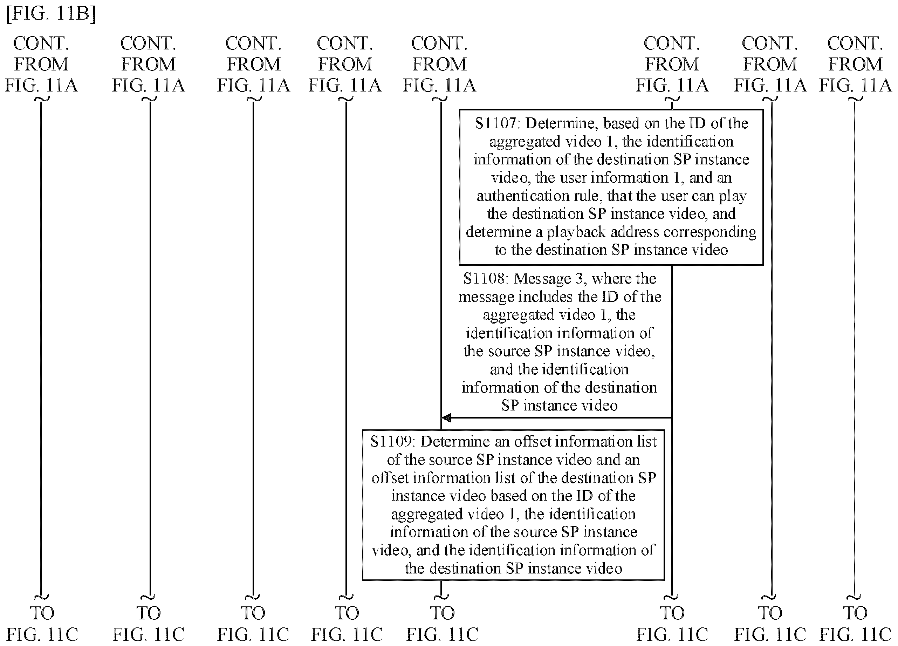

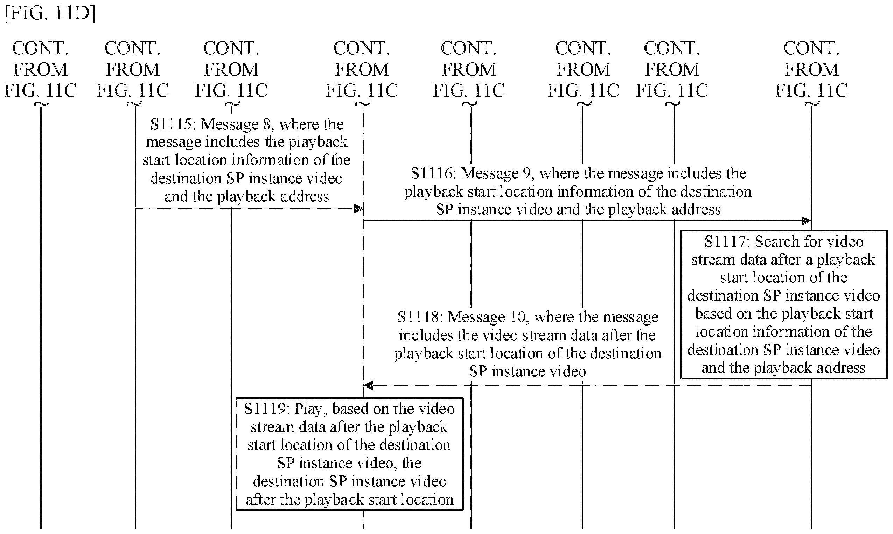

FIG. 11A to FIG. 11D show an example of a specific procedure of another video processing method in a scenario of switching an SP instance video (a source SP instance video) to another SP instance video (a destination SP instance video) in an aggregated video according to an embodiment of this application.

As shown in FIG. 11A to FIG. 11D, the method may be applied to the communication system including the electronic device 100 and the server 200. The electronic device 100 may include a switching instruction receiving module, a playback authentication module, a program information obtaining module, and a video playback module. The server 200 may include a program data management service module, a playback authentication service module, a continuous playback calculation module, and a streaming media service module. Different from the continuous playback calculation module in FIG. 7A, the continuous playback calculation module in FIG. 11A is included in the server 200 instead of the electronic device 100. The following describes in detail specific steps of the method.

S1101: The program data management service module of the server 200 maintains program metadata.

S1102: The video playback module of the electronic device 100 plays an SP-A instance video (a source SP instance video) in the aggregated video 1.

S1103-S1104: The video playback module of the electronic device 100 detects an operation of switching, by the user, to play an SP-B instance video (a destination SP instance video) in the aggregated video 1, and in response to the operation, the video playback module of the electronic device 100 sends a switching instruction to the switching instruction receiving module of the electronic device 100, where the instruction includes an ID of the aggregated video 1, played duration of the source SP instance video at switching, identification information of the source SP instance video, and identification information of the destination SP instance video.

S1105: The switching instruction receiving module of the electronic device 100 sends a message 1 to the playback authentication module of the electronic device 100, where the message may include the ID of the aggregated video 1, the played duration of the source SP instance video at the switching, the identification information of the source SP instance video, and the identification information of the destination SP instance video.

Step S1101 to step S1105 are similar to step S701 to step S705 shown in FIG. 7A. For a specific execution process, refer to related content of step S701 to step S705 shown in FIG. 7A. Details are not described herein again.

S1106: The playback authentication module of the electronic device 100 sends a message 2 to the playback authentication module of the server 200, where the message may include the ID of the aggregated video 1, the played duration of the source SP instance video at the switching, the identification information of the source SP instance video, the identification information of the destination SP instance video, and user information 1.

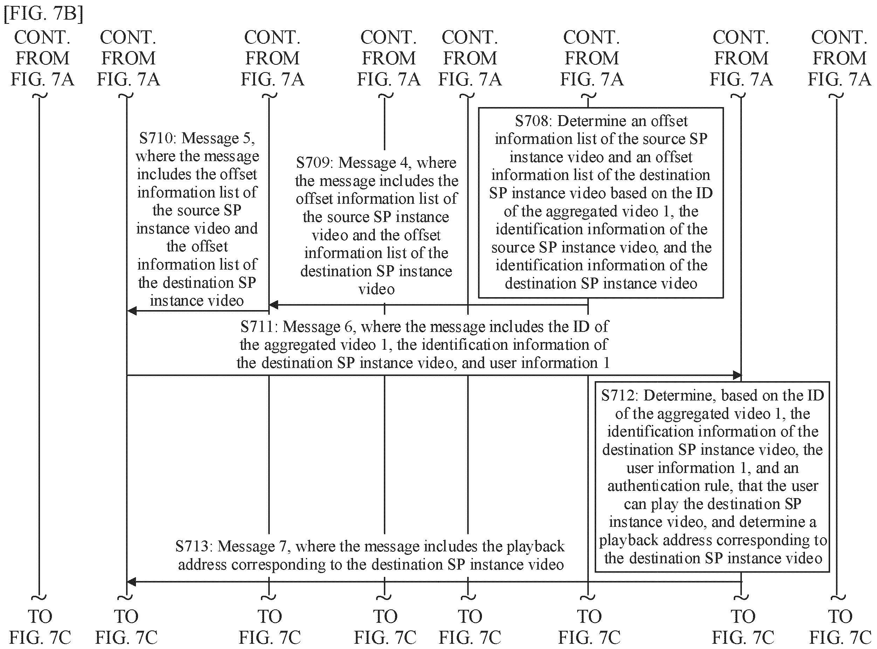

The user information 1 is the same as the user information 1 in step S711 in FIG. 7B. Details are not described herein again.

The message 2 may be directly sent by the playback authentication module of the electronic device 100 to the playback authentication module of the server 200, or may be sent by the playback authentication module of the electronic device 100 to the playback authentication module of the server 200 through the program information obtaining module of the electronic device 100. This is not limited in embodiments of this application.

S1107: The playback authentication service module of the server 200 determines, based on the ID of the aggregated video 1, the identification information of the destination SP instance video, the user information 1, and an authentication rule, that the user can play the destination SP instance video, and determines a playback address corresponding to the destination SP instance video.

Step S1107 is similar to step S712 shown in FIG. 7B. For a specific execution process, refer to related content of step S712 shown in FIG. 7B. Details are not described herein again.

S1108: The playback authentication service module of the server 200 sends a message 3 to the program data management service module of the server 200, where the message includes the ID of the aggregated video 1, the identification information of the source SP instance video, and the identification information of the destination SP instance video.

S1109: The program data management service module of the server 200 determines an offset information list of the source SP instance video and an offset information list of the destination SP instance video based on the ID of the aggregated video 1, the identification information of the source SP instance video, and the identification information of the destination SP instance video.

Step S1109 is similar to step S708 shown in FIG. 7B. For a specific execution process, refer to related content of step S708 shown in FIG. 7B. Details are not described herein again.

S1110: The program data management service module of the server 200 sends a message 4 to the playback authentication service module of the server 200, where the message includes the offset information list of the source SP instance video and the offset information list of the destination SP instance video.

Specifically, after performing the foregoing step S1109, the program data management service module of the server 200 may send the message 4 to the playback authentication service module of the server 200.

S1111: The playback authentication module of the server 200 sends a message 5 to the continuous playback calculation module of the server 200, where the message includes the played duration of the source SP instance video at the switching, the offset information list of the source SP instance video, and the offset information list of the destination SP instance video.

Specifically, after receiving the message 4 sent by the program data management service module of the server 200, the playback authentication module of the server 200 may send the message 5 to the continuous playback calculation module of the server 200.

S1112: The continuous playback calculation module of the server 200 determines playback start location information of the destination SP instance video based on the played duration of the source SP instance video at the switching, the offset information list of the source SP instance video, and the offset information list of the destination SP instance video.

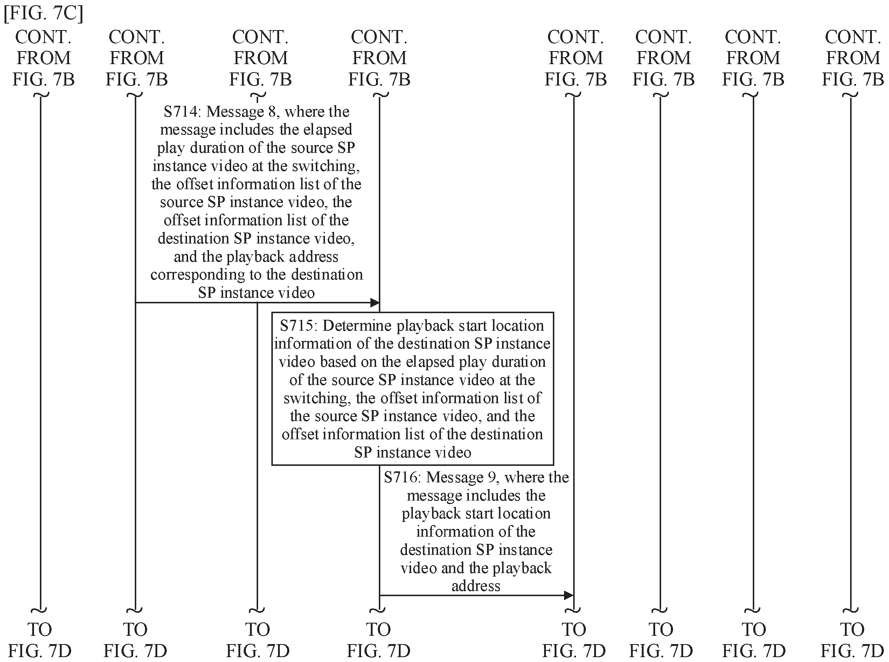

Step S1112 is similar to step S715 shown in FIG. 7C. For a specific execution process, refer to related content of step S715 shown in FIG. 7C. Details are not described herein again.

S1113: The continuous playback calculation module of the server 200 sends a message 6 to the playback authentication module of the server 200, where the message includes the playback start location information of the destination SP instance video.

Specifically, after performing the foregoing step S1102, the continuous playback calculation module of the server 200 may send the message 6 to the playback authentication module of the server 200.

S1114: The playback authentication module of the server 200 sends a message 7 to the playback authentication module of the electronic device 100, where the message includes the playback start location information of the destination SP instance video and the playback address.

Specifically, after receiving the message 6 sent by the continuous playback calculation module of the server 200, the playback authentication service module of the server 200 may send the message 7 to the playback authentication module of the electronic device 100.

S1115: The playback authentication module of the electronic device 100 sends a message 8 to the video playback module of the electronic device 100, where the message includes the playback start location information of the destination SP instance video and the playback address.

Specifically, after receiving the message 7 sent by the playback authentication service module of the server 200, the playback authentication module of the electronic device 100 may send the message 8 to the video playback module of the electronic device 100. The message 8 indicates the video playback module of the electronic device 100 to obtain video stream data after a playback start location of the destination SP instance video.

S1116: The video playback module of the electronic device 100 sends a message 9 to the streaming media service module of the server 200, where the message includes the playback start location information of the destination SP instance video and the playback address.

S1117-S1119: The streaming media service module of the server 200 searches for the video stream data after the playback start location of the destination SP instance video based on the playback start location information of the destination SP instance video and the playback address. Then, the streaming media service module of the server 200 may send a message 10 to the video playback module of the electronic device 100, where the message includes the video stream data after the playback start location of the destination SP instance video. Then, the video playback module of the electronic device 100 may play, based on the video stream data after the playback start location of the destination SP instance video, a part after the playback start location of the destination SP instance video.

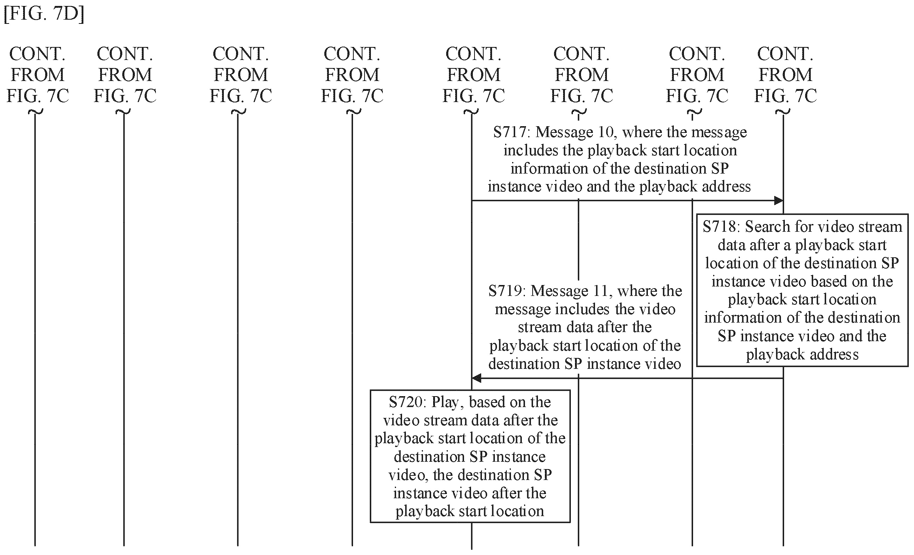

Step S1116 to step S1119 are similar to step S717 to step S720 shown in FIG. 7D. For a specific execution process, refer to related content of step S717 to step S720 shown in FIG. 7D. Details are not described herein again.

By implementing the method in the embodiment shown in FIG. 7A to FIG. 7D or FIG. 11A to FIG. 11D, during operation of the aggregated video, offset information corresponding to a clip inserted into/cropped from the basic video for each SP instance video may be additionally recorded in metadata of the SP instance video. After detecting an operation of switching, by the user, a source SP instance video to a destination SP instance video in the aggregated video, the electronic device 100 can accurately calculate a continuous playback point of the destination SP instance video based on the recorded parameters such as the offset information of the source SP instance video and the offset information of the destination SP instance video. In this case, when one or more different clips are inserted into/cropped from the basic video for the source SP instance video and the destination SP instance video, an image played in the source SP instance video when the user performs the switching operation can still be accurately located in the destination SP instance video, and continuous playback is performed, to ensure continuity of video playback before and after switching. This improves user experience.

It can be easily learned from a principle diagram of continuous playback calculation shown in FIG. 4 or FIG. 9 that, it is assumed that the electronic device plays a video (for example, a clip video/a source SP instance video); at a playback point 1 (for example, a first time point) of the video, the electronic device 100 displays a user interface (for example, a second user interface), where the user interface includes an image (an image 1, for example, a first image) of the video; and at a playback point 2 (which may be referred to as a third time point) of the video, the electronic device 100 displays another user interface (which may be referred to as a third user interface), where the user interface includes another image (an image 2 that may be referred to as a second image) of the video. A time interval between the playback point 1 and the playback point 2 is an interval 1 (which may be referred to as a first interval). A playback progress corresponding to the image 1 in the basic video is CP1 (which may be referred to as a fifth time point). A playback progress corresponding to the image 2 in the basic video is CP2 (which may be referred to as a fourth time point). A time interval between the CP1 and the CP2 is an interval 2 (which may be referred to as a second interval). One or more clips are inserted and/or cropped during a time period between the playback point 1 and the playback point 2 of the video. In this case, when a sum of offset duration of the one or more clips is not 0, the interval 1 and the interval 2 are different.

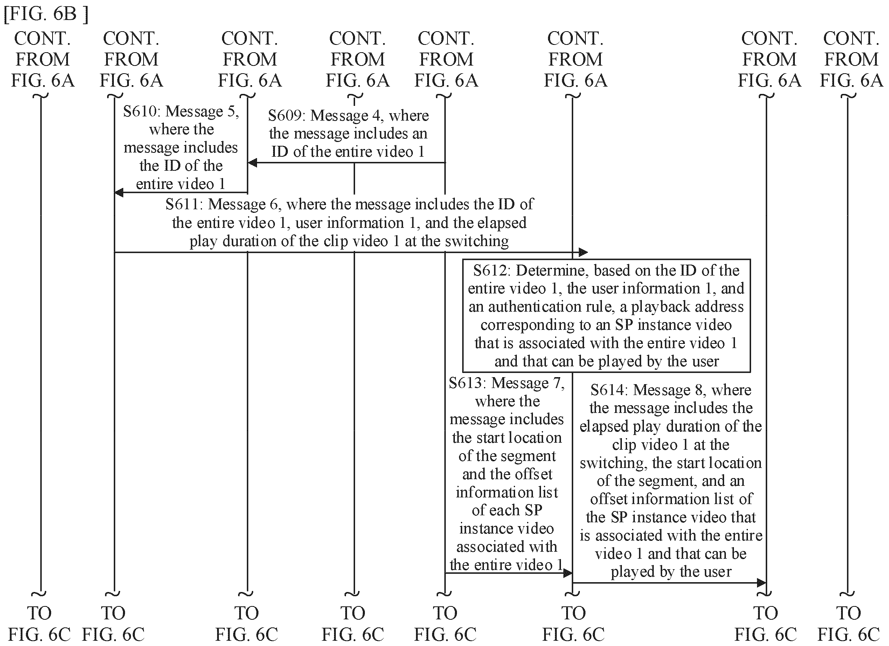

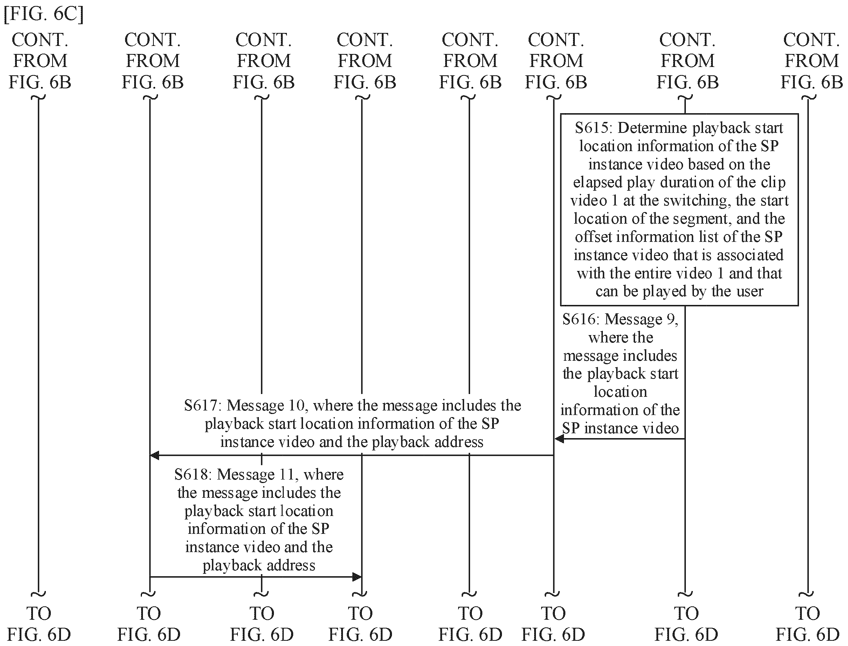

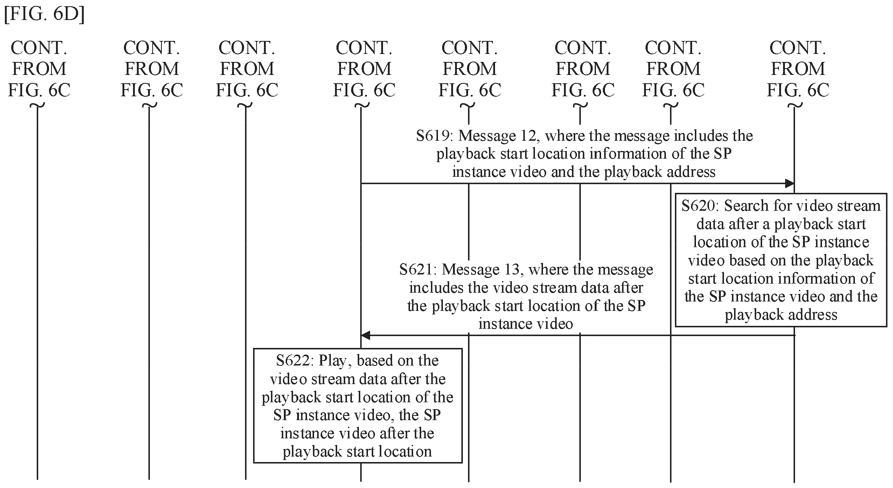

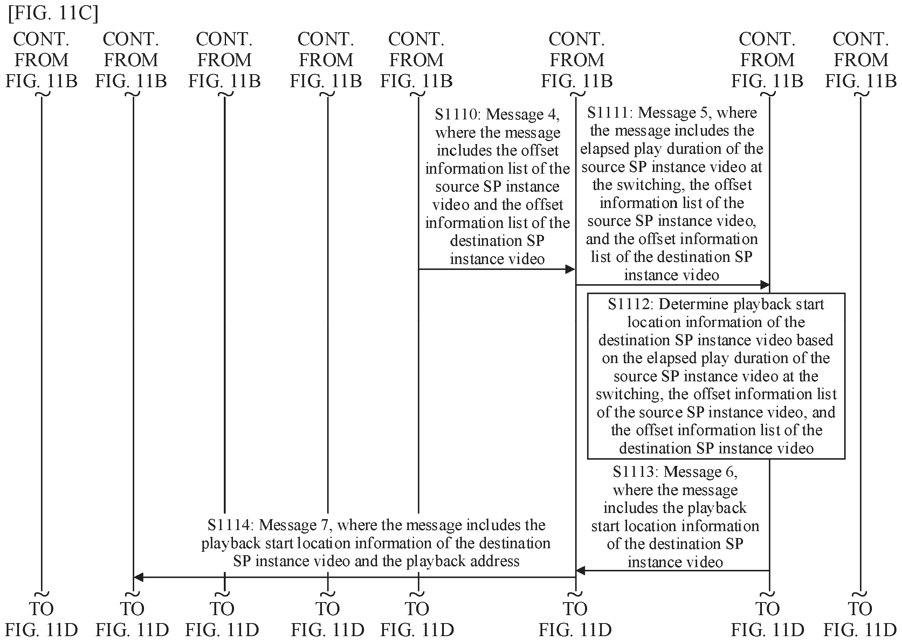

In embodiments of this application, the electronic device may be the electronic device 100, and the server may be the server 200. The first video may be a clip video or a source SP instance video. The first user interface may be a user interface for playing a clip video (for example, a user interface shown in FIG. 3B, FIG. 3C, FIG. 3D, or FIG. 3E) or a user interface for playing a source SP instance video (for example, a user interface shown in FIG. 8B). The first image may be an image of a clip video (for example, an image of a played clip video shown in FIG. 3B, FIG. 3C, FIG. 3D, or FIG. 3E) or an image of a source SP instance video (for example, an image of a played source SP instance video shown in FIG. 8B). The first operation may be an operation of switching, by the user, to play an entire video associated with a clip video (for example, an operation of tapping, by the user, an option "View full version"/"View full video" shown in FIG. 3B, FIG. 3C, FIG. 3D, or FIG. 3E) or an operation of switching, by the user, to play a destination SP instance video (for example, an operation of tapping, by the user, an option "XX video 1" shown in FIG. 8B). The second video may be an entire SP instance video or a destination SP instance video associated with a clip video. The second user interface may be a user interface of an entire SP instance video associated with a clip video (for example, a user interface shown in FIG. 5A, FIG. 5B, or FIG. 5D) or a user interface for playing a destination SP instance video (for example, the user interface shown in FIG. 10A or FIG. 10C). The third video may be a basic video. The first time point may be a continuous playback point of the second video. The one or more first clips may be one or more clips that are inserted into and/or cropped from the third video before the first time point to obtain the second video. The first video source may be a video source of a source SP instance video (for example, a Huawei video). The second video source may be a video source of a destination SP instance video (for example, an XX video 1 or an XX video 2). The second time point may be a playback progress (a user playback point) corresponding to the first video when the user performs the first operation. The first user information may be the user information 1. The played duration of the first video may be played duration of the first video at switching. The first message may be the message 3 in FIG. 2A or FIG. 6A. The identifier of the first video may be an ID of a clip video. The second message may be the message 4 in FIG. 2B. The third message may be the message 6 in FIG. 6B. The fourth message may be the message 10 in FIG. 6C. The fifth message may be the message 10 in FIG. 2D or the message 12 in FIG. 6D. The fifth time point may be a continuous playback point of the basic video. The one or more second clips may be one or more clips that are inserted into and/or cropped from the basic video to obtain the first video. The sixth message may be the message 3 in FIG. 7A. The seventh message may be the message 4 in FIG. 7B. The eighth message may be the message 2 in FIG. 11A. The played duration of the first video may be played duration of the source SP instance video at switching. The ninth message may be a message 7 in FIG. 11C.

The following describes an internal module of an electronic device 100, an internal module of a server 200, and a possible manner of collaboration between internal modules that are included in a process of performing a video processing method according to an embodiment of this application.

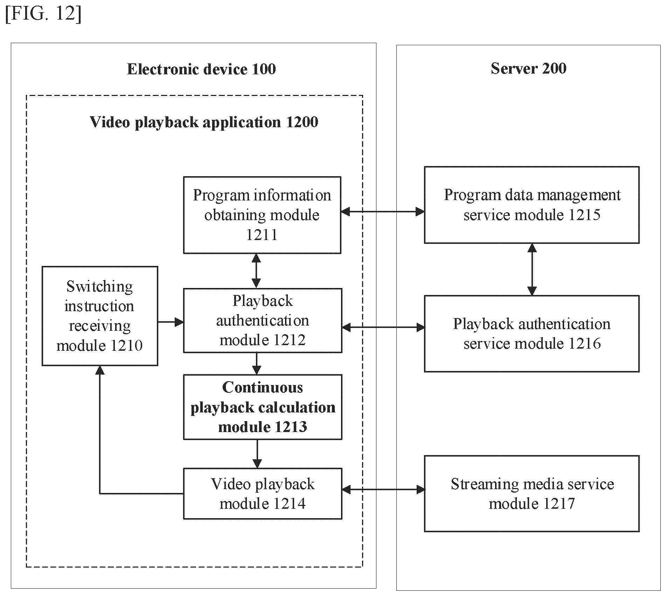

FIG. 12 shows an example of the internal module of the electronic device 100, the internal module of the server 200, and the possible manner of collaboration between the internal modules that are included in the process of performing the video processing method according to this embodiment of this application.

As shown in FIG. 12, the electronic device 100 may include a video playback application 1200. The video playback application 1200 may include a switching instruction receiving module 1210, a program information obtaining module 1211, a playback authentication module 1212, a continuous playback calculation module 1213, a video playback module 1214, and the like. The server 200 may include a program data management service module 1215, a playback authentication service module 1216, a streaming media service module 1217, and the like. The video playback application 1200 may be an application with a video playback capability (for example, Huawei video or Youku video). The server 200 may be a video operation server, for example, a server corresponding to the video playback application 1200.

The switching instruction receiving module 1210 may be configured to: receive, after a user performs a switching operation (for example, an operation of switching a clip video to an entire video, or an operation of switching a source SP instance video to a destination SP instance video), a switching instruction sent by the video playback module 1214; exchange data with the playback authentication module 1212; and so on.

The program information obtaining module 1211 may be configured to: obtain, from the program data management service module 1215, related information of a to-be-played program, for example, program information of a clip video (for example, an ID of the clip video), program information of an entire video (for example, an ID of the entire video), an association relationship between the clip video and the entire video, an offset information list of each SP instance video associated with the entire video, program information of an aggregated video (for example, an ID of the aggregated video), an offset information list of a source SP instance video, and an offset information list of a destination SP instance video; exchange data with the playback authentication module 1212; and so on.

The playback authentication module 1212 may be configured to: exchange data with the switching instruction receiving module 1210, the program information obtaining module 1211, the playback authentication service module 1216, and the continuous playback calculation module 1213; and so on.

The continuous playback calculation module 1213 may be configured to calculate a continuous playback point of a video to which the user needs to switch. For example, in a scenario of switching a clip video to an entire video, a continuous playback point of an SP instance video may be calculated based on played duration of the clip video at switching, a start location of a segment, and an offset information list of an SP instance video that is associated with the entire video and that can be played by the user. For another example, in a scenario of switching a source SP instance video to a destination SP instance video in an aggregated video, a continuous playback point of the destination SP instance video may be calculated based on played duration of the source SP instance video at switching, an offset information list of the source SP instance video, and an offset information list of the destination SP instance video. The continuous playback calculation module 1213 may be further configured to: exchange data with the playback authentication module 1212 and the video playback module 1214; and so on.

It is easy to understand that, different from the conventional technology, this embodiment of this application specifies that the continuous playback calculation module 1213 needs to provide an understanding function and a calculation function of the offset information list.

The video playback module 1214 may be configured to: play a video; exchange data with the switching instruction receiving module 1210, the continuous playback calculation module 1213, and the streaming media service module 1217; and so on.

The program data management service module 1215 may be configured to: store and manage program information, for example, store program information of a clip video, program information of an entire video, and an association relationship between the clip video and the entire video; exchange data with the program information obtaining module 1211; and so on.

Different from the conventional technology, this embodiment of this application specifies that the program data management service module 1215 needs to perform storage and management on the offset information list of the video.

The playback authentication service module 1216 may be configured to: during operation of a program, authenticate, based on operation information of the program (for example, information stored in the program data management service module 1215), information of a video that needs to be played and is reported by the electronic device 100; allocate a playback address of a video stream in the streaming media service module 1217 to the video; send the playback address to the electronic device 100; exchange data with the program data management service module 1215; and so on.

The streaming media service module 1217 may be configured to: search for video stream data of a video based on playback start location information and a playback address of the video; send the video stream data of the video to the electronic device 100; and so on.

The foregoing modules may be divided by function. In an actual product, the modules may be different functions executed by a same software module.

For more details about functions of the internal modules of the electronic device 100 and the server 200, refer to related content in the foregoing embodiments. Details are not described herein again.

It may be understood that the structure shown in FIG. 12 does not constitute a specific limitation on the electronic device 100 and the server 200. In some other embodiments of this application, the electronic device 100 and the server 200 may have more or fewer components than those shown in FIG. 12, or a combination of two or more components, or a different component layout. Components shown in the figure may be implemented by hardware including one or more signal processing and/or application-specific integrated circuits, software, or a combination of hardware and software.

The following describes an internal module of an electronic device 100, an internal module of a server 200, and a possible manner of collaboration between internal modules that are included in a process of performing another video processing method according to an embodiment of this application.

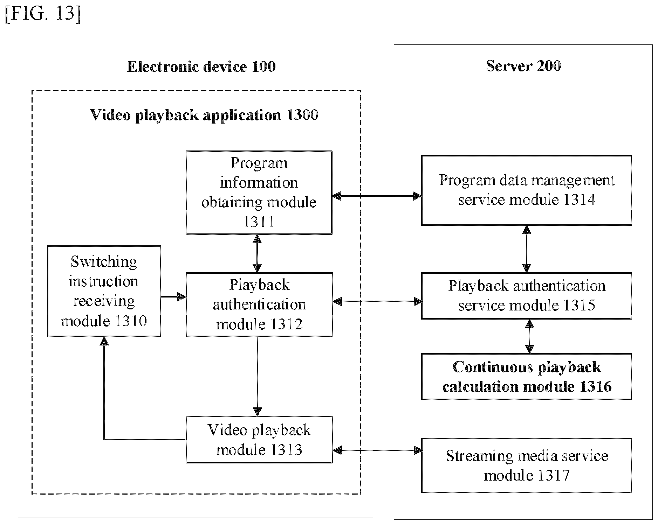

FIG. 13 shows an example of the internal module of the electronic device 100, the internal module of the server 200, and the possible manner of collaboration between the internal modules that are included in the process of performing the another video processing method according to this embodiment of this application.

As shown in FIG. 13, the electronic device 100 may include a video playback application 1300. The video playback application 1300 may include a switching instruction receiving module 1310, a program information obtaining module 1311, a playback authentication module 1312, a video playback module 1313, and the like. The server 200 may include a program data management service module 1314, a playback authentication service module 1315, a continuous playback calculation module 1316, a streaming media service module 1317, and the like. The video playback application 1300 may be an application with a video playback capability (for example, Huawei video or Youku video). The server 200 may be a video operation server, for example, a server corresponding to the video playback application 1300.

The switching instruction receiving module 1310 may be configured to: receive, after a user performs a switching operation (for example, an operation of switching a clip video to an entire video, or an operation of switching a source SP instance video to a destination SP instance video), a switching instruction sent by the video playback module 1313; exchange data with the playback authentication module 1312; and so on.

The program information obtaining module 1311 may be configured to: obtain, from the program data management service module 1314, related information of a to-be-played program, for example, program information of a clip video (for example, an ID of the clip video), program information of an entire video (for example, an ID of the entire video), and program information of an aggregated video (for example, an ID of the aggregated video); exchange data with the playback authentication module 1312; and so on.

Different from the program information obtaining module 1211 shown in FIG. 12, the program information obtaining module 1311 does not need to obtain an offset information list of a video from the program data management service module 1314.

The playback authentication module 1312 may be configured to: exchange data with the switching instruction receiving module 1310, the program information obtaining module 1311, and the playback authentication service module 1315; and so on.

Different from the playback authentication module 1212 shown in FIG. 12, when obtaining a playback address of a video from the playback authentication service module 1315, the playback authentication module 1312 needs to carry played duration of a video during execution of a switching action, and when returning the playback address to the playback authentication module 1312, the playback authentication service module 1315 needs to carry playback start location information obtained by the continuous playback calculation module 1316 through calculation.

The video playback module 1313 may be configured to: play a video; exchange data with the switching instruction receiving module 1310, the playback authentication module 1312, and the streaming media service module 1317; and so on.

The program data management service module 1314 may be configured to: store and manage program information, for example, store program information of a clip video, program information of an entire video, an association relationship between the clip video and the entire video, and the like; exchange data with the program information obtaining module 1311 and the playback authentication service module 1315; and so on.

Different from the conventional technology, this embodiment of this application specifies that the program data management service module 1314 needs to perform storage and management on the offset information list of the video.

The playback authentication service module 1315 may be configured to: during operation of a program, authenticate, based on operation information of the program (for example, information stored in the program data management service module 1314), information of a video that needs to be played and is reported by the electronic device 100; allocate a playback address of a video stream in the streaming media service module 1317 to the video; send the playback address to the electronic device 100; send playback start location information of the video to the electronic device 100; exchange data with the program data management service module 1314 and the continuous playback calculation module 1316; and so on.

The continuous playback calculation module 1316 may be configured to calculate a continuous playback point of a video to which the user needs to switch. For example, in a scenario of switching a clip video to an entire video, a continuous playback point of an SP instance video may be calculated based on played duration of the clip video at switching, a start location of a segment, and an offset information list of an SP instance video that is associated with the entire video and that can be played by the user. For another example, in a scenario of switching a source SP instance video to a destination SP instance video in an aggregated video, a continuous playback point of the destination SP instance video may be calculated based on played duration of the source SP instance video at switching, an offset information list of the source SP instance video, and an offset information list of the destination SP instance video. The continuous playback calculation module 1316 may be further configured to: exchange data with the playback authentication service module 1315; and so on.

It is easy to understand that, different from the conventional technology, this embodiment of this application specifies that the continuous playback calculation module 1316 needs to provide an understanding function and a calculation function of the offset information list.

The streaming media service module 1317 may be configured to: search for video stream data of a video based on playback start location information and a playback address of the video; send the video stream data of the video to the electronic device 100; and so on.

The foregoing modules may be divided by function. In an actual product, the modules may be different functions executed by a same software module.

For more details about functions of the internal modules of the electronic device 100 and the server 200, refer to related content in the foregoing embodiments. Details are not described herein again.

It may be understood that the structure shown in FIG. 13 does not constitute a specific limitation on the electronic device 100 and the server 200. In some other embodiments of this application, the electronic device 100 and the server 200 may have more or fewer components than those shown in FIG. 13, or a combination of two or more components, or a different component layout. Components shown in the figure may be implemented by hardware including one or more signal processing and/or application-specific integrated circuits, software, or a combination of hardware and software.

The following describes a diagram of a structure of an electronic device 100 according to an embodiment of this application.

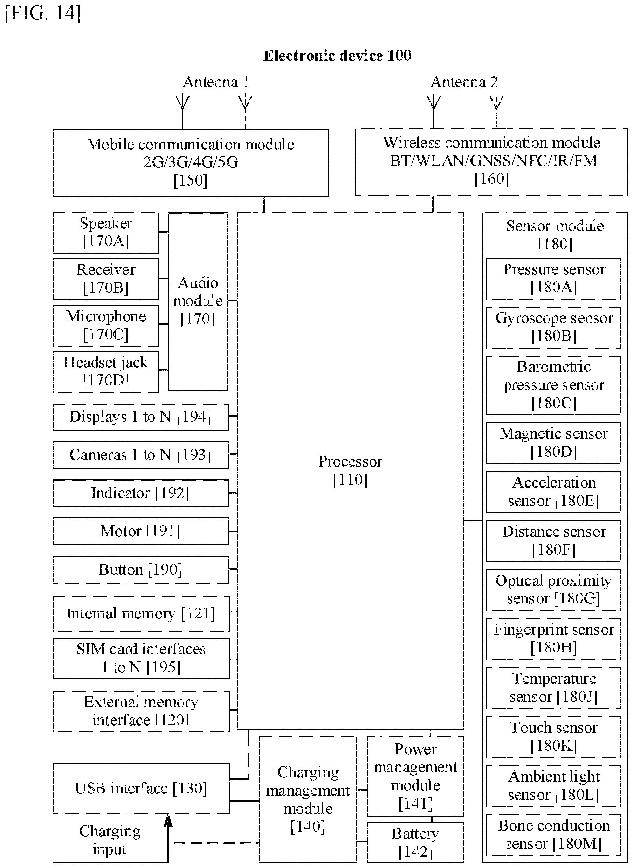

FIG. 14 shows an example of a structure of an electronic device 100 according to an embodiment of this application.

As shown in FIG. 14, the electronic device 100 may include: a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination thereof.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to exchange data between the electronic device 100 and a peripheral device, or may be configured to connect to a headset for playing audio through the headset. The interface may be further configured to be connected to another terminal device, for example, an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device 100 through the power management module 141.

The power management module 141 is configured to connect the battery 142, the charging management module 140, and the processor 110. The power management module 141 receives an input from the battery 142 and/or an input from the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change displayed information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation or the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transmission mode between human brain neurons, and may further continuously perform self-learning. The NPU may be configured to implement an application like intelligent cognition of the electronic device 100, for example, image recognition, facial recognition, voice recognition, and text understanding.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application necessary to at least one function (for example, a voice playing function or an image playing function), and the like. The data storage area may store data (such as audio data and an address book) and the like that are created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending speech information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to a first pressure threshold is performed on an SMS message application icon, an instruction for creating a new SMS message is performed.

The gyroscope sensor 180B may be configured to determine a moving posture of the electronic device 100. In some embodiments, an angular velocity of the electronic device 100 around three axes (axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be further used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature like automatic unlocking of the flip cover is set based on a detected opening or closing state of the leather case or a detected opening or closing state of the flip cover.

The acceleration sensor 180E may detect accelerations in various directions (usually on three axes) of the electronic device 100. A magnitude and a direction of gravity may be detected when the electronic device 100 is still. The acceleration sensor 180E may be further configured to identify a posture of the electronic device 100, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light emitting diode may be an infrared light-emitting diode. The electronic device 100 emits infrared light by using the light-emitting diode. The electronic device 100 detects infrared reflected light from a nearby object through the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may implement fingerprint unlock, application access lock, fingerprint photographing, fingerprint-based call answering, and the like by using a feature of the collected fingerprint.

The temperature sensor 180J is configured to detect a temperature. In some embodiments, the electronic device 100 executes a temperature processing strategy through the temperature detected by the temperature sensor 180J. For example, when the temperature reported by the temperature sensor 180J exceeds a threshold, the electronic device 100 lowers performance of a processor located near the temperature sensor 180J, to reduce power consumption for thermal protection. In some other embodiments, when the temperature is lower than another threshold, the electronic device 100 heats the battery 142 to avoid abnormal shutdown of the electronic device 100 caused due to a low temperature. In some other embodiments, when the temperature is lower than still another threshold, the electronic device 100 boosts an output voltage of the battery 142 to avoid abnormal shutdown caused due to a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in a headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is compatible with different types of SIM cards. The SIM card interface 195 is also compatible with an external storage card. The electronic device 100 interacts with a network through the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

It should be understood that the electronic device 100 shown in FIG. 14 is merely an example, and the electronic device 100 may have more or fewer components than those shown in FIG. 14, or a combination of two or more components, or a different component layout. Components shown in FIG. 14 may be implemented by hardware including one or more signal processing and/or application-specific integrated circuits, software, or a combination of hardware and software.

The following describes a structure of a server 200 according to an embodiment of this application.

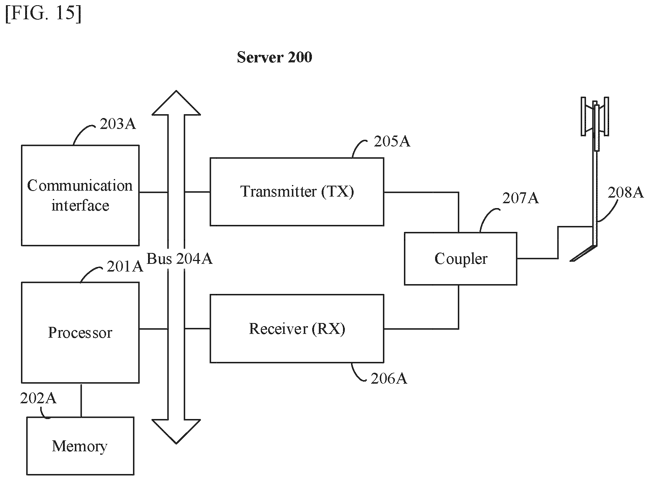

FIG. 15 shows an example of a structure of a server 200 according to an embodiment of this application.

As shown in FIG. 15, the server 200 may include one or more processors 201A, a memory 202A, a communication interface 203A, a transmitter 205A, a receiver 206A, a coupler 207A, and an antenna 208A. These components may be connected through a bus 204A or in another manner. In FIG. 15, an example in which the components are connected through the bus is used.

The communication interface 203A may be used by the server 200 to communicate with another communication device, for example, the electronic device 100. Specifically, the communication interface 203A may be a 3G communication interface, a 4G communication interface, a 5G communication interface, a future new radio communication interface, or the like. In addition to the wireless communication interface, a wired communication interface 203A, for example, a local access network (local access network, LAN) interface may be further configured for the server 200. The transmitter 205A may be configured to perform transmission processing on a signal output by the processor 201A. The receiver 206A may be configured to perform receiving processing on a mobile communication signal received by the antenna 208A.

In some embodiments of this application, the transmitter 205A and the receiver 206A may be considered as a wireless modem. In the server 200, there may be one or more transmitters 205A and receivers 206A. The antenna 208A may be configured to convert electromagnetic energy in a transmission line into an electromagnetic wave in free space, or convert an electromagnetic wave in free space into electromagnetic energy in a transmission line. The coupler 207A is configured to: divide the mobile communication signal received by the antenna 208A into a plurality of signals and allocate the plurality of signals to a plurality of receivers 206A.

The memory 202A is coupled to the processor 201A, and is configured to store various software programs and/or a plurality of groups of instructions. Specifically, the memory 202A may include a high-speed random access memory, or a non-volatile memory, for example, one or more disk storage devices, a flash storage device, or another non-volatile solid-state storage device. The memory 202A may store a network communication program, and the network communication program may be used for communicating with one or more additional devices, one or more terminal devices, and one or more network devices.

In some embodiments of this application, the memory 202A may be configured to store a program for implementing, on a side of the server 200, a video processing method provided in one or more embodiments of this application. For an implementation of the video processing method provided in one or more embodiments of this application, refer to the foregoing embodiments.

The processor 201A may be configured to: read and execute computer-readable instructions. Specifically, the processor 201A may be configured to: invoke a program stored in the memory 202A, for example, the program for implementing, on the side of the server 200, the video processing method provided in one or more embodiments of this application, and execute instructions included in the program.

It should be noted that the server 200 shown in FIG. 15 is merely an implementation in this embodiment of this application. In an actual application, the server 200 may alternatively include more or fewer components. This is not limited herein.

For more details about functions and working principles of the server 200, refer to related content in the foregoing embodiments. Details are not described herein again.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

A person of ordinary skill in the art may understand that all or some of the procedures of the methods in embodiments may be implemented by a computer program instructing related hardware. The program may be stored in a computer-readable storage medium. When the program runs, the procedures of the methods in embodiments are executed. The foregoing storage medium includes any medium that can store program code, such as a ROM, a random access memory RAM, a magnetic disk, or an optical disc.

The foregoing embodiments are merely intended to describe the technical solutions of this application, but are not intended to limit this application. Although this application is described in detail with reference to the foregoing embodiments, a person of ordinary skill in the art should understand that the technical solutions described in the foregoing embodiments may still be modified or some technical features thereof may be equivalently replaced. These modifications or replacements do not enable essence of a corresponding technical solution to depart from the scope of the technical solutions of embodiments of this application.

**Claims**

1. A video processing method, applied to an electronic device, wherein the method comprises:

   playing, by the electronic device, a first video;
   displaying, by the electronic device, a first user interface, wherein the first user interface comprises a first image, and the first image is an image in the first video;
   detecting, by the electronic device, a first operation of a user when the electronic device displays the first user interface;
   playing, by the electronic device, a second video in response to the first operation; and
   displaying, by the electronic device, a second user interface, wherein the second user interface comprises the first image, and the first image is an image in the second video; and

both the first video and the second video are generated based on a third video, a playback progress corresponding to the first image in the second video is a first time point, the second video is obtained by inserting one or more first clips into and/or cropping one or more first clips from the third video before the first time point, and the third video does not comprise the one or more first clips.

2. The method according to claim 1, wherein the first video is a video clip of the second video.

3. The method according to claim 1, wherein the first video is a video of a first video source, the second video is a video of a second video source, a playback progress corresponding to the first image in the first video is a second time point, and the second time point is different from the first time point.

4. The method according to claim 1, wherein before the displaying, by the electronic device, a second user interface, the method further comprises:

   sending, by the electronic device, first user information to a server, wherein the first user information is used by the server to determine, based on the first user information, whether the user has permission to play the second video; and
   playing, by the electronic device, the second video when the server determines that the user has permission to play the second video.

5. The method according to claim 2, wherein the first time point is determined based on the third video, played duration of the first video, and an offset information list of the second video, the offset information list of the second video comprises offset information of the one or more first clips, and the offset information comprises a location at which the one or more first clips are inserted into/cropped from the third video and offset duration.

6. The method according to claim 5, wherein before the displaying, by the

   electronic device, a second user interface, the method further comprises:

   sending, by the electronic device, a first message to a server, wherein the first message comprises an identifier of the first video, and the identifier of the first video is used by the server to obtain the offset information list of the second video and information about a segmentation point of the third video associated with the first video;
receiving, by the electronic device, a second message sent by the server, wherein the second message comprises the information about the segmentation point and the offset information list of the second video; and

   that the first time point is determined based on the third video, played duration of the first video, and an offset information list of the second video specifically comprises:

   the first time point is determined by the electronic device based on the information about the segmentation point, the played duration of the first video, and the offset information list of the second video.

7. The method according to claim 5, wherein before the displaying, by the electronic device, a second user interface, the method further comprises:

   sending, by the electronic device, a third message to a server, wherein the third message comprises the played duration of the first video;
   that the first time point is determined based on the third video, played duration of the first video, and an offset information list of the second video specifically comprises:

   the first time point is determined by the server based on information about a segmentation point of the third video, the played duration of the first video, and the offset information list of the second video; and
   receiving, by the electronic device, a fourth message sent by the server, wherein the fourth message comprises the first time point and a playback address of the second video.

8. The method according to any one of claims 1 to 7, wherein before the displaying, by the electronic device, a second user interface, the method further comprises:

   sending, by the electronic device, a fifth message to the server, wherein the fifth message comprises the first time point and the playback address of the second video, and the playback address is obtained from the server; and
   receiving, by the electronic device, video stream data sent by the server, wherein the video stream data is video stream data that is of the second video and that is after the first time point.

9. The method according to any one of claims 1 to 8, wherein after the playing, by the electronic device, a second video, the method further comprises:

displaying, by the electronic device, a third user interface, wherein the third user interface comprises a second image, a playback progress corresponding to the second image in the second video is a third time point, a time interval between the third time point and the first time point is a first interval, and the second video is obtained by inserting one or more clips into and/or cropping one or more clips from the third video between the third time point and the first time point;

a playback progress corresponding to the second image in the third video is a fourth time point, a playback progress corresponding to the first image in the third video is a fifth time point, and a time interval between the fourth time point and the fifth time point is a second interval; and

the first interval is different from the second interval.

10. The method according to claim 3, wherein the third video comprises the first

image, and a playback progress corresponding to the first image in the third video is a fifth time point;

the fifth time point is determined based on the second time point and an offset information list of the first video, the offset information list of the first video comprises offset information of one or more second clips, and the offset information comprises a location at which the one or more second clips are inserted into/cropped from the third video and offset duration; and

the first time point is determined based on the fifth time point and an offset information list of the second video, the offset information list of the second video comprises offset information of the one or more first clips, and the offset information comprises a location at which the one or more first clips are inserted into/cropped from the third video and offset duration.

11. The method according to claim 10, wherein before the displaying, by the electronic device, a second user interface, the method further comprises:

sending, by the electronic device, a sixth message to a server, wherein the sixth message comprises identification information of the first video and identification information of the second video, the identification information of the first video is used by the server to obtain the offset information list of the first video, and

the identification information of the second video is used by the server to obtain the offset information list of the second video; and

receiving, by the electronic device, a seventh message sent by the server, wherein

the seventh message comprises the offset information list of the first video and

the offset information list of the second video; and

the fifth time point is determined by the electronic device based on the second time point and the offset information list of the first video, and the first time point is determined by the electronic device based on the fifth time point and the offset information list of the second video.

12. The method according to claim 10, wherein before the displaying, by the electronic device, a second user interface, the method further comprises:

sending, by the electronic device, an eighth message to a server, wherein the eighth message comprises played duration of the first video, and the played duration of the first video is used by the server to determine the second time point; and

sending, by the server, a ninth message to the electronic device, wherein the ninth message comprises the first time point and a playback address of the second video; and

the fifth time point is determined by the server based on the second time point and the offset information list of the first video, and the first time point is determined by the server based on the fifth time point and the offset information list of the second video.

13. The method according to any one of claims 1 to 12, wherein a method for calculating the first time point is as follows:

$$CP'=CP+\sum_{i=1}^{n} L_i$$ , wherein

CP' is the playback progress corresponding to the first image in the second video, CP is the playback progress corresponding to the first image in the third video, n is a total quantity of one or more first clips, and $L_i$ is offset duration of an $i^{th}$ first clip in the one or more first clips.

14. An electronic device, wherein the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 13.

**15.** A computer storage medium, wherein the computer storage medium stores a computer program, the computer program comprises program instructions, and when the program instructions are run on an electronic device, the electronic device is enabled to perform the method according to any one of claims 1 to 13.

[FIG. 1]

**Electronic device 100**

**Server 200**
**(video operation server)**

| Electronic device 100 | | | | | Server 200 | | |
|---|---|---|---|---|---|---|---|
| Switching instruction receiving module | Playback authentication module | Program information obtaining module | **Continuous playback calculation module** | Video playback module | Program data management service module | Playback authentication service module | Streaming media service module |

S201: Maintain program metadata

S202: Play a clip video 1

S203: Detect an operation of switching, by a user, to play an entire video (an entire video 1) associated with the clip video 1

S204: Switching instruction, where the instruction includes an ID of the clip video 1 and elapsed play duration of the clip video 1 at switching

S205: Message 1, where the message includes the ID of the clip video 1 and the elapsed play duration of the clip video 1 at the switching

S206: Message 2, where the message includes the ID of the clip video 1

S207: Message 3, where the message includes the ID of the clip video 1

TO FIG. 2B    TO FIG. 2B    TO FIG. 2B    TO FIG. 2B    TO FIG. 2B    TO FIG. 2B    TO FIG. 2B    TO FIG. 2B

EP 4 539 481 A1

[FIG. 2B]

| CONT.<br>FROM<br>FIG. 2A | CONT.<br>FROM<br>FIG. 2A | CONT.<br>FROM<br>FIG. 2A | CONT.<br>FROM<br>FIG. 2A | CONT.<br>FROM<br>FIG. 2A | CONT.<br>FROM<br>FIG. 2A | CONT.<br>FROM<br>FIG. 2A | CONT.<br>FROM<br>FIG. 2A |

S208: Determine, based on the ID of the clip video 1, that the entire video associated with the clip video 1 is the entire video 1, and determine a start location of a segment and an offset information list of each SP instance video associated with the entire video 1

S209: Message 4, where the message includes an ID of the entire video 1, the start location of the segment, and the offset information list of each SP instance video associated with the entire video 1

S210: Message 5, where the message includes the ID of the entire video 1, the start location of the segment, and the offset information list of each SP instance video associated with the entire video 1

S211: Message 6, where the message includes the ID of the entire video 1 and user information 1

S212: Determine, based on the ID of the entire video 1, the user information 1, and an authentication rule, a playback address corresponding to an SP instance video that is associated with the entire video 1 and that can be played by the user

S213: Message 7, where the message includes the playback address corresponding to the SP instance video that is associated with the entire video 1 and that can be played by the user

| TO<br>FIG. 2C | TO<br>FIG. 2C | TO<br>FIG. 2C | TO<br>FIG. 2C | TO<br>FIG. 2C | TO<br>FIG. 2C | TO<br>FIG. 2C | TO<br>FIG. 2C |

EP 4 539 481 A1

CONT.
FROM
FIG. 2B

CONT.
FROM
FIG. 2B

CONT.
FROM
FIG. 2B

CONT.
FROM
FIG. 2B

CONT.
FROM
FIG. 2B

CONT.
FROM
FIG. 2B

CONT.
FROM
FIG. 2B

CONT.
FROM
FIG. 2B

S214: Message 8, where the message includes the elapsed play duration of the clip video 1 at the switching, the start location of the segment, an offset information list of the SP instance video that is associated with the entire video 1 and that can be played by the user, and the playback address

S215: Determine playback start location information of the SP instance video based on the elapsed play duration of the clip video 1 at the switching, the start location of the segment, and the offset information list of the SP instance video that is associated with the entire video 1 and that can be played by the user

S216: Message 9, where the message includes the playback start location information of the SP instance video and the playback address

TO
FIG. 2D

TO
FIG. 2D

TO
FIG. 2D

TO
FIG. 2D

TO
FIG. 2D

TO
FIG. 2D

TO
FIG. 2D

TO
FIG. 2D

EP 4 539 481 A1

[FIG. 2D]

S217: Message 10, where the message includes the playback start location information of the SP instance video and the playback address

S218: Search for video stream data after a playback start location of the SP instance video based on the playback start location information of the SP instance video and the playback address

S219: Message 11, where the message includes the video stream data after the playback start location of the SP instance video

S220: Play, based on the video stream data after the playback start location of the SP instance video, the SP instance video after the playback start location

EP 4 539 481 A1

[FIG. 3A]

[FIG. 3B]

[FIG. 3C]

[FIG. 3D]

[FIG. 3E]

[FIG. 4]

EP 4 539 481 A1

Clip video playback start point F

User playback point P1

User playback point P2

User playback point P3

Clip video playback end point F'

**Clip video**

Basic video playback start point O

Content segmentation point Pf

Continuous playback point CP1

Continuous playback point CP2

Continuous playback point CP3

Basic video playback end point O'

**Basic video**

SP-A instance video playback start point O1

Continuous playback point CP1'=CP1+L1

Continuous playback point CP2'=CP2+L1+L2

Continuous playback point CP3'=CP3+L1+L2+L3

SP-A instance video playback end point O1'

**SP-A instance video**

Beginning-inserted video clip (insertion location B1, offset duration L1)

Middle-inserted video clip (insertion location B2, offset duration L2)

Cropped video clip (cropping location B3, offset duration L3)

SP-B instance video playback start point O2

Continuous playback point CP1''=CP1

Continuous playback point CP2''=CP2+L2'

Continuous playback point CP3'=CP3+L2'+L3'

SP-B instance video playback end point O2'

**SP-B instance video**

Middle-inserted video clip (insertion location B2', offset duration L2')

Cropped video clip (cropping location B3', offset duration L3')

[FIG. 5A]

[FIG. 5B]

[FIG. 5C]

[FIG. 5D]

[FIG. 5E]

[FIG. 6A]

| Electronic device 100 | | | | Server 200 | | | |
|---|---|---|---|---|---|---|---|
| Switching instruction receiving module | Playback authentication module | Program information obtaining module | Video playback module | Program data management service module | Playback authentication service module | **Continuous playback calculation module** | Streaming media service module |

S601: Maintain program metadata

S602: Play a clip video 1

S604: Switching instruction, where the instruction includes an ID of the clip video 1 and elapsed play duration of the clip video 1 at switching

S603: Detect an operation of switching, by a user, to play an entire video (an entire video 1) associated with the clip video 1

S605: Message 1, where the message includes the ID of the clip video 1 and the elapsed play duration of the clip video 1 at the switching

S606: Message 2, where the message includes the ID of the clip video 1

S607: Message 3, where the message includes the ID of the clip video 1

S608: Determine, based on the ID of the clip video 1, that the entire video associated with the clip video 1 is the entire video 1, and determine a start location of a segment and an offset information list of each SP instance video associated with the entire video 1

TO FIG. 6B    TO FIG. 6B    TO FIG. 6B    TO FIG. 6B    TO FIG. 6B    TO FIG. 6B    TO FIG. 6B    TO FIG. 6B

EP 4 539 481 A1

CONT. FROM FIG. 6A

CONT. FROM FIG. 6A

CONT. FROM FIG. 6A

CONT. FROM FIG. 6A

CONT. FROM FIG. 6A

CONT. FROM FIG. 6A

CONT. FROM FIG. 6A

CONT. FROM FIG. 6A

S610: Message 5, where the message includes the ID of the entire video 1

S609: Message 4, where the message includes an ID of the entire video 1

S611: Message 6, where the message includes the ID of the entire video 1, user information 1, and the elapsed play duration of the clip video 1 at the switching

S612: Determine, based on the ID of the entire video 1, the user information 1, and an authentication rule, a playback address corresponding to an SP instance video that is associated with the entire video 1 and that can be played by the user

S613: Message 7, where the message includes the start location of the segment and the offset information list of each SP instance video associated with the entire video 1

S614: Message 8, where the message includes the elapsed play duration of the clip video 1 at the switching, the start location of the segment, and an offset information list of the SP instance video that is associated with the entire video 1 and that can be played by the user

TO FIG. 6C

TO FIG. 6C

TO FIG. 6C

TO FIG. 6C

TO FIG. 6C

TO FIG. 6C

TO FIG. 6C

TO FIG. 6C

[FIG. 6C]

CONT. FROM FIG. 6B    CONT. FROM FIG. 6B    CONT. FROM FIG. 6B    CONT. FROM FIG. 6B    CONT. FROM FIG. 6B    CONT. FROM FIG. 6B    CONT. FROM FIG. 6B    CONT. FROM FIG. 6B

S615: Determine playback start location information of the SP instance video based on the elapsed play duration of the clip video 1 at the switching, the start location of the segment, and the offset information list of the SP instance video that is associated with the entire video 1 and that can be played by the user

S616: Message 9, where the message includes the playback start location information of the SP instance video

S617: Message 10, where the message includes the playback start location information of the SP instance video and the playback address

S618: Message 11, where the message includes the playback start location information of the SP instance video and the playback address

TO FIG. 6D    TO FIG. 6D    TO FIG. 6D    TO FIG. 6D    TO FIG. 6D    TO FIG. 6D    TO FIG. 6D    TO FIG. 6D

EP 4 539 481 A1

60

[FIG. 6D]

CONT. FROM FIG. 6C    CONT. FROM FIG. 6C    CONT. FROM FIG. 6C    CONT. FROM FIG. 6C    CONT. FROM FIG. 6C    CONT. FROM FIG. 6C    CONT. FROM FIG. 6C    CONT. FROM FIG. 6C

S619: Message 12, where the message includes the playback start location information of the SP instance video and the playback address

S620: Search for video stream data after a playback start location of the SP instance video based on the playback start location information of the SP instance video and the playback address

S621: Message 13, where the message includes the video stream data after the playback start location of the SP instance video

S622: Play, based on the video stream data after the playback start location of the SP instance video, the SP instance video after the playback start location

EP 4 539 481 A1

## [FIG. 7A]

| Electronic device 100 | | | | | Server 200 | | |
|---|---|---|---|---|---|---|---|
| Switching instruction receiving module | Playback authentication module | Program information obtaining module | **Continuous playback calculation module** | Video playback module | Program data management service module | Playback authentication service module | Streaming media service module |

S701: Maintain program metadata

S702: Play an SP-A instance video (a source SP instance video) in an aggregated video 1

S704: Switching instruction, where the instruction includes an ID of the aggregated video 1, elapsed play duration of the source SP instance video at switching, identification information of the source SP instance video, and identification information of the destination SP instance video

S703: Detect an operation of switching, by a user, to play an SP-B instance video (a destination SP instance video) in the aggregated video 1

S705: Message 1, where the message includes the ID of the aggregated video 1, the elapsed play duration of the source SP instance video at the switching, the identification information of the source SP instance video, and the identification information of the destination SP instance video

S706: Message 2, where the message includes the ID of the aggregated video 1, the identification information of the source SP instance video, and the identification information of the destination SP instance video

S707: Message 3, where the message includes the ID of the aggregated video 1, the identification information of the source SP instance video, and the identification information of the destination SP instance video

TO FIG. 7B      TO FIG. 7B      TO FIG. 7B   TO FIG. 7B   TO FIG. 7B      TO FIG. 7B      TO FIG. 7B   TO FIG. 7B

EP 4 539 481 A1

| CONT. FROM FIG. 7A | CONT. FROM FIG. 7A | CONT. FROM FIG. 7A | CONT. FROM FIG. 7A | CONT. FROM FIG. 7A | CONT. FROM FIG. 7A | CONT. FROM FIG. 7A | CONT. FROM FIG. 7A |

S708: Determine an offset information list of the source SP instance video and an offset information list of the destination SP instance video based on the ID of the aggregated video 1, the identification information of the source SP instance video, and the identification information of the destination SP instance video

S710: Message 5, where the message includes the offset information list of the source SP instance video and the offset information list of the destination SP instance video

S709: Message 4, where the message includes the offset information list of the source SP instance video and the offset information list of the destination SP instance video

S711: Message 6, where the message includes the ID of the aggregated video 1, the identification information of the destination SP instance video, and user information 1

S712: Determine, based on the ID of the aggregated video 1, the identification information of the destination SP instance video, the user information 1, and an authentication rule, that the user can play the destination SP instance video, and determine a playback address corresponding to the destination SP instance video

S713: Message 7, where the message includes the playback address corresponding to the destination SP instance video

| TO FIG. 7C | TO FIG. 7C | TO FIG. 7C | TO FIG. 7C | TO FIG. 7C | TO FIG. 7C | TO FIG. 7C | TO FIG. 7C |

EP 4 539 481 A1

[FIG. 7C]

| CONT. FROM FIG. 7B | CONT. FROM FIG. 7B | CONT. FROM FIG. 7B | CONT. FROM FIG. 7B | CONT. FROM FIG. 7B | CONT. FROM FIG. 7B | CONT. FROM FIG. 7B | CONT. FROM FIG. 7B |

S714: Message 8, where the message includes the elapsed play duration of the source SP instance video at the switching, the offset information list of the source SP instance video, the offset information list of the destination SP instance video, and the playback address corresponding to the destination SP instance video

S715: Determine playback start location information of the destination SP instance video based on the elapsed play duration of the source SP instance video at the switching, the offset information list of the source SP instance video, and the offset information list of the destination SP instance video

S716: Message 9, where the message includes the playback start location information of the destination SP instance video and the playback address

| TO FIG. 7D | TO FIG. 7D | TO FIG. 7D | TO FIG. 7D | TO FIG. 7D | TO FIG. 7D | TO FIG. 7D | TO FIG. 7D |

EP 4 539 481 A1

[FIG. 7D]

CONT. CONT. CONT. CONT. CONT. CONT. CONT. CONT.
FROM FROM FROM FROM FROM FROM FROM FROM
FIG. 7C FIG. 7C FIG. 7C FIG. 7C FIG. 7C FIG. 7C FIG. 7C FIG. 7C

S717: Message 10, where the message
includes the playback start location
information of the destination SP
instance video and the playback address

S718: Search for video stream
data after a playback start
location of the destination SP
instance video based on the
playback start location
information of the destination
SP instance video and the
playback address

S719: Message 11, where the
message includes the video
stream data after the
playback start location of the
destination SP instance video

S720: Play, based on the
video stream data after the
playback start location of the
destination SP instance
video, the destination SP
instance video after the
playback start location

EP 4 539 481 A1

[FIG. 8A]

[FIG. 8B]

[FIG. 9]

[FIG. 10A]

[FIG. 10B]

[FIG. 10C]

[FIG. 10D]

[FIG. 11A]

| Electronic device 100 | | | | Server 200 | | | |
|---|---|---|---|---|---|---|---|
| Switching instruction receiving module | Playback authentication module | Program information obtaining module | Video playback module | Program data management service module | Playback authentication service module | **Continuous playback calculation module** | Streaming media service module |

S1101: Maintain program metadata

S1102: Play an SP-A instance video (a source SP instance video) in an aggregated video 1

S1104: Switching instruction, where the instruction includes an ID of the aggregated video 1, elapsed play duration of the source SP instance video at switching, identification information of the source SP instance video, and identification information of the destination SP instance video

S1103: Detect an operation of switching, by a user, to play an SP-B instance video (a destination SP instance video) in the aggregated video 1

S1105: Message 1, where the message includes the ID of the aggregated video 1, the elapsed play duration of the source SP instance video at the switching, the identification information of the source SP instance video, and the identification information of the destination SP instance video

S1106: Message 2, where the message includes the ID of the aggregated video 1, the elapsed play duration of the source SP instance video at the switching, the identification information of the source SP instance video, the identification information of the destination SP instance video, and user information 1

TO FIG. 11B      TO FIG. 11B   TO FIG. 11B   TO FIG. 11B      TO FIG. 11B    TO FIG. 11B   TO FIG. 11B      TO FIG. 11B

EP 4 539 481 A1

CONT. FROM FIG. 11A    CONT. FROM FIG. 11A    CONT. FROM FIG. 11A    CONT. FROM FIG. 11A    CONT. FROM FIG. 11A        CONT. FROM FIG. 11A    CONT. FROM FIG. 11A    CONT. FROM FIG. 11A

S1107: Determine, based on the ID of the aggregated video 1, the identification information of the destination SP instance video, the user information 1, and an authentication rule, that the user can play the destination SP instance video, and determine a playback address corresponding to the destination SP instance video

S1108: Message 3, where the message includes the ID of the aggregated video 1, the identification information of the source SP instance video, and the identification information of the destination SP instance video

S1109: Determine an offset information list of the source SP instance video and an offset information list of the destination SP instance video based on the ID of the aggregated video 1, the identification information of the source SP instance video, and the identification information of the destination SP instance video

TO FIG. 11C    TO FIG. 11C    TO FIG. 11C    TO FIG. 11C    TO FIG. 11C        TO FIG. 11C    TO FIG. 11C    TO FIG. 11C

EP 4 539 481 A1

CONT. FROM FIG. 11B  CONT. FROM FIG. 11B  CONT. FROM FIG. 11B  CONT. FROM FIG. 11B  CONT. FROM FIG. 11B  CONT. FROM FIG. 11B  CONT. FROM FIG. 11B  CONT. FROM FIG. 11B

S1110: Message 4, where the message includes the offset information list of the source SP instance video and the offset information list of the destination SP instance video

S1111: Message 5, where the message includes the elapsed play duration of the source SP instance video at the switching, the offset information list of the source SP instance video, and the offset information list of the destination SP instance video

S1112: Determine playback start location information of the destination SP instance video based on the elapsed play duration of the source SP instance video at the switching, the offset information list of the source SP instance video, and the offset information list of the destination SP instance video

S1113: Message 6, where the message includes the playback start location information of the destination SP instance video

S1114: Message 7, where the message includes the playback start location information of the destination SP instance video and the playback address

TO FIG. 11D  TO FIG. 11D  TO FIG. 11D  TO FIG. 11D  TO FIG. 11D  TO FIG. 11D  TO FIG. 11D  TO FIG. 11D

EP 4 539 481 A1

[FIG. 11D]

CONT. FROM FIG. 11C    CONT. FROM FIG. 11C    CONT. FROM FIG. 11C    CONT. FROM FIG. 11C    CONT. FROM FIG. 11C    CONT. FROM FIG. 11C    CONT. FROM FIG. 11C    CONT. FROM FIG. 11C

S1115: Message 8, where the message includes the playback start location information of the destination SP instance video and the playback address

S1116: Message 9, where the message includes the playback start location information of the destination SP instance video and the playback address

S1117: Search for video stream data after a playback start location of the destination SP instance video based on the playback start location information of the destination SP instance video and the playback address

S1118: Message 10, where the message includes the video stream data after the playback start location of the destination SP instance video

S1119: Play, based on the video stream data after the playback start location of the destination SP instance video, the destination SP instance video after the playback start location

[FIG. 12]

[FIG. 13]

[FIG. 14]

**Electronic device 100**

Antenna 1     Antenna 2

| Mobile communication module 2G/3G/4G/5G [150] | Wireless communication module BT/WLAN/GNSS/NFC/IR/FM [160] |

Speaker [170A]

Receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

External memory interface [120]

USB interface [130]

Charging input

Charging management module [140]

Power management module [141]

Battery [142]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

[FIG. 15]

**Server 200**

## INTERNATIONAL SEARCH REPORT

| | International application No. |
|---|---|
| | **PCT/CN2023/101124** |

**A. CLASSIFICATION OF SUBJECT MATTER**

H04N21/845(2011.01)i; H04N21/8352(2011.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, DWPI, ENTXT, ENTXTC, WPABS: 短视频, 长视频, 视频片段, 视频分段, 切换, 长视频, 完整视频, 正片, 视频源, 插入, 裁剪, 编辑, 时间点, 播放时长, 续播, 基础视频, 聚合视频, video, segment, switch, flip, video source, insert, crop, edit, time point, play time, replay, continuation, play

**C. DOCUMENTS CONSIDERED TO BE RELEVANT**

| Category* | Citation of document, with indication, where appropriate, of the relevant passages | Relevant to claim No. |
|---|---|---|
| A | CN 103916718 A (TENCENT TECHNOLOGY (BEIJING) CO., LTD.) 09 July 2014 (2014-07-09)<br>description, paragraphs [0054]-[0120] | 1-15 |
| A | CN 105208448 A (BEIJING QIYI CENTURY SCIENCE & TECHNOLOGY CO., LTD.) 30 December 2015 (2015-12-30)<br>entire document | 1-15 |
| A | CN 111866433 A (TENCENT TECHNOLOGY (SHENZHEN) CO., LTD.) 30 October 2020 (2020-10-30)<br>entire document | 1-15 |
| A | CN 112153470 A (TENCENT TECHNOLOGY (SHENZHEN) CO., LTD.) 29 December 2020 (2020-12-29)<br>entire document | 1-15 |
| A | CN 114095785 A (SHANGHAI BILIBILI TECHNOLOGY CO., LTD.) 25 February 2022 (2022-02-25)<br>entire document | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 September 2023** | **12 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/101124** |

**C.    DOCUMENTS CONSIDERED TO BE RELEVANT**

| Category* | Citation of document, with indication, where appropriate, of the relevant passages | Relevant to claim No. |
|---|---|---|
| A | US 10834465 B1 (NETFLIX, INC.) 10 November 2020 (2020-11-10)<br>entire document | 1-15 |

Form PCT/ISA/210 (second sheet) (July 2022)

## INTERNATIONAL SEARCH REPORT
### Information on patent family members

| | International application No. |
| --- | --- |
| | **PCT/CN2023/101124** |

| Patent document cited in search report | | | Publication date (day/month/year) | Patent family member(s) | | | Publication date (day/month/year) |
| --- | --- | --- | --- | --- | --- | --- | --- |
| CN | 103916718 | A | 09 July 2014 | None | | | |
| CN | 105208448 | A | 30 December 2015 | None | | | |
| CN | 111866433 | A | 30 October 2020 | WO | 2022022193 | A1 | 03 February 2022 |
| | | | | US | 2023007188 | A1 | 05 January 2023 |
| | | | | HK | 40030844 | A0 | 05 January 2023 |
| CN | 112153470 | A | 29 December 2020 | WO | 2022052653 | A1 | 17 March 2022 |
| | | | | US | 2023045363 | A1 | 09 February 2023 |
| | | | | HK | 40036247 | A1 | 15 July 2022 |
| CN | 114095785 | A | 25 February 2022 | None | | | |
| US | 10834465 | B1 | 10 November 2020 | US | 2021021900 | A1 | 21 January 2021 |
| | | | | US | 11477533 | B2 | 18 October 2022 |
| | | | | WO | 2020263655 | A1 | 30 December 2020 |
| | | | | CA | 3138218 | A1 | 30 December 2020 |
| | | | | US | 2023059805 | A1 | 23 February 2023 |
| | | | | US | 11700404 | B2 | 11 July 2023 |
| | | | | EP | 3991439 | A1 | 04 May 2022 |
| | | | | BR | 112021026664 | A2 | 15 February 2022 |
| | | | | AU | 2020304345 | A1 | 23 December 2021 |
| | | | | AU | 2020304345 | B2 | 09 February 2023 |
| | | | | MX | 2021014808 | A | 18 January 2022 |
| | | | | AU | 2023202133 | A1 | 04 May 2023 |
| | | | | AU | 2023202133 | B2 | 18 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210733723